(19)
Europäisches
Patentamt

European
Patent Office

Office européen
des brevets

(11) **EP 4 415 456 A1**

(12) **EUROPEAN PATENT APPLICATION**
published in accordance with Art. 153(4) EPC

(43) Date of publication:
**14.08.2024   Bulletin 2024/33**

(21) Application number: **22891775.3**

(22) Date of filing: **24.10.2022**

(51) International Patent Classification (IPC):
***H04W 72/04*** *(2023.01)*

(52) Cooperative Patent Classification (CPC):
**H04L 5/00; H04W 72/04; H04W 72/23**

(86) International application number:
**PCT/CN2022/126982**

(87) International publication number:
**WO 2023/082978 (19.05.2023 Gazette 2023/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **12.11.2021   CN 202111343099**

(71) Applicant: **Huawei Technologies Co., Ltd.
Shenzhen, Guangdong 518129 (CN)**

(72) Inventors:
• **GONG, Bo
Shenzhen, Guangdong 518129 (CN)**

• **LIU, Chenchen
Shenzhen, Guangdong 518129 (CN)**
• **GAN, Ming
Shenzhen, Guangdong 518129 (CN)**

(74) Representative: **Maiwald GmbH
Engineering
Elisenhof
Elisenstrasse 3
80335 München (DE)**

(54) **COMMUNICATION METHOD AND COMMUNICATION APPARATUS**

(57)   This application provides a communication method and apparatus, to not only improve transmission efficiency in a distributed resource unit (distributed resource unit, DRU) transmission mode, but also improve system performance due to a relatively low peak-to-average ratio (peak-to-average power ratio, PAPR) of a long training field (long training field, LTF) included in a TB PPDU transmitted based on a DRU. In this method, a STA receives a trigger frame, where the trigger frame includes DRU indication information, and the DRU indication information indicates a DRU used by the STA to send a TB PPDU. The STA sends the TB PPDU on the DRU, where the TB PPDU includes a long training field (long training field, LTF). This application is applied to a wireless local area network system supporting next-generation Wi-Fi protocols of IEEE 802. 1 1ax, for example, 802.11 family protocols such as 802.11be or EHT.

FIG. 8

EP 4 415 456 A1

## Description

This application claims priority to Chinese Patent Application No. 202111343099.1, filed with the China National Intellectual Property Administration on November 12, 2021 and entitled "COMMUNICATION METHOD AND COMMUNICATION APPARATUS", which is incorporated herein by reference in its entirety.

## TECHNICAL FIELD

This application relates to the field of wireless communication technologies, and in particular, to a communication method and a communication apparatus.

## BACKGROUND

Recently, the Federal Communications Commission of the United States has issued a regulation on the 6 GHz spectrum, which defines a low power indoor (low power indoor, LPI) communication mode and strictly limits a maximum power and a maximum frequency spectral density for transmission. For a station (Station, STA), a maximum power for transmission is limited to 24 dBm and a maximum power spectral density is limited to -1 dBm/MHz. In other words, a transmit power of a device is limited by both the maximum power and the maximum power spectral density. That is, a transmit power cannot exceed the maximum power value, and a power spectral density for transmission cannot exceed the maximum power spectral density. Compared with the maximum power, the maximum power spectral density is more strictly limited, and an allowed maximum power for transmission is usually more limited by the power spectral density. For the station, when a bandwidth is 320 MHz, a transmit power of the station reaches a limit of a specified maximum power. When the bandwidth is less than 320 MHz, due to a limitation of the maximum power spectral density, the station can perform transmission only at a lower power (which means a power lower than the specified maximum power herein).

In addition, Europe has also released a regulation on the 6 GHz spectrum recently. For an LPI communication mode, a maximum power for transmission is limited to 23 dBm, and a maximum power spectrum density is limited to 10 dBm/MHz. When the bandwidth does not exceed 20 MHz, a transmit power of an access point (access point, AP)/the STA is mainly limited by the power spectral density. When the bandwidth is greater than 20 MHz, the transmit power of the AP/STA is mainly limited by the maximum power.

Therefore, how to increase the transmit power of the STA to obtain a higher gain without increasing the power spectral density has become a problem to be resolved urgently.

## SUMMARY

This application provides a communication method and apparatus, to not only improve transmission efficiency in a distributed resource unit (distributed resource unit, DRU) transmission mode, but also improve system performance due to a relatively low peak-to-average ratio (peak to average power ratio, PAPR) of a long training field (long training field, LTF) included in a trigger-based physical layer protocol data unit (trigger-based physical layer protocol data unit, TB PPDU) transmitted based on a DRU.

A first aspect of this application provides a communication method, applied to WLAN communication. The method is performed by a station (station, STA), or the method is performed by some components (for example, a processor, a chip, or a chip system) in a STA. In the first aspect and possible implementations of the first aspect, an example in which the method is performed by the STA is used for description. In this method, the STA receives a trigger frame, where the trigger frame includes DRU indication information, and the DRU indication information indicates a DRU used by the STA to send a TB PPDU. The STA sends the TB PPDU on the DRU, where the TB PPDU includes an LTF.

Based on the foregoing technical solution, after the STA receives the trigger frame including the DRU indication information, the STA sends the TB PPDU on the DRU indicated by the DRU indication information, where the TB PPDU includes the LTF. Therefore, in comparison with a contiguous (resource unit, RU) transmission mode, because tones included in the DRU are discrete, transmission efficiency can be improved at a same power spectral density. In addition, because the LTF included in the TB PPDU has a relatively low PAPR, system performance can be improved.

It should be noted that, that the DRU indication information indicates a DRU used by the STA to send a TB PPDU may be expressed as that the DRU indication information indicates a DRU allocated to the STA, or may be expressed as that the DRU indication information indicates a DRU allocated by an AP to the STA, where the DRU is used to carry the TB PPDU.

A second aspect of this application provides a communication method, applied to WLAN communication. The method is performed by an access point (access point, AP), or the method is performed by some components (for example, a processor, a chip, or a chip system) in an AP. In the second aspect and possible implementations of the second aspect, an example in which the method is performed by the AP is used for description. In this method, the AP sends a trigger frame, where the trigger frame includes DRU indication information, and the DRU indication information indicates a DRU used by a STA to send a TB PPDU. The AP receives, on the DRU, the trigger-based physical layer protocol data unit TB PPDU, where the TB PPDU includes a long training field LTF.

Based on the foregoing technical solution, after the AP sends the trigger frame including the DRU indication information, the AP receives the TB PPDU on the DRU indicated by the DRU indication information, where the TB PPDU includes the LTF. Therefore, in comparison with a contiguous (resource unit, RU) transmission mode, because tones included in the DRU are discrete, transmission efficiency can be improved in comparison with a contiguous RU at a same power spectral density. In addition, because the LTF included in the TB PPDU has a relatively low PAPR, system performance can be improved.

A third aspect of this application provides a communication apparatus, applied to WLAN communication. The apparatus is a STA, or the apparatus is some components (for example, a processor, a chip, or a chip system) in a STA. A receiving unit in the apparatus is configured to receive a trigger frame, where the trigger frame includes DRU indication information, and the DRU indication information indicates a DRU used by a STA to send a TB PPDU. A sending unit in the apparatus is configured to send the trigger-based physical layer protocol data unit TB PPDU on the DRU, where the TB PPDU includes a long training field LTF.

Based on the foregoing technical solution, after the receiving unit receives the trigger frame including the DRU indication information, the sending unit sends the TB PPDU on the DRU indicated by the DRU indication information, where the TB PPDU includes the LTF. Therefore, in comparison with a contiguous (resource unit, RU) transmission mode, because tones included in the DRU are discrete, transmission efficiency can be improved in comparison with a contiguous RU at a same power spectral density. In addition, because the LTF included in the TB PPDU has a relatively low PAPR, system performance can be improved.

A fourth aspect of this application provides a communication apparatus, applied to WLAN communication. The apparatus is an AP, or the apparatus is some components (for example, a processor, a chip, or a chip system) in an AP. A sending unit in the apparatus is configured to send a trigger frame, where the trigger frame includes DRU indication information, and the DRU indication information indicates a DRU used by a STA to send a TB PPDU. A receiving unit in the apparatus is configured to receive, on the DRU, the trigger-based physical layer protocol data unit TB PPDU, where the TB PPDU includes a long training field LTF.

Based on the foregoing technical solution, after the sending unit sends the trigger frame including the DRU indication information, the receiving unit receives the TB PPDU on the DRU indicated by the DRU indication information, where the TB PPDU includes the LTF. Therefore, in comparison with a contiguous (resource unit, RU) transmission mode, because tones included in the DRU are discrete, transmission efficiency can be improved in comparison with a contiguous RU at a same power spectral density. In addition, because the LTF included in the TB PPDU has a relatively low PAPR, system performance can be improved.

In a possible implementation of any one of the first aspect to the fourth aspect, a bandwidth occupied by the DRU is 20 megahertz (MHz), 40 MHz, 80 MHz, 160 MHz, or 320 MHz. The LTF included in the TB PPDU is determined based on the bandwidth occupied by the DRU.

Optionally, the bandwidth occupied by the DRU is indicated by using an uplink bandwidth subfield and/or an uplink bandwidth extension subfield included in the trigger frame.

Optionally, the STA and the AP may pre-configure (or pre-define in a standard, or pre-store) LTFs corresponding to different bandwidths.

Based on the foregoing technical solution, in different channel bandwidths, tone plans for DRUs may be different. That is, a quantity of tones included in each DRU and positions of the tones may be different. The PAPR of the LTF is associated with an index of a tone carrying the LTF and a sequence value of the LTF. In a process in which the STA generates and sends the TB PPDU, the STA may determine, based on the bandwidth occupied by the DRU, an LTF with a relatively low PAPR in the bandwidth, so that the STA can obtain a benefit of a relatively low PAPR in different bandwidth communication scenarios, to improve system performance.

In a possible implementation of any one of the first aspect to the fourth aspect,
the bandwidth occupied by the DRU includes k distributed resource units, each of the k distributed resource units includes x data tones, an absolute value of an index difference between every two data tones in y data tones in the x data tones is greater than or equal to 2, k, x, and y are all positive integers, and $y \leq x$.

Indexes of y data tones in different distributed resource units in the k distributed resource units form an overall translation relationship.

Optionally, if the y data tones in the different distributed resource units in the k distributed resource units carry a same LTF sequence, peak-to-average power ratios PAPRs of the y data tones in the different distributed resource units in the k distributed resource units are the same.

Optionally, each of the k distributed resource units further includes z pilot tones, and a quantity of tones included in each of the k distributed resource units is a sum of x and z.

Based on the foregoing technical solution, in the k distributed resource units included in the bandwidth occupied by the DRU, each distributed resource unit includes x data tones. The absolute value of the index difference between every two data tones in the y data tones in the x data tones is greater than or equal to 2, so that there is a large spacing between tones included in each of the k distributed resource units, and sufficient discretization of the tones included in the DRU can be implemented. Therefore, at a same power spectral density, in comparison with a contiguous RU, a maximum power amplification multiple can be implemented, thereby improving transmission efficiency.

In addition, the indexes of the y data tones in the different distributed resource units in the k distributed resource units form an overall translation relationship. Therefore, if the y data tones in the different distributed resource units in the k distributed resource units carry a same LTF sequence, peak-to-average power ratios PAPRs of the y data tones in the different distributed resource units in the k distributed resource units are the same. Therefore, in a process of constructing an LTF corresponding to the bandwidth occupied by the DRU, a sequence set including a plurality of LTF basic sequences having a relatively low PAPR feature may be determined for y data tones included in a distributed resource unit in the k distributed resource units, and an LTF corresponding to y data tones included in another distributed resource unit in the k distributed resource units is determined based on the sequence set, to simplify a construction process of the LTF.

In a possible implementation of any one of the first aspect to the fourth aspect, the bandwidth occupied by the DRU is 20 MHz; and

when a value of k is 9, a value of x is 24, and a value of y is 24; or
when a value of k is 4, a value of x is 48, and a value of y is 48; or
when a value of k is 2, a value of x is 102, and a value of y is 96.

Based on the foregoing technical solution, when the bandwidth occupied by the DRU is 20 MHz, the bandwidth may include 256 tones with a tone spacing of 78.125 kilohertz (kHz). If a 26-tone DRU is used as a minimum DRU, the 256 tones may be divided into nine (that is, a value of k is 9) 26-tone DRUs (that is, each DRU includes 26 tones). In addition, each 26-tone DRU includes 24 data tones, and a spacing between any two tones among the 24 tones is greater than or equal to 2, to improve a discrete degree of the tones.

Optionally, each 26-tone DRU further includes two pilot tones.

Similarly, when the bandwidth occupied by the DRU is 20 MHz, 52-tone DRUs (that is, when a value of k is 4, a value of x is 48, and a value of y is 48) and 106-tone DRUs (that is, when a value of k is 2, a value of x is 102, and a value of y is 96) may be further included.

Optionally, each 52-tone DRU further includes four pilot tones, and each 106-tone DRU further includes four pilot tones.

In a possible implementation of any one of the first aspect to the fourth aspect, the bandwidth occupied by the DRU is 20 MHz. An LTF corresponding to the 20 MHz bandwidth includes 256 elements, and values of LTFs carried by tones from a lowest frequency to a highest frequency are:

$\{0 \quad 0 \quad 0 \quad 0 \quad 0 \quad 0 \quad -1 \quad -1 \quad -1 \quad -1 \quad -1 \quad -1 \quad -1 \quad -1 \quad -1 \quad -1 \quad -1 \quad -1 \quad -1$

$-1 \quad -1 \quad -1 \quad -1 \quad -1 \quad -1 \quad -1 \quad -1 \quad 1 \quad 1 \quad 1 \quad 1 \quad 1$

$1 \quad 1 \quad 1 \quad 1 \quad 1 \quad 1 \quad 1 \quad 1 \quad -1 \quad -1 \quad -1 \quad -1 \quad -1 \quad 1 \quad 1 \quad 1 \quad 1 \quad 1 \quad 1 \quad 1$

$1 \quad 1 \quad 1 \quad 1 \quad 1 \quad 1 \quad 1 \quad 1 \quad 1 \quad 1 \quad 1 \quad -1$

$-1 \quad -1 \quad -1 \quad 1 \quad 1 \quad 1 \quad 1 \quad -1 \quad -1 \quad -1 \quad -1 \quad -1 \quad 1 \quad 1 \quad 1 \quad 1 \quad -1 \quad 1 \quad 1$

$1 \quad 1 \quad -1 \quad -1 \quad -1 \quad -1 \quad 1 \quad 1 \quad 1 \quad 1 \quad 1 \quad 1$

$1 \quad 1 \quad -1 \quad 1 \quad 1 \quad 1 \quad 1 \quad -1 \quad -1 \quad -1 \quad -1 \quad 1 \quad 1 \quad 1 \quad 1 \quad 1 \quad -1 \quad -1 \quad -1 \quad -1$

$1 \quad -1 \quad -1 \quad -1 \quad -1 \quad -1 \quad -1 \quad -1 \quad -1 \quad 0 \quad 0 \quad 0$

$0 \quad 0 \quad 0 \quad 0 \quad 1 \quad 1 \quad -1 \quad -1 \quad -1 \quad -1 \quad 1 \quad 1 \quad 1 \quad -1 \quad -1 \quad 1 \quad 1 \quad -1 \quad -1 \quad 1$

$1 \quad 1 \quad 1 \quad 1 \quad -1 \quad -1 \quad 1 \quad 1 \quad -1 \quad -1 \quad -1 \quad 1$

$1 \quad -1 \quad -1 \quad -1 \quad -1 \quad 1 \quad 1 \quad 1 \quad 1 \quad 1 \quad -1 \quad -1 \quad 1 \quad 1 \quad -1 \quad -1 \quad -1 \quad 1 \quad 1 \quad -1$

$-1 \quad 1 \quad 1 \quad -1 \quad -1 \quad -1 \quad -1 \quad -1 \quad 1 \quad 1 \quad -1 \quad -1$

$1 \quad 1 \quad -1 \quad 1 \quad 1 \quad -1 \quad -1 \quad -1 \quad -1 \quad 1 \quad 1 \quad -1 \quad -1 \quad -1 \quad 1 \quad 1 \quad 1 \quad 1 \quad -1 \quad -1$

$1 \quad -1 \quad -1 \quad 1 \quad 1 \quad -1 \quad -1 \quad 1 \quad 1 \quad -1 \quad -1 \quad -1$

$1 \quad 1 \quad 1 \quad 1 \quad -1 \quad -1 \quad 1 \quad -1 \quad -1 \quad 1 \quad 1 \quad 1 \quad 1 \quad -1 \quad -1 \quad 1 \quad 1 \quad 1 \quad -1 \quad -1$

$1 \quad 1 \quad -1 \quad -1 \quad -1 \quad -1 \quad 1 \quad 0 \quad 0 \quad 0 \quad 0 \quad 0\}.$

In a possible implementation of any one of the first aspect to the fourth aspect, the bandwidth occupied by the DRU is 40 MHz; and

when a value of k is 18, a value of x is 24, and a value of y is 24; or
when a value of k is 8, a value of x is 48, and a value of y is 48; or
when a value of k is 4, a value of x is 102, and a value of y is 96.

Based on the foregoing technical solution, when the bandwidth occupied by the DRU is 40 MHz, the bandwidth may include 512 tones with a tone spacing of 78.125 kHz. If a 26-tone DRU is used as a minimum DRU, the 256 tones may be divided into 18 (that is, a value of k is 18) 26-tone DRUs (that is, each DRU includes 26 tones). In addition, each 26-tone DRU includes 24 data tones, and a spacing between any two tones among the 24 tones is greater than or equal to 2, to improve a discrete degree of the tones.

Optionally, each 26-tone DRU further includes two pilot tones.

Similarly, when the bandwidth occupied by the DRU is 40 MHz, 52-tone DRUs (that is, when a value of k is 8, a value of x is 48, and a value of y is 48) and 106-tone DRUs (that is, when a value of k is 4, a value of x is 102, and a value of y is 96) may be further included.

Optionally, each 52-tone DRU further includes four pilot tones, and each 106-tone DRU further includes four pilot tones.

In a possible implementation of any one of the first aspect to the fourth aspect, the bandwidth occupied by the DRU is 40 MHz. An LTF corresponding to the 40 MHz bandwidth includes 512 elements, and values of LTFs carried by tones from a lowest frequency to a highest frequency are:

{0   0   0   0   0   0   0   0   0   0   0   0   0   -1  -1  -1  -1  -1  -1
-1  -1  -1  -1  -1  -1  -1  -1  -1  -1  -1  -1  1   1   1   1   1   1   1   1   1
1   1   1   1   1   1   1   1   1   1   1   1   1   1   1   1   1   1   1
1   1   1

1   1   1   1   1   1   1   1   1   1   1   1   1   1   1   1   1   1   1
1   1   1   1   1   1   1   1   1   1   1   1   1   1   1   1   1   1   -1  -1
-1  -1  -1  -1  -1  -1  -1  -1  -1  -1  -1  -1  -1  -1  -1  -1  -1  -1  -1  -1  0
0   0

-1  -1  -1  1   -1  -1  -1  -1  -1  -1  -1  -1  -1  -1  -1  -1  -1  1   1
1   1   -1  1   1   1   1   1   1   1   1   1   1   1   1   -1  -1  -1  -1  1
-1  -1  -1  -1  1   1   1   1   1   1   1   1   1   -1  -1  -1  -1  1   -1  -1  -1
-1  1   1

1   1   1   1   1   1   1   -1  -1  -1  -1  1   -1  -1  -1  -1  1   1   1   1
1   1   1   1   1   -1  -1  -1  -1  1   -1  -1  -1  -1  -1  -1  -1  -1  -1  -1  -1
-1  -1  1   1   1   1   -1  1   1   1   1   -1  -1  -1  -1  -1  -1  1   1   1   1
0   0

0   0   0   -1  -1  -1  1   -1  1   1   1   0   0   -1  -1  -1  -1  -1  1   1
1   1   -1  -1  -1  -1  1   1   1   1   1   1   1   1   1   1   -1  -1  -1  -1  1
1   1   1   -1  -1  -1  -1  -1  1   1   1   1   1   -1  -1  -1  -1  1   1   1   1
-1  -1

-1  -1  -1  1   1   1   1   1   -1  -1  -1  -1  1   1   1   1   -1  -1  -1
-1  -1  1   1   1   1   1   -1  -1  -1  -1  1   1   1   1   -1  -1  -1  -1  -1  -1
-1  -1  -1  -1  1   1   1   1   -1  -1  -1  -1  1   1   1   1   1   -1  -1  -1
1   -1  -1

-1  -1  -1  -1  -1  -1  0   0   1   1   1   1   1   -1  -1  -1  -1  -1  -1
-1  -1  -1  1   1   1   1   1   -1  -1  -1  -1  -1  1   1   1   1   1   1   1   1
-1  -1  -1  -1  -1  -1  -1  -1  -1  1   1   1   1   1   1   1   1   1   -1  -1  -1
-1  -1  -1

-1  -1  -1  1   1   1   1   1   1   1   1   1   -1  -1  -1  -1  -1  -1  -1
-1  -1  1   1   1   1   1   1   1   1   1   -1  -1  -1  -1  1   1   1   1   1   -1
-1  -1  -1  -1  -1  -1  -1  -1  1   1   1   1   -1  0   0   0   0   0   0   0   0
0   0   0}.

In a possible implementation of any one of the first aspect to the fourth aspect, the bandwidth occupied by the DRU is 80 MHz; and

when a value of k is 36, a value of x is 24, and a value of y is 24; or
when a value of k is 16, a value of x is 48, and a value of y is 48; or
when a value of k is 8, a value of x is 102, and a value of y is 96; or
when a value of k is 4, a value of x is 234, and a value of y is 192.

Based on the foregoing technical solution, when the bandwidth occupied by the DRU is 80 MHz, the bandwidth may include 1,024 tones with a tone spacing of 78.125 kHz. If a 26-tone DRU is used as a minimum DRU, the 256 tones may be divided into 36 (that is, a value of k is 36) 26-tone DRUs (that is, each DRU includes 26 tones). In addition, each 26-tone DRU includes 24 data tones, and a spacing between any two tones among the 24 tones is greater than or equal to 2, to improve a discrete degree of the tones.
Optionally, each 26-tone DRU further includes two pilot tones.
Similarly, when the bandwidth occupied by the DRU is 80 MHz, 52-tone DRUs (that is, when a value of k is 16, a value of x is 48, and a value of y is 48), 106-tone DRUs (that is, when a value of k is 8, a value of x is 102, and a value of y is 96), and 242-tone DRUs (that is, when a value of k is 4, a value of x is 234, and a value of y is 192) may be further included.
Optionally, each 52-tone DRU further includes four pilot tones, each 106-tone DRU further includes four pilot tones, and each 242-tone DRU further includes eight pilot tones.
In a possible implementation of any one of the first aspect to the fourth aspect, the bandwidth occupied by the DRU is 80 MHz. An LTF corresponding to the 80 MHz bandwidth includes 1,024 elements, and values of LTFs carried by tones from a lowest frequency to a highest frequency are:

$$
\begin{aligned}
\{0 \quad & 0 \quad 0 \quad 0 \quad 0 \quad 0 \quad 0 \quad 0 \quad 0 \quad 0 \quad 0 \quad 0 \quad 0 \quad -1 \quad -1 \quad -1 \quad -1 \quad 1 \quad -1 \\
-1 \quad -1 \quad & -1 \quad -1 \quad -1 \quad -1 \quad -1 \quad -1 \quad -1 \quad -1 \quad -1 \quad 1 \quad 1 \quad 1 \quad 1 \quad -1 \quad 1 \quad 1 \quad 1 \quad 1 \\
1 \quad 1 \quad & 1 \quad 1 \quad 1 \quad 1 \quad 1 \quad 1 \quad 1 \quad 1 \quad 1 \quad 1 \quad 1 \quad -1 \quad 1 \quad 1 \quad 1 \quad 1 \quad 1 \quad 1 \\
1 \quad 1 \quad & 1 \quad 1 \quad 1 \quad 1 \quad 1 \quad 1 \quad 1 \quad 1 \quad -1 \quad 1 \quad 1 \quad 1 \quad 1 \quad 1 \quad 1 \quad 1 \quad 1 \quad 1 \\
1 \quad 1 \quad & 1 \quad 1 \quad 1 \quad 1 \quad 1 \quad -1 \quad 1 \quad 1 \quad 1 \quad 1 \quad 1 \quad 1 \quad 1 \quad 1 \quad 1 \quad 1 \quad 1 \quad 1 \\
-1 \quad -1 \quad & -1 \quad -1 \quad 1 \quad -1 \quad -1 \quad -1 \quad -1 \quad -1 \quad -1 \quad -1 \quad -1 \quad -1 \quad -1 \quad -1 \quad -1 \quad -1 \quad 0 \quad 0 \quad 0 \\
0 \quad 0 \quad & 0 \quad 0 \\
-1 \quad & -1 \quad -1 \quad -1 \quad 1 \quad -1 \quad 1 \quad -1 \quad -1 \quad -1 \quad -1 \quad -1 \quad 1 \quad 1 \quad -1 \quad 1 \quad -1 \quad -1 \quad -1 \\
-1 \quad -1 \quad 1 \quad & 1 \quad -1 \quad 1 \quad -1 \quad 1 \quad 1 \quad 1 \quad 1 \quad -1 \quad -1 \quad 1 \quad -1 \quad 1 \quad 1 \quad 1 \quad 1 \quad 1 \quad -1
\end{aligned}
$$

−1 1 −1 1 1 1 1 1 −1 −1 1 −1 1 1 1 1 1 −1 −1 1 −1
1 1 1 1 1 −1 −1 1 −1 1 1 1 1 1 −1 −1 1 −1 1 1 1
1 1 −1 −1 1 −1 1 1 1 1 1 −1 −1 1 −1 1 −1 −1 −1 −1 1
1 −1 1 −1 −1 −1 −1 −1 1 1 −1 1 −1 −1 −1 1 −1 −1 −1 −1 1
−1 1 0 0

0 0 0 −1 −1 −1 −1 1 −1 −1 1 0 0 −1 −1 −1 −1 −1 −1 −1
−1 −1 −1 1 −1 1 1 −1 1 −1 1 1 1 1 1 1 1 1 1 1 1
−1 1 −1 −1 1 −1 1 −1 1 1 1 1 1 1 1 1 1 1 1 −1 1 −1
−1 1 −1 1 −1 1 1 1 1 1 1 1 1 1 1 1 −1 1 −1 −1 1 −1
1 −1 1 1 1 1 1 1 1 1 1 1 −1 1 −1 −1 1 −1 1 −1 −1
−1 −1 −1 −1 −1 −1 −1 −1 −1 1 −1 1 1 −1 1 −1 1 −1 −1 −1 −1
−1 −1 −1

−1 −1 −1 0 0 0 0 0 1 1 1 1 1 −1 1 −1 1 1 −1
1 −1 1 −1 −1 −1 −1 −1 −1 −1 −1 −1 1 −1 1 −1 −1 1 −1 1 −1
1 1 1 1 −1 −1 −1 −1 −1 1 −1 1 −1 −1 1 −1 1 −1 1 1 1
1 −1 −1 −1 −1 −1 1 −1 1 −1 −1 1 −1 1 −1 1 1 1 1 −1 −1
−1 −1 −1 1 −1 1 −1 −1 1 −1 1 −1 1 1 1 1 1 1 1 1 1
−1 1 −1 1 1 −1 1 −1 1 −1 −1 −1 −1 −1 −1 −1 −1 −1 −1 −1
−1 −1 0 0

0 0 0 −1 −1 −1 −1 −1 −1 −1 −1 −1 −1 1 −1 1 1 −1 1 1
1 −1 −1 −1 −1 1 1 −1 1 −1 −1 −1 1 −1 −1 1 −1 −1 −1 1 1
1 1 −1 −1 1 −1 1 1 −1 1 −1 −1 1 −1 −1 −1 1 1 1 1 −1
−1 1 −1 1 1 −1 1 −1 −1 1 −1 −1 −1 1 1 1 1 −1 −1 1 −1
1 1 −1 1 −1 −1 1 −1 −1 −1 1 1 1 1 1 −1 −1 1 −1 1 1 1
−1 1 1 −1 1 1 1 −1 −1 −1 −1 1 1 −1 1 −1 −1 −1 1 −1 −1
0 0 0

1 −1 −1 −1 −1 1 −1 1 1 1 1 −1 1 −1 −1 −1 1 −1 1 −1
−1 1 1 −1 1 1 −1 −1 −1 1 −1 1 1 1 −1 1 −1 1 1 −1 −1
1 −1 −1 −1 −1 −1 1 −1 1 1 1 1 −1 1 −1 1 1 −1 −1 1 −1 −1
−1 −1 −1 1 −1 1 1 1 −1 1 −1 1 1 −1 −1 1 −1 −1 −1 −1 −1
1 −1 1 1 1 −1 1 −1 1 1 −1 −1 1 −1 −1 1 1 1 −1 1 −1
−1 −1 1 −1 1 −1 −1 1 1 −1 1 1 −1 1 −1 1 −1 1 −1 1 1
−1 −1 −1

−1 −1 0 −1 −1 −1 −1 −1 −1 −1 −1 0 0 −1 −1 −1 1 1 −1
1 −1 −1 1 1 1 −1 1 1 1 −1 1 1 1 1 1 −1 −1 1 −1 1 1

$$-1\ -1\ -1\ 1\ \ -1\ -1\ 1\ \ -1\ -1\ 1\ \ 1\ \ 1\ \ -1\ -1\ 1\ \ -1\ 1\ \ 1\ \ -1\ -1\ -1$$

$$1\ \ -1\ -1\ 1\ \ -1\ -1\ 1\ \ 1\ \ 1\ \ -1\ -1\ 1\ \ -1\ 1\ \ 1\ \ -1\ -1\ -1\ 1\ \ -1\ -1$$

$$1\ \ -1\ -1\ 1\ \ 1\ \ 1\ \ -1\ -1\ 1\ \ -1\ 1\ \ 1\ \ -1\ -1\ -1\ 1\ \ -1\ -1\ 1\ \ -1\ -1$$

$$-1\ -1\ -1\ 1\ \ 1\ \ -1\ 1\ \ -1\ -1\ 1\ \ 1\ \ 1\ \ -1\ 1\ \ 1\ \ -1\ 1\ \ 1\ \ -1\ -1\ -1$$

$$-1\ -1\ -1\ -1$$

$$-1\ \ -1\ -1\ -1\ -1\ -1\ -1\ 0\ \ 1\ \ -1\ 1\ \ 1\ \ 1\ \ -1\ 1\ \ -1\ -1\ -1\ 1$$

$$-1\ -1\ -1\ 1\ \ -1\ 1\ \ 1\ \ -1\ 1\ \ -1\ -1\ -1\ 1\ \ -1\ 1\ \ 1\ \ 1\ \ -1\ 1\ \ 1\ \ 1$$

$$-1\ 1\ \ -1\ -1\ -1\ 1\ \ -1\ -1\ -1\ 1\ \ -1\ 1\ \ 1\ \ 1\ \ -1\ 1\ \ 1\ \ 1\ \ -1\ 1\ \ -1$$

$$-1\ -1\ 1\ \ -1\ -1\ -1\ 1\ \ -1\ 1\ \ 1\ \ 1\ \ -1\ 1\ \ 1\ \ 1\ \ -1\ 1\ \ -1\ -1\ -1\ 1$$

$$-1\ -1\ -1\ 1\ \ -1\ 1\ \ 1\ \ 1\ \ -1\ 1\ \ 1\ \ 1\ \ -1\ 1\ \ -1\ -1\ 1\ \ -1\ 1\ \ 1\ \ 1$$

$$-1\ 1\ \ -1\ -1\ -1\ 1\ \ -1\ -1\ -1\ 1\ \ -1\ 1\ \ 1\ \ 0\ \ 0\ \ 0\ \ 0\ \ 0\ \ 0\ \ 0\ \ 0$$

$$0\ \ 0\ \ 0\ \ 0\}.$$

In a possible implementation of any one of the first aspect to the fourth aspect, the bandwidth occupied by the DRU is 160 MHz; and

when a value of k is 72, a value of x is 24, and a value of y is 24; or
when a value of k is 32, a value of x is 48, and a value of y is 48; or
when a value of k is 16, a value of x is 102, and a value of y is 96; or
when a value of k is 8, a value of x is 234, and a value of y is 192; or
when a value of k is 4, a value of x is 468, and a value of y is 384.

Based on the foregoing technical solution, when the bandwidth occupied by the DRU is 160 MHz, the bandwidth may include 2,048 tones with a tone spacing of 78.125 kHz. If a 26-tone DRU is used as a minimum DRU, the 2,048 tones may be divided into 72 (that is, a value of k is 72) 26-tone DRUs (that is, each DRU includes 26 tones). In addition, each 26-tone DRU includes 24 data tones, and a spacing between any two tones among the 24 tones is greater than or equal to 2, to improve a discrete degree of the tones.

Optionally, each 26-tone DRU further includes two pilot tones.

Similarly, when the bandwidth occupied by the DRU is 160 MHz, 52-tone DRUs (that is, when a value of k is 32, a value of x is 48, and a value of y is 48), 106-tone DRUs (that is, when a value of k is 16, a value of x is 102, and a value of y is 96), 242-tone DRUs (that is, when a value of k is 8, a value of x is 234, and a value of y is 192), and 484-tone DRUs (that is, when a value of k is 4, a value of x is 468, and a value of y is 384) may be further included.

Optionally, each 52-tone DRU further includes four pilot tones, each 106-tone DRU further includes four pilot tones, each 242-tone DRU further includes eight pilot tones, and each 484-tone DRU further includes 16 pilot tones.

In a possible implementation of any one of the first aspect to the fourth aspect, the bandwidth occupied by the DRU is 160 MHz.

For an 80 MHz part with a lower frequency in the 160 MHz, a corresponding LTF includes 1,024 elements, and values of LTFs carried by tones from a lowest frequency to a highest frequency are:

{ 0　0　0　0　0　0　0　0　0　0　0　0　0　−1　−1　−1　−1　1　−1

−1　−1　−1　−1　−1　−1　−1　1　−1　−1　−1　−1　1　1　1　1　−1　1　1　1　1

1　1　1　1　−1　1　1　1　1　1　1　1　1　−1　1　1　1　1　1　1　1

1　−1　1　1　1　1　1　1　1　1　−1　1　1　1　1　1　1　1　1　−1　1

1　1　1　1　1　1　−1　1　1　1　1　1　1　1　1　1　−1　1　1　1　1

−1　−1　−1　−1　1　−1　−1　−1　−1　−1　−1　−1　−1　1　−1　−1　−1　−1　−1　−1　1

1　−1　1　0

　　−1　1　1　1　−1　−1　1　−1　−1　−1　−1　−1　1　−1　−1　−1　−1　−1　−1

−1　−1　−1　−1　−1　−1　−1　1　1　1　1　−1　1　1　1　1　1　1　1　1　1

1　1　1　1　1　1　1　1　−1　1　1　1　1　1　1　1　1　1　1　1

1　1　1　1　1　−1　1　1　1　1　1　1　1　1　1　1　1　1　1　1

1　1　−1　1　1　1　1　1　1　1　1　1　1　1　1　−1　−1　−1　−1　1

−1　−1　−1　−1　−1　−1　−1　−1　−1　−1　−1　−1　1　1　1　1　−1　1　1　−1

−1　1　−1　−1

　　−1　−1　0　−1　−1　−1　−1　−1　−1　−1　−1　−1　−1　1　1　1　−1　1　1

1　1　−1　1　1　1　−1　−1　1　1　1　−1　−1　−1　−1　1　−1　−1　−1　−1　1

−1　−1　−1　1　1　−1　−1　−1　1　−1　−1　−1　1　−1　−1　−1　−1　1　−1　−1　−1

1　1　−1　−1　−1　1　−1　−1　−1　1　−1　−1　−1　−1　1　−1　−1　−1　1　1　−1

−1　−1　1　−1　−1　−1　1　−1　−1　−1　−1　1　−1　−1　−1　1　1　−1　−1　−1　1

1　1　1　−1　1　1　1　1　−1　1　1　1　−1　−1　1　1　1　−1　−1　−1　−1

−1　−1　−1　−1

　　−1　−1　−1　−1　−1　−1　−1　0　−1　−1　−1　1　−1　−1　−1　−1　1　−1　−1

−1　1　−1　−1　−1　−1　1　1　1　1　−1　1　1　1　1　−1　1　1　1　−1　1

1　1　1　−1　1　1　1　−1　1　1　1　1　−1　1　1　1　−1　1　1　1　1

−1　1　1　1　−1　1　1　1　1　−1　1　1　1　−1　1　1　1　1　−1　1　1

1　−1　1　1　1　1　−1　1　1　1　−1　1　1　1　1　−1　−1　−1　−1　1　−1

−1　−1　−1　1　−1　−1　−1　1　−1　−1　−1　−1　1　1　1　−1　−1　−1　1　−1　1

1　1　0　0

　　0　0　0　−1　1　1　−1　1　1　−1　−1　1　1　1　1　1　1　1　1

1　1　1　−1　−1　−1　−1　1　−1　−1　−1　−1　−1　−1　−1　−1　−1　−1　−1　−1　−1

1　1　1　1　−1　1　1　1　1　−1　−1　−1　−1　−1　−1　−1　−1　−1　1　1　1

1 −1 1 1 1 1 −1 −1 −1 −1 −1 −1 −1 −1 −1 1 1 1 1 −1 1

1 1 1 −1 −1 −1 −1 −1 −1 −1 −1 −1 1 1 1 1 −1 1 1 1 1

1 1 1 1 1 1 1 1 1 −1 −1 −1 −1 1 −1 −1 −1 −1 −1 −1 −1

−1 0 0 0

−1 −1 −1 −1 −1 −1 −1 −1 1 1 −1 1 1 1 1 −1 1 −1 −1

1 −1 −1 −1 −1 1 −1 −1 −1 1 −1 −1 −1 −1 1 −1 1 1 −1 1 1

1 1 −1 1 −1 −1 1 −1 −1 −1 −1 1 −1 1 1 −1 1 1 1 1 −1

1 −1 −1 1 −1 −1 −1 −1 1 −1 1 1 −1 1 1 1 1 −1 1 −1 −1

1 −1 −1 −1 −1 1 −1 1 1 −1 1 1 1 1 −1 1 1 1 −1 1 1

1 1 −1 1 −1 −1 1 −1 −1 −1 −1 1 −1 −1 −1 −1 −1 −1 −1 −1 −1

−1 −1 −1 −1

−1 −1 0 −1 −1 −1 −1 −1 −1 1 −1 0 0 1 1 −1 −1 1 1

1 −1 −1 −1 −1 1 1 1 −1 −1 1 1 −1 −1 1 1 −1 −1 −1 1 1

1 1 −1 −1 −1 1 1 −1 −1 −1 −1 1 1 −1 −1 −1 1 1 1 1 −1

−1 −1 1 1 −1 −1 −1 −1 1 1 −1 −1 −1 1 1 1 1 −1 −1 −1 1

1 −1 −1 −1 −1 1 1 −1 −1 −1 1 1 1 1 −1 −1 −1 1 1 −1 −1

1 1 −1 −1 1 1 1 −1 −1 −1 −1 1 1 1 −1 −1 1 1 −1 −1 1

−1 −1 −1 1

1 1 1 0 0 0 0 0 −1 −1 −1 1 −1 −1 −1 −1 1 1 1

1 −1 1 1 1 1 −1 1 1 1 −1 1 1 1 1 −1 −1 −1 −1 1 −1

−1 −1 −1 1 1 1 1 −1 1 1 1 1 −1 −1 −1 −1 1 −1 −1 −1 −1

1 1 1 1 −1 1 1 1 1 −1 −1 −1 −1 1 −1 −1 −1 −1 1 1 1

1 −1 1 1 1 1 −1 −1 −1 −1 1 −1 −1 −1 −1 1 −1 −1 −1 1 −1

−1 −1 −1 1 1 1 1 −1 1 1 1 1 −1 0 0 0 0 0 0 0

0 0 0 0}.

For an 80 MHz part with a higher frequency in the 160 MHz, a corresponding LTF includes 1,024 elements, and values of LTFs carried by tones from a lowest frequency to a highest frequency are:

{ 0  0  0  0  0  0  0  0  0  0  0  0  0  −1  −1  −1  1  1  1

1  1  −1  −1  −1  −1  1  1  1  1  1  −1  1  1  1  −1  −1  −1  −1  −1  1

1  1  1  −1  −1  −1  −1  −1  1  1  1  1  −1  −1  −1  −1  −1  1  1  1  1

−1  −1  −1  −1  −1  1  1  1  1  −1  −1  −1  −1  −1  1  1  1  1  −1  −1  −1

−1  −1  1  1  1  1  −1  −1  −1  −1  −1  1  1  1  1  −1  −1  −1  −1  −1  1

−1  −1  −1  1  1  1  1  1  −1  −1  −1  −1  1  1  1  1  1  −1  1  1  0

0  0  0  0

1 −1 1 1 1 1 1 1 1 1 −1 −1 −1 −1 −1 1 1 1 1
−1 −1 1 −1 −1 1 1 −1 −1 1 1 1 1 1 −1 −1 −1 −1 1 1 −1
1 1 −1 −1 −1 −1 1 1 1 1 1 −1 −1 −1 −1 1 1 −1 1 1 −1
−1 −1 −1 1 1 1 1 1 −1 −1 −1 −1 1 1 −1 1 1 −1 −1 −1 −1
1 1 1 1 1 −1 −1 −1 −1 1 1 −1 1 1 −1 −1 1 1 −1 −1 −1
−1 −1 1 1 1 1 −1 −1 1 −1 −1 1 1 −1 −1 −1 −1 1 −1 −1 −1
−1 −1 0 0

0 0 0 −1 −1 −1 −1 −1 −1 −1 −1 0 0 1 1 −1 1 1 −1
−1 1 −1 1 1 −1 1 −1 −1 −1 1 −1 −1 −1 1 −1 −1 1 1 −1 1
−1 −1 1 −1 1 1 1 −1 1 −1 −1 1 −1 −1 1 1 −1 1 −1 −1 1
−1 1 1 1 −1 1 −1 −1 1 −1 −1 1 1 −1 1 −1 −1 1 −1 1 1
1 −1 1 −1 −1 1 −1 −1 1 1 −1 1 −1 −1 1 −1 1 1 1 1 −1 1
1 1 −1 1 1 −1 −1 1 −1 1 1 −1 1 −1 −1 −1 1 −1 −1 −1 −1
−1 −1 −1 −1

−1 −1 −1 0 0 0 0 0 1 1 1 1 1 −1 −1 −1 −1 1 1
1 1 1 −1 −1 −1 −1 −1 −1 −1 −1 −1 1 1 1 1 −1 −1 −1 −1 −1
1 1 1 1 −1 −1 −1 −1 −1 1 1 1 1 −1 −1 −1 −1 −1 1 1 1
1 −1 −1 −1 −1 −1 1 1 1 1 −1 −1 −1 −1 −1 1 1 1 1 −1 −1
−1 −1 −1 1 1 1 1 −1 −1 −1 −1 1 1 1 1 1 1 1 1 1
−1 −1 −1 −1 1 1 1 1 1 −1 −1 −1 −1 −1 −1 −1 −1 −1 −1 −1 −1
1 −1 0 0

0 0 0 −1 −1 −1 1 −1 1 1 −1 0 0 1 1 1 −1 1 −1
−1 −1 1 −1 −1 −1 1 −1 1 1 1 −1 −1 −1 −1 1 −1 1 1 1 −1
1 1 1 −1 1 −1 −1 −1 1 −1 −1 −1 1 −1 1 1 1 −1 1 1 1
−1 1 −1 −1 −1 1 −1 −1 −1 1 −1 1 1 1 −1 1 1 1 −1 1 −1
−1 −1 1 −1 −1 −1 1 −1 1 1 1 −1 1 1 1 −1 1 −1 −1 −1 1
1 1 1 −1 1 −1 −1 −1 1 −1 −1 −1 1 −1 1 1 1 −1 0 0 0
0 0 0 0

−1 −1 1 −1 1 −1 1 −1 −1 −1 −1 1 1 1 1 1 −1 1 1
1 −1 1 −1 −1 −1 1 1 1 1 −1 −1 −1 −1 −1 1 −1 −1 −1 1 −1
1 1 1 −1 1 1 1 −1 −1 −1 −1 −1 1 −1 −1 −1 1 −1 1 1 1
−1 1 1 1 −1 −1 −1 −1 −1 1 −1 −1 −1 1 −1 1 1 1 −1 1 1
1 −1 −1 −1 −1 −1 1 −1 −1 −1 1 −1 1 1 1 −1 −1 −1 −1 1 1
1 1 1 −1 1 1 1 −1 1 −1 −1 −1 1 −1 −1 −1 −1 −1 −1 −1 −1
−1 −1 0 0

$$0 \quad 0 \quad 0 \quad -1 \quad -1 \quad -1 \quad -1 \quad -1 \quad -1 \quad -1 \quad -1 \quad 0 \quad 0 \quad 1 \quad 1 \quad 1 \quad 1 \quad -1 \quad -1$$
$$-1 \quad -1 \quad -1 \quad -1 \quad -1 \quad -1 \quad -1 \quad 1 \quad 1 \quad 1 \quad 1 \quad 1 \quad -1 \quad -1 \quad -1 \quad -1 \quad 1 \quad 1 \quad 1 \quad 1 \quad 1$$
$$1 \quad 1 \quad 1 \quad 1 \quad -1 \quad -1 \quad -1 \quad -1 \quad -1 \quad -1 \quad -1 \quad -1 \quad -1 \quad 1 \quad 1 \quad 1 \quad 1 \quad 1 \quad 1 \quad 1 \quad 1$$
$$1 \quad -1 \quad -1 \quad -1 \quad -1 \quad -1 \quad -1 \quad -1 \quad -1 \quad -1 \quad 1 \quad 1 \quad 1 \quad 1 \quad 1 \quad 1 \quad 1 \quad 1 \quad 1 \quad -1 \quad -1$$
$$-1 \quad -1 \quad -1 \quad -1 \quad -1 \quad -1 \quad -1 \quad 1 \quad 1 \quad 1 \quad 1 \quad 1 \quad 1 \quad 1 \quad 1 \quad 1 \quad -1 \quad -1 \quad -1 \quad -1 \quad -1$$
$$1 \quad 1 \quad 1 \quad 1 \quad -1 \quad -1 \quad -1 \quad -1 \quad -1 \quad -1 \quad -1 \quad -1 \quad -1 \quad 1 \quad 1 \quad 1 \quad 1 \quad 1 \quad -1 \quad -1 \quad -1$$
$$-1 \quad -1 \quad -1 \quad -1$$
$$-1 \quad -1 \quad -1 \quad 0 \quad 0 \quad 0 \quad 0 \quad 0 \quad 1 \quad 1 \quad 1 \quad 1 \quad 1 \quad -1 \quad -1 \quad -1 \quad -1 \quad -1 \quad -1$$
$$-1 \quad -1 \quad 1 \quad 1 \quad 1 \quad 1 \quad 1 \quad -1 \quad -1 \quad -1 \quad -1 \quad -1 \quad 1 \quad 1 \quad 1 \quad 1 \quad 1 \quad 1 \quad 1 \quad 1 \quad -1$$
$$-1 \quad -1 \quad -1 \quad -1 \quad -1 \quad -1 \quad -1 \quad -1 \quad 1 \quad 1 \quad 1 \quad 1 \quad 1 \quad 1 \quad 1 \quad 1 \quad -1 \quad -1 \quad -1 \quad -1$$
$$-1 \quad -1 \quad -1 \quad -1 \quad -1 \quad -1 \quad 1 \quad 1 \quad 1 \quad 1 \quad 1 \quad 1 \quad 1 \quad -1 \quad -1 \quad -1 \quad -1 \quad -1 \quad -1 \quad -1$$
$$-1 \quad -1 \quad -1 \quad 1 \quad 1 \quad 1 \quad 1 \quad 1 \quad 1 \quad 1 \quad 1 \quad -1 \quad -1 \quad -1 \quad -1 \quad -1 \quad 1 \quad 1 \quad 1 \quad 1 \quad 1$$
$$-1 \quad -1 \quad -1 \quad -1 \quad -1 \quad -1 \quad -1 \quad -1 \quad 1 \quad 1 \quad 1 \quad 1 \quad 1 \quad 0 \quad 0 \quad 0 \quad 0 \quad 0 \quad 0 \quad 0 \quad 0$$
$$0 \quad 0 \quad 0 \quad 0\}.$$

In a possible implementation of any one of the first aspect to the fourth aspect, the bandwidth occupied by the DRU is 320 MHz; and

when a value of k is 144, a value of x is 24, and a value of y is 24; or
when a value of k is 64, a value of x is 48, and a value of y is 48; or
when a value of k is 32, a value of x is 102, and a value of y is 96; or
when a value of k is 16, a value of x is 234, and a value of y is 192; or
when a value of k is 8, a value of x is 468, and a value of y is 384; or
when a value of k is 4, a value of x is 980, and a value of y is 768.

Based on the foregoing technical solution, when the bandwidth occupied by the DRU is 320 MHz, the bandwidth may include 4,096 tones with a tone spacing of 78.125 kHz. If a 26-tone DRU is used as a minimum DRU, the 4,096 tones may be divided into 144 (that is, a value of k is 144) 26-tone DRUs (that is, each DRU includes 26 tones). In addition, each 26-tone DRU includes 24 data tones, and a spacing between any two tones among the 24 tones is greater than or equal to 2, to improve a discrete degree of the tones.

Optionally, each 26-tone DRU further includes two pilot tones.

Similarly, when the bandwidth occupied by the DRU is 320 MHz, 52-tone DRUs (that is, when a value of k is 64, a value of x is 48, and a value of y is 48), 106-tone DRUs (that is, when a value of k is 32, a value of x is 102, and a value of y is 96), 242-tone DRUs (that is, when a value of k is 16, a value of x is 234, and a value of y is 192), 484-tone DRUs (that is, when a value of k is 8, a value of x is 468, and a value of y is 384), and 996-tone DRUs (that is, when a value of k is 8, a value of x is 980, and a value of y is 768) DRUs may be further included.

Optionally, each 52-tone DRU further includes four pilot tones, each 106-tone DRU further includes four pilot tones, each 242-tone DRU further includes eight pilot tones, each 484-tone DRU further includes 16 pilot tones, and each 996-tone DRU further includes 16 pilot tones.

In a possible implementation of any one of the first aspect to the fourth aspect, the bandwidth occupied by the DRU is 320 MHz.

For an 80 MHz part with a lowest frequency in the 320 MHz, a corresponding LTF includes 1,024 elements, and values of LTFs carried by tones from a lowest frequency to a highest frequency are:

{0  0  0  0  0  0  0  0  0  0  0  0  −1  −1  1  −1  1  1  −1

1  −1  1  1  −1  −1  −1  1  −1  1  −1  1  1  −1  1  −1  −1  1  −1  1  −1

−1  1  1  1  −1  1  −1  1  −1  1  −1  1  −1  −1  1  −1  1  −1  −1  1  1

1  −1  1  −1  1  −1  1  −1  1  −1  −1  1  −1  1  −1  −1  1  1  1  −1  1

−1  1  −1  1  −1  1  −1  −1  1  −1  1  −1  −1  1  1  1  −1  1  −1  1  −1

−1  1  −1  1  1  −1  1  −1  1  1  −1  −1  −1  1  −1  1  −1  1  1  −1  −1

−1  −1  1  −1

   −1  1  1  1  1  1  1  −1  −1  −1  −1  1  1  −1  −1  −1  1  1  1

−1  −1  −1  −1  −1  −1  1  1  1  1  −1  −1  1  1  1  −1  −1  −1  1  1  1

1  1  1  −1  1  1  1  −1  −1  1  1  1  −1  −1  −1  1  1  1  1  1  1

−1  1  1  1  −1  −1  1  1  1  −1  −1  −1  1  1  1  1  1  1  −1  1  1

1  −1  −1  1  1  1  −1  −1  −1  1  1  1  1  1  −1  −1  −1  −1  1  1

−1  −1  −1  1  1  1  −1  −1  −1  −1  −1  −1  1  1  1  1  −1  1  1  −1  1

−1  −1  1  −1

   −1  −1  −1  −1  −1  −1  −1  −1  −1  −1  −1  −1  −1  1  1  1  1  −1  1

1  1  1  −1  −1  1  −1  1  1  1  1  1  −1  −1  −1  −1  1  −1  −1  −1  −1

1  1  −1  1  −1  −1  −1  −1  −1  −1  −1  −1  −1  1  −1  −1  −1  −1  1  1  −1

1  −1  −1  −1  −1  −1  −1  −1  −1  −1  1  −1  −1  −1  −1  1  1  −1  1  1  −1  −1

−1  −1  −1  −1  −1  −1  −1  1  −1  −1  −1  −1  1  1  −1  1  −1  −1  −1  −1  −1

1  1  1  1  −1  1  1  1  1  −1  −1  1  −1  1  1  1  1  1  −1  −1  −1

−1  −1  −1  1

   −1  −1  1  1  −1  −1  −1  −1  −1  1  −1  −1  1  −1  1  −1  −1  1  −1

−1  1  1  −1  1  −1  −1  1  −1  1  1  −1  1  −1  1  1  −1  1  1  −1  −1

1  −1  1  1  1  −1  1  1  −1  1  −1  1  1  −1  1  1  −1  −1  1  −1  1

1  1  −1  1  1  −1  1  −1  1  1  −1  1  1  −1  −1  1  −1  1  1  1  −1

1  1  −1  1  −1  1  1  −1  1  1  −1  −1  1  −1  1  1  −1  1  −1  −1  1

−1  1  −1  −1  1  −1  −1  1  1  −1  1  −1  −1  1  −1  1  −1  1  1  −1  1

1 −1 0 0

0 0 0 −1 −1 −1 −1 −1 1 −1 −1 1 −1 1 1 1 1 1 1

1 −1 1 −1 −1 1 1 −1 1 1 −1 −1 −1 −1 −1 −1 −1 −1 −1 1 −1

1 1 −1 −1 1 −1 −1 1 1 −1 −1 −1 −1 −1 −1 −1 1 −1 1 1 −1

−1 1 −1 −1 1 1 −1 −1 −1 −1 −1 −1 −1 1 −1 1 1 −1 −1 1 −1

−1 1 1 −1 −1 −1 −1 −1 −1 −1 1 −1 1 1 −1 −1 1 −1 −1 1 1

1 1 1 1 1 1 1 −1 1 −1 −1 1 1 −1 1 1 −1 −1 −1 −1 −1

−1 −1 −1 −1

−1 −1 −1 −1 −1 −1 −1 −1 1 −1 1 1 −1 1 −1 −1 1 −1 1

1 1 1 1 −1 −1 −1 −1 1 −1 −1 1 −1 1 1 −1 1 −1 −1 −1 −1

−1 1 1 1 −1 1 −1 −1 1 −1 1 1 −1 1 −1 −1 −1 −1 −1 1 1

1 −1 1 −1 −1 1 −1 1 1 −1 1 −1 −1 −1 −1 −1 1 1 1 −1 1

−1 −1 1 −1 1 1 −1 1 −1 −1 −1 −1 −1 1 1 1 1 −1 1 1 −1

1 −1 −1 1 −1 1 1 1 1 1 −1 −1 −1 −1 1 −1 −1 −1 −1 −1 1

1 −1 −1 −1

1 1 −1 −1 1 1 1 −1 −1 1 1 −1 −1 −1 1 −1 1 −1 −1

1 1 1 1 −1 −1 1 −1 −1 1 1 −1 1 −1 1 −1 1 1 −1 −1 −1

−1 1 1 −1 1 1 −1 −1 1 1 −1 1 −1 1 1 −1 −1 −1 −1 1 1

−1 1 1 −1 1 1 1 −1 1 −1 1 1 −1 −1 −1 −1 1 1 −1 1 1

−1 −1 1 1 −1 1 1 −1 1 1 −1 −1 −1 −1 1 1 −1 1 1 −1 −1 1

−1 1 −1 1 −1 −1 1 1 1 1 −1 −1 1 −1 −1 1 1 −1 1 −1 −1

−1 1 −1 −1

−1 −1 −1 −1 −1 −1 −1 −1 1 1 1 −1 −1 1 1 −1 −1 −1 −1

1 −1 −1 1 1 −1 1 −1 −1 −1 1 1 −1 −1 1 1 1 1 −1 1 1

−1 −1 1 −1 −1 −1 −1 1 1 −1 −1 1 1 1 1 −1 1 1 −1 −1 1

−1 −1 −1 −1 1 1 −1 −1 1 1 1 1 −1 1 1 −1 −1 1 −1 −1 −1

−1 1 1 −1 −1 1 1 1 1 −1 1 1 −1 −1 1 −1 1 1 1 −1 −1

1 1 −1 −1 −1 −1 1 −1 −1 1 1 −1 1 −1 0 0 0 0 0 0 0

0 0 0 0}.

For an 80 MHz part with a second lowest frequency in the 320 MHz, a corresponding LTF includes 1,024 elements, and values of LTFs carried by tones from a lowest frequency to a highest frequency are:

$$\{0 \quad 0 \quad 0 \quad 0 \quad 0 \quad 0 \quad 0 \quad 0 \quad 0 \quad 0 \quad 0 \quad 0 \quad -1 \quad -1 \quad -1 \quad -1 \quad -1 \quad 1 \quad -1$$
$$-1 \quad -1 \quad -1 \quad 1 \quad 1 \quad -1 \quad 1 \quad 1 \quad -1 \quad -1 \quad -1 \quad -1 \quad 1 \quad 1 \quad 1 \quad 1 \quad -1 \quad 1 \quad 1 \quad 1 \quad 1$$
$$-1 \quad -1 \quad 1 \quad -1 \quad -1 \quad 1 \quad 1 \quad 1 \quad 1 \quad 1 \quad 1 \quad 1 \quad 1 \quad -1 \quad 1 \quad 1 \quad 1 \quad 1 \quad -1 \quad -1 \quad 1$$

```
−1 −1  1  1  1  1  1  1  1  1 −1  1  1  1  1 −1 −1  1 −1 −1  1
 1  1  1  1  1  1  1 −1  1  1  1  1 −1 −1  1 −1 −1  1  1  1  1
−1 −1 −1 −1  1 −1 −1 −1 −1  1  1 −1  1  1 −1 −1 −1 −1 −1 −1 −1
−1 −1 −1 −1
       −1 −1 −1 −1 −1  1 −1 −1  1 −1  1  1  1  1 −1  1  1 −1  1
 1 −1  1  1 −1  1  1 −1  1 −1 −1 −1 −1  1 −1 −1  1 −1 −1  1 −1
−1  1 −1 −1  1  1 −1 −1 −1 −1  1 −1 −1  1 −1 −1  1 −1 −1  1 −1
−1 −1  1 −1 −1 −1 −1  1 −1 −1  1 −1 −1  1 −1 −1  1 −1 −1 −1  1
−1 −1 −1 −1  1 −1 −1  1 −1 −1  1 −1 −1  1 −1 −1  1 −1  1  1  1
 1 −1  1  1 −1  1  1 −1  1  1 −1  1  1 −1 −1 −1  1  1  1  1  1
 1  1  1  1
        1  1  1 −1 −1  1 −1 −1 −1  1  1 −1 −1  1 −1  1 −1  1  1
−1  1 −1 −1  1  1  1  1  1 −1  1 −1 −1  1 −1  1 −1 −1  1 −1  1
 1 −1 −1 −1 −1 −1  1 −1  1 −1  1 −1  1 −1 −1  1 −1  1  1 −1 −1
−1 −1 −1  1 −1  1 −1  1 −1  1 −1 −1  1 −1  1  1 −1 −1 −1 −1 −1
 1 −1  1 −1  1 −1  1 −1 −1  1 −1  1  1 −1 −1 −1 −1 −1  1 −1  1
 1 −1  1 −1  1  1 −1  1 −1 −1  1  1  1  1  1 −1  1 −1 −1 −1 −1
−1 −1 −1 −1
       −1 −1 −1 −1 −1 −1 −1 −1  1  1  1 −1 −1  1  1  1 −1 −1 −1
 1  1 −1  1  1  1 −1 −1 −1 −1  1  1 −1 −1 −1  1  1  1 −1 −1  1
−1 −1 −1  1 −1 −1 −1  1  1 −1 −1 −1  1  1  1 −1 −1  1 −1 −1 −1
 1 −1 −1 −1 −1 −1  1 −1  1 −1  1 −1  1 −1 −1  1 −1  1  1 −1 −1
−1  1  1 −1 −1 −1  1  1 −1  1 −1  1 −1  1  1 −1 −1 −1 −1 −1 −1
 1 −1  1 −1  1 −1  1 −1 −1  1 −1  1  1 −1 −1 −1 −1 −1  1 −1  1
 1 −1  1 −1  1  1 −1  1 −1 −1  1  1  1  1  1 −1  1 −1 −1 −1 −1
−1 −1 −1 −1
       −1 −1 −1 −1 −1 −1 −1 −1  1  1  1 −1 −1  1  1  1 −1 −1 −1
 1  1 −1  1  1  1 −1 −1 −1 −1  1  1 −1 −1 −1  1  1  1 −1 −1  1
−1 −1 −1  1 −1 −1 −1  1  1 −1 −1 −1  1  1  1 −1 −1  1 −1 −1 −1
 1 −1 −1 −1  1  1 −1 −1 −1  1  1  1 −1 −1  1 −1 −1 −1  1 −1 −1
−1  1  1 −1 −1 −1  1  1  1 −1 −1  1 −1 −1 −1  1  1  1  1 −1 −1
 1  1  1 −1 −1 −1  1  1 −1  1  1  1 −1 −1  1 −1 −1  1 −1 −1 −1
 1 −1  0  0
        0  0  0 −1  1  1  1 −1 −1 −1  1 −1 −1 −1  1 −1  1 −1 −1
 1  1  1  1 −1 −1  1  1 −1  1  1 −1  1 −1  1 −1  1  1 −1 −1 −1
−1  1  1 −1 −1  1 −1 −1  1  1 −1  1 −1  1  1 −1 −1 −1 −1  1  1
−1 −1  1 −1 −1  1  1 −1  1 −1  1  1 −1 −1 −1 −1  1  1 −1 −1  1
−1 −1  1  1 −1  1 −1  1  1 −1 −1 −1 −1  1  1 −1 −1  1 −1 −1  1
−1  1 −1  1 −1 −1  1  1  1  1 −1 −1  1  1 −1  1  1 −1 −1 −1  1
−1  1 −1  1
       −1 −1  1 −1 −1 −1  1 −1  1  1  1  1 −1 −1  1  1 −1 −1 −1 −1
 1 −1  1  1  1 −1  1 −1 −1 −1  1  1 −1 −1  1  1  1  1 −1  1 −1
−1 −1  1 −1 −1 −1 −1  1  1 −1 −1  1  1  1  1 −1  1 −1 −1 −1  1
```

–1 –1 –1 –1 1 1 –1 –1 1 1 1 1 –1 1 –1 –1 –1 1 –1 –1 –1

–1 1 1 –1 –1 1 1 1 1 –1 1 –1 –1 –1 1 –1 1 1 1 –1 –1

1 1 –1 –1 –1 –1 1 –1 1 1 1 –1 1 –1 –1 –1 –1 –1 –1 –1 –1

–1 –1 –1 –1

   –1 –1 –1 1 –1 –1 –1 1 1 –1 –1 –1 –1 1 1 1 1 1 1

1 –1 1 –1 –1 1 1 1 1 1 –1 –1 –1 –1 –1 –1 –1 –1 –1 1 –1

1 1 –1 –1 –1 –1 –1 1 1 –1 –1 –1 –1 –1 –1 –1 1 –1 1 1 –1

–1 –1 –1 –1 1 1 –1 –1 –1 –1 –1 –1 –1 1 –1 1 1 –1 –1 –1 –1

–1 1 1 –1 –1 –1 –1 –1 –1 –1 1 –1 1 1 –1 –1 –1 –1 –1 1 1

1 1 1 1 1 1 1 –1 1 –1 –1 1 1 1 1 1 –1 –1 –1 1 –1

–1 –1 1 1

   –1 –1 1 –1 1 1 1 –1 1 –1 1 1 –1 1 –1 –1 1 –1 1

1 1 –1 1 –1 –1 –1 –1 1 –1 –1 1 –1 1 1 –1 1 –1 –1 –1 1

–1 1 1 1 –1 1 –1 –1 1 –1 1 1 –1 1 –1 –1 –1 1 –1 1 1

1 –1 1 –1 –1 1 –1 1 1 –1 1 –1 –1 –1 1 –1 1 1 1 –1 1

–1 –1 1 –1 1 1 –1 1 –1 –1 –1 1 –1 1 1 1 1 1 –1 1 1 –1

1 –1 –1 1 –1 1 1 1 –1 1 –1 –1 –1 –1 0 0 0 0 0 0 0

0 0 0 0}.

For an 80 MHz part with a second highest frequency in the 320 MHz, a corresponding LTF includes 1,024 elements, and values of LTFs carried by tones from a lowest frequency to a highest frequency are:

$$
\{0 \quad 0 \quad 0 \quad 0 \quad 0 \quad 0 \quad 0 \quad 0 \quad 0 \quad 0 \quad 0 \quad 0 \quad -1 \quad 1 \quad -1 \quad 1 \quad 1 \quad 1 \quad 1
$$
$$
-1 \quad 1 \quad 1 \quad 1 \quad -1 \quad -1 \quad -1 \quad -1 \quad -1 \quad 1 \quad -1 \quad 1 \quad -1 \quad 1 \quad -1 \quad -1 \quad -1 \quad -1 \quad 1 \quad -1 \quad -1
$$
$$
-1 \quad 1 \quad 1 \quad 1 \quad 1 \quad 1 \quad -1 \quad 1 \quad -1 \quad -1 \quad 1 \quad -1 \quad -1 \quad -1 \quad -1 \quad 1 \quad -1 \quad -1 \quad -1 \quad 1 \quad 1
$$
$$
1 \quad 1 \quad 1 \quad -1 \quad 1 \quad -1 \quad -1 \quad 1 \quad -1 \quad -1 \quad -1 \quad -1 \quad 1 \quad -1 \quad -1 \quad -1 \quad 1 \quad 1 \quad 1 \quad 1 \quad 1
$$
$$
-1 \quad 1 \quad -1 \quad -1 \quad 1 \quad -1 \quad -1 \quad -1 \quad -1 \quad 1 \quad -1 \quad -1 \quad -1 \quad 1 \quad 1 \quad 1 \quad 1 \quad 1 \quad -1 \quad 1 \quad -1
$$
$$
1 \quad -1 \quad 1 \quad 1 \quad 1 \quad 1 \quad -1 \quad 1 \quad 1 \quad 1 \quad -1 \quad -1 \quad -1 \quad -1 \quad -1 \quad 1 \quad -1 \quad 1 \quad -1 \quad -1 \quad -1
$$
$$
-1 \quad -1 \quad -1 \quad -1
$$

$$
-1 \quad -1 \quad -1 \quad -1 \quad -1 \quad -1 \quad -1 \quad -1 \quad 1 \quad 1 \quad 1 \quad 1 \quad -1 \quad 1 \quad 1 \quad 1 \quad 1 \quad 1 \quad 1
$$
$$
-1 \quad -1 \quad 1 \quad -1 \quad -1 \quad -1 \quad 1 \quad -1 \quad -1 \quad -1 \quad -1 \quad 1 \quad -1 \quad -1 \quad -1 \quad -1 \quad -1 \quad -1 \quad 1 \quad 1 \quad -1
$$
$$
1 \quad 1 \quad 1 \quad -1 \quad -1 \quad -1 \quad -1 \quad -1 \quad 1 \quad -1 \quad -1 \quad -1 \quad -1 \quad -1 \quad -1 \quad 1 \quad 1 \quad -1 \quad 1 \quad 1 \quad 1
$$
$$
-1 \quad -1 \quad -1 \quad -1 \quad -1 \quad 1 \quad -1 \quad -1 \quad -1 \quad -1 \quad -1 \quad -1 \quad 1 \quad 1 \quad -1 \quad 1 \quad 1 \quad 1 \quad -1 \quad -1 \quad -1
$$
$$
-1 \quad -1 \quad 1 \quad -1 \quad -1 \quad -1 \quad -1 \quad -1 \quad 1 \quad 1 \quad 1 \quad -1 \quad 1 \quad 1 \quad 1 \quad -1 \quad 1 \quad 1 \quad 1 \quad 1 \quad -1
$$
$$
1 \quad 1 \quad 1 \quad 1 \quad 1 \quad 1 \quad -1 \quad -1 \quad 1 \quad -1 \quad -1 \quad -1 \quad 1 \quad -1 \quad -1 \quad -1 \quad -1 \quad -1 \quad -1 \quad 1 \quad -1
$$
$$
-1 \quad -1 \quad 1 \quad 1
$$

```
     1  −1  1   1  −1 −1  1   1  −1  1   1  −1  1   1   1   1  −1 −1  1
 1   1  −1  1   1  −1  1   1  −1 −1 −1 −1 −1 −1 −1  1   1  −1 −1 −1  1
−1  −1  1  −1  −1  1   1   1   1  −1 −1 −1  1   1  −1 −1 −1  1  −1 −1  1
−1  −1  1   1   1   1   1  −1 −1 −1  1   1  −1 −1 −1  1  −1 −1  1  −1 −1  1
 1   1   1  −1  −1 −1  1   1  −1 −1 −1  1  −1 −1  1  −1 −1  1   1   1   1
 1   1   1  −1  −1  1   1   1  −1  1   1  −1  1   1  −1 −1 −1 −1  1  −1  1
 1  −1  −1  −1

    −1   1  −1  −1 −1 −1 −1 −1 −1  1  −1  1  −1 −1  1  −1  1   1  −1  1
 1  −1   1   1  −1  1   1   1  −1  1  −1  1   1  −1  1  −1  1  −1 −1  1  −1
−1   1  −1  −1   1  −1  1  −1  1   1  −1  1  −1  1  −1 −1  1  −1 −1  1  −1
−1   1  −1   1  −1  1   1  −1  1  −1  1  −1 −1  1  −1 −1  1  −1 −1  1  −1
 1  −1   1   1  −1  1  −1  1  −1 −1  1  −1 −1  1  −1 −1 −1  1  −1  1  −1
−1   1  −1   1  −1  1   1  −1  1   1  −1  1   1  −1 −1 −1 −1 −1 −1 −1 −1
−1  −1   0   0

     0   0   0  −1 −1 −1  1  −1 −1 −1  1   1   1  −1 −1 −1  1  −1 −1
−1   1   1  −1  −1  1   1   1   1   1  −1 −1  1   1   1  −1  1   1   1  −1 −1
 1   1  −1  −1  −1 −1 −1  1   1   1   1   1  −1  1   1   1  −1 −1  1   1  −1
−1  −1  −1  −1   1   1   1   1   1  −1  1   1   1  −1 −1  1   1  −1 −1 −1 −1
−1   1   1   1   1   1  −1  1   1   1  −1 −1  1   1  −1 −1 −1 −1 −1  1   1
−1  −1  −1   1  −1  −1 −1  1   1   1  −1 −1  1   1   1   1   1  −1 −1 −1 −1
 1  −1  −1   1

     1  −1   1   1  −1  1  −1 −1 −1  1  −1  1   1  −1  1   1   1  −1  1
 1   1  −1   1  −1  −1 −1  1  −1  1  −1 −1  1  −1 −1 −1  1  −1 −1 −1  1
−1   1   1   1   1  −1  1  −1 −1  1  −1 −1 −1  1  −1 −1 −1  1  −1  1   1
 1   1  −1   1  −1  −1  1  −1 −1 −1  1  −1 −1 −1  1  −1  1   1   1   1  −1
 1  −1  −1   1  −1  −1 −1  1  −1 −1 −1  1  −1  1   1   1   1  −1  1  −1  1  −1
−1   1   1   1  −1   1   1   1  −1  1  −1 −1 −1 −1 −1 −1  1  −1 −1 −1 −1
−1  −1  −1  −1

    −1  −1  −1  −1 −1 −1 −1 −1 −1 −1 −1 −1 −1 −1  1  −1 −1 −1 −1
 1   1  −1  −1   1   1  −1 −1  1  −1 −1  1   1  −1  1   1   1   1   1  −1 −1  1
 1  −1  −1   1   1  −1  1   1  −1  1  −1  1   1   1   1  −1 −1  1   1  −1 −1
 1   1  −1   1   1  −1  1  −1  1   1   1   1  −1 −1  1   1  −1 −1  1   1  −1
 1   1  −1   1  −1   1   1   1   1  −1 −1  1   1  −1 −1  1   1  −1  1   1  −1
−1   1  −1  −1  −1  −1  1   1  −1 −1  1   1  −1 −1  1  −1 −1  1  −1  1  −1
 1  −1  −1   1
```

$$1 \quad 1 \quad 1 \quad -1 \quad 1 \quad -1 \quad -1 \quad 1 \quad 1 \quad 1 \quad 1 \quad 1 \quad -1 \quad 1 \quad 1 \quad -1 \quad 1 \quad 1 \quad 1$$

$$-1 \quad 1 \quad -1 \quad -1 \quad -1 \quad 1 \quad -1 \quad -1 \quad -1 \quad -1 \quad -1 \quad 1 \quad -1 \quad -1 \quad 1 \quad -1 \quad -1 \quad -1 \quad 1 \quad -1 \quad 1$$

$$1 \quad 1 \quad -1 \quad 1 \quad -1 \quad -1 \quad -1 \quad -1 \quad 1 \quad -1 \quad -1 \quad 1 \quad -1 \quad -1 \quad -1 \quad 1 \quad -1 \quad 1 \quad 1 \quad 1 \quad -1$$

$$1 \quad -1 \quad -1 \quad -1 \quad -1 \quad 1 \quad -1 \quad -1 \quad 1 \quad -1 \quad -1 \quad -1 \quad 1 \quad -1 \quad 1 \quad 1 \quad 1 \quad -1 \quad 1 \quad -1 \quad -1$$

$$-1 \quad -1 \quad 1 \quad -1 \quad -1 \quad 1 \quad -1 \quad -1 \quad -1 \quad 1 \quad -1 \quad 1 \quad 1 \quad 1 \quad -1 \quad 1 \quad 1 \quad 1 \quad 1 \quad 1 \quad -1$$

$$1 \quad 1 \quad -1 \quad 1 \quad 1 \quad 1 \quad -1 \quad 1 \quad -1 \quad -1 \quad -1 \quad 1 \quad -1 \quad 1 \quad 0 \quad 0 \quad 0 \quad 0 \quad 0 \quad 0 \quad 0$$

$$0 \quad 0 \quad 0 \quad 0\}.$$

For an 80 MHz part with a highest frequency in the 320 MHz, a corresponding LTF includes 1,024 elements, and values of LTFs carried by tones from a lowest frequency to a highest frequency are:

```
{0   0   0   0   0   0   0   0   0   0   0   0  -1   1   1   1  -1   1   1
 1   1  -1   1   1  -1   1  -1  -1  -1  -1  -1  -1  -1  -1   1  -1  -1  -1  -1   1
-1  -1   1  -1   1   1   1   1   1  -1  -1  -1   1  -1  -1  -1  -1   1  -1  -1   1
-1   1   1   1   1   1  -1  -1  -1   1  -1  -1  -1  -1   1  -1  -1   1  -1   1   1
 1   1   1  -1  -1  -1   1  -1  -1  -1  -1   1  -1  -1   1  -1   1   1   1   1   1
 1   1   1  -1   1   1   1   1  -1   1   1  -1   1  -1  -1  -1  -1  -1  -1   1   1
 1  -1  -1   1

 1   1  -1  -1   1  -1  -1  -1  -1   1  -1   1  -1  -1   1  -1   1  -1   1
 1  -1  -1   1  -1   1   1   1  -1   1  -1   1   1  -1   1  -1   1  -1  -1   1   1
-1   1  -1  -1   1  -1   1  -1   1   1  -1   1  -1   1  -1  -1   1   1  -1   1  -1
-1   1  -1   1  -1   1   1  -1   1  -1   1  -1  -1   1   1  -1   1  -1  -1   1  -1
 1  -1   1   1  -1   1  -1   1  -1  -1   1   1  -1   1  -1  -1  -1   1  -1   1  -1
-1   1  -1   1  -1   1   1  -1  -1   1  -1   1   1   1  -1  -1  -1   1   1  -1  -1
-1  -1  -1  -1

-1  -1  -1  -1  -1  -1   1  -1  -1  -1   1   1  -1   1  -1   1   1   1   1
-1   1   1   1  -1  -1  -1   1  -1   1  -1   1  -1   1  -1  -1  -1  -1   1  -1  -1
-1   1   1   1  -1   1  -1   1  -1  -1   1  -1  -1  -1  -1   1  -1  -1  -1   1   1
 1  -1   1  -1   1  -1  -1   1  -1  -1  -1  -1   1  -1  -1  -1   1   1   1  -1   1
-1   1  -1  -1   1  -1  -1  -1  -1   1  -1  -1  -1   1   1   1  -1   1  -1   1  -1
 1  -1   1   1   1   1  -1   1   1   1  -1  -1  -1   1  -1   1  -1   1   1   1  -1
-1  -1   1   1

-1   1   1   1   1  -1   1   1   1   1   1   1   1   1   1   1   1   1   1
-1  -1  -1  -1  -1  -1   1  -1  -1  -1  -1  -1  -1  -1  -1  -1  -1  -1   1   1   1
 1   1   1  -1  -1  -1  -1  -1  -1  -1  -1  -1  -1  -1  -1   1   1   1   1   1   1
-1  -1  -1  -1  -1  -1  -1  -1  -1  -1  -1  -1   1   1   1   1   1   1  -1  -1  -1
```

−1 −1 −1 −1 −1 −1 −1 −1 −1 1 1 1 1 1 1 −1 1 1 1 1 1

1 1 1 1 1 1 −1 −1 −1 −1 −1 −1 1 −1 −1 1 1 1 −1 −1 −1

−1 −1 0 0

     0 0 0 −1 −1 −1 −1 −1 −1 −1 −1 −1 −1 1 −1 1 1 1 1

−1 −1 1 1 −1 −1 1 −1 −1 1 1 −1 −1 1 −1 −1 −1 −1 1 1 −1

−1 1 1 −1 1 1 −1 −1 1 −1 1 −1 −1 −1 −1 1 1 −1 −1 1 1

−1 1 1 −1 −1 1 −1 1 −1 −1 −1 −1 1 1 −1 −1 1 1 −1 1 1

−1 −1 1 −1 1 −1 −1 −1 −1 1 −1 −1 1 1 −1 1 1 −1 −1 1

1 −1 1 1 1 1 −1 −1 1 1 −1 −1 1 −1 −1 1 1 −1 −1 −1 −1

−1 −1 1 −1

     1 −1 −1 1 −1 1 1 1 −1 −1 −1 −1 1 −1 −1 1 −1 −1 −1

1 −1 −1 1 1 −1 1 1 1 1 1 1 −1 1 1 −1 1 1 1 −1 1 1

−1 −1 1 −1 1 1 1 1 −1 1 1 −1 1 1 1 −1 1 1 −1 −1 1

−1 1 1 1 1 −1 1 1 −1 1 1 1 −1 1 1 −1 −1 1 −1 1 1

1 1 −1 1 1 −1 1 1 1 −1 1 1 −1 −1 1 −1 −1 −1 −1 −1 1

−1 −1 1 −1 −1 −1 1 −1 −1 1 1 −1 1 1 1 1 1 1 −1 −1 1 1

1 1 1 1

     1 1 1 −1 1 −1 −1 1 −1 −1 −1 1 −1 1 1 1 −1 1 1

1 −1 −1 1 1 −1 −1 1 −1 −1 1 1 −1 −1 −1 1 −1 −1 −1 1 1

−1 −1 1 1 −1 1 1 −1 −1 −1 −1 −1 1 −1 −1 −1 1 1 −1 −1 1

1 −1 1 1 −1 −1 −1 −1 −1 1 −1 −1 −1 1 1 −1 −1 1 1 −1 1

1 −1 −1 −1 −1 −1 1 −1 −1 −1 1 1 −1 −1 1 1 −1 1 1 −1 −1

1 1 1 −1 1 1 1 −1 −1 1 1 −1 −1 1 −1 −1 1 1 1 −1 −1

−1 −1 −1 −1

     −1 −1 −1 −1 −1 −1 −1 −1 1 −1 1 −1 −1 1 −1 −1 −1 1 −1

−1 −1 −1 −1 1 1 1 −1 1 −1 1 1 −1 1 1 1 −1 1 1 1 1

1 −1 −1 −1 −1 1 −1 1 1 −1 1 1 1 −1 1 1 1 1 1 −1 −1

−1 −1 1 −1 1 1 −1 1 1 1 −1 1 1 1 1 1 −1 −1 −1 −1 1

−1 1 1 −1 1 1 1 −1 1 1 1 1 1 −1 −1 −1 1 −1 1 −1 −1

1 −1 −1 −1 1 −1 −1 −1 −1 −1 1 1 1 −1 0 0 0 0 0 0 0

0 0 0 0}.

In a possible implementation of any one of the first aspect to the fourth aspect, the DRU indication information includes at least one of an RU allocation subfield, an uplink bandwidth subfield, an uplink bandwidth extension subfield, or a primary/secondary 160 subfield.

In a possible implementation of any one of the first aspect to the fourth aspect, in the LTF included in the TB PPDU, a value in the x data tones of each of the k distributed resource units is 1 or-1.

The LTF included in the TB PPDU includes a part whose values are 0 and a part whose values are not 0 (that is, 1 or -1).

Optionally, if a tone is included outside any distributed resource unit or is not allocated to any distributed resource unit, a value of an LTF corresponding to the tone is 0. For example, in the foregoing LTF sequence, a tone occupied by an LTF with a value of 0 is a tone that does not belong to any distributed resource unit.

Optionally, if a tone is included in any distributed resource unit or is allocated to any distributed resource unit, a value of an LTF corresponding to the tone is not 0 (that is, 1 or -1). For example, in the foregoing LTF sequence, a tone occupied by an LTF whose value is not 0 (that is, 1 or -1) is a tone that belongs to one or more distributed resource units.

A fifth aspect of embodiments of this application provides a communication apparatus, including at least one processor. The at least one processor is coupled to a memory, and the memory is configured to store a program or instructions. The at least one processor is configured to execute the program or the instructions, so that the apparatus implements the method according to any one of the first aspect or the possible implementations of the first aspect, or the apparatus implements the method according to any one of the second aspect or the possible implementations of the second aspect.

A sixth aspect of embodiments of this application provides a computer-readable storage medium storing one or more computer-executable instructions. When the computer-executable instructions are executed by a processor, the processor performs the method according to any one of the first aspect or the possible implementations of the first aspect, or the processor performs the method according to any one of the second aspect or the possible implementations of the second aspect.

A seventh aspect of embodiments of this application provides a computer program product (or referred to as a computer program) storing one or more computers. When the computer program product is executed by a processor, the processor performs the method according to any one of the first aspect or the possible implementations of the first aspect, or the processor performs the method according to any one of the second aspect or the possible implementations of the second aspect.

An eighth aspect of embodiments of this application provides a chip system. The chip system includes at least one processor, configured to support a communication apparatus in implementing functions in any one of the first aspect or the possible implementations of the first aspect, or configured to support a communication apparatus in implementing functions in any one of the second aspect or the possible implementations of the second aspect.

In a possible design, the chip system further includes a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

A ninth aspect of embodiments of this application provides a communication system. The communication system includes the communication apparatus in the third aspect and the communication apparatus in the fourth aspect, and/or the communication system includes the communication apparatus in the fifth aspect.

For technical effects brought by any design in the fifth aspect to the ninth aspect, refer to the technical effects brought by different implementations in the first aspect to the fourth aspect. Details are not described herein again.

**BRIEF DESCRIPTION OF DRAWINGS**

FIG. 1 is a schematic diagram of an architecture of a wireless communication system according to an embodiment of this application;
FIG. 2a is a schematic diagram of a structure of an access point according to an embodiment of this application;
FIG. 2b is a schematic diagram of a structure of a station according to an embodiment of this application;
FIG. 3 is a schematic diagram of a tone plan and contiguous RU distribution for 20 MHz;
FIG. 4 is a schematic diagram of a tone plan and contiguous RU distribution for 40 MHz;
FIG. 5 is a schematic diagram of a tone plan and contiguous RU distribution for 80 MHz;
FIG. 6a is a schematic flowchart of uplink multi-user transmission;
FIG. 6b is another schematic flowchart of uplink multi-user transmission;
FIG. 6c is another schematic flowchart of uplink multi-user transmission;
FIG. 7A and FIG. 7B are a schematic diagram of a frame format of an 802.11be trigger frame;
FIG. 8 is a schematic flowchart of a communication method according to an embodiment of this application;
FIG. 9 is a schematic diagram of a structure of a communication apparatus according to an embodiment of this application; and

FIG. 10 is a schematic diagram of a structure of a communication apparatus according to an embodiment of this application.

**DESCRIPTION OF EMBODIMENTS**

The following clearly and completely describes the technical solutions in embodiments of this application with reference to the accompanying drawings in embodiments of this application.

In descriptions of this application, unless otherwise specified, "/" means "or". For example, A/B may indicate A or B. The term "and/or" in this specification describes only an association relationship between associated objects and indicates that there may be three relationships. For example, A and/or B may indicate the following three cases: Only A exists, both A and B exist, and only B exists. In addition, "at least one" means one or more, and "a plurality of" means two or more. "At least one of the following" or similar expressions refer to any combination of these items, including any combination of single items or a plurality of items. For example, at least one of a, b, or c may represent: a, b, c, a and b, a and c, b and c, or a, b, and c. a, b, and c each may be singular or plural.

In descriptions of this application, the terms such as "first" and "second" do not limit a quantity and an execution sequence, and the terms such as "first" and "second" do not indicate a definite difference.

In this application, the terms such as "example" or "for example" are used to represent giving an example, an illustration, or descriptions. Any embodiment or design described by "example", "such as" or "for example" in this application should not be construed as being more preferred or having more advantages than another embodiment or design. To be precise, the use of the terms such as "example", "such as", or "for example" are intended to present a related concept in a specific manner.

It should be understood that, in this application, "when" and "if" mean that an apparatus performs corresponding processing in an objective situation, and are not intended to limit time. The terms do not mean that the apparatus is required to have a determining action during implementation, and do not mean any other limitation.

In this application, an element represented in a singular form is intended to represent "one or more", but does not represent "one and only one", unless otherwise specified.

In this application, unless otherwise specified, for same or similar parts of embodiments or implementations, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

For ease of understanding the method provided in embodiments of this application, the following describes a system architecture of the method provided in embodiments of this application. It may be understood that the system architecture described in embodiments of this application is intended to describe the technical solutions in embodiments of this application more clearly, and does not constitute any limitation on the technical solutions provided in embodiments of this application.

The technical solutions provided in this application may be applied to various communication systems, for example, a system using an 802.11 standard. For example, the 802.11 standard includes but is not limited to the 802.11be standard or a next-generation 802.11 standard. Scenarios to which the technical solutions of this application are applicable include: communication between an AP and one or more STAs, communication between APs, or communication between STAs. In embodiments of this application, the term "communication" may also be described as "data transmission", "information transmission", or "transmission".

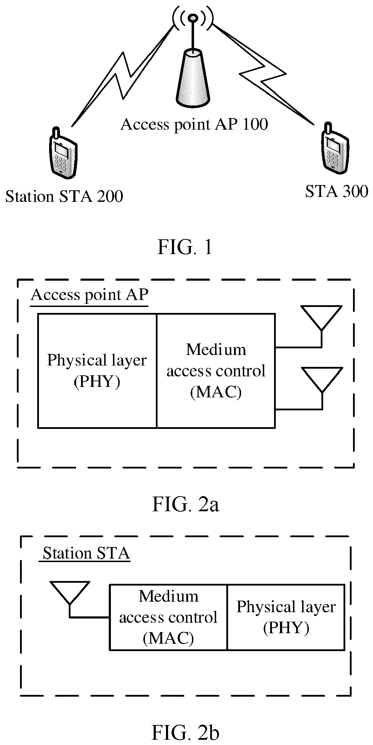

FIG. 1 is a schematic diagram of an architecture of a wireless communication system according to an embodiment of this application. As shown in FIG. 1, the wireless communication system may include one or more APs (for example, an AP 100 shown in FIG. 1) and one or more STAs (for example, a STA 200 and a STA 300 shown in FIG. 1). The AP and the STA support a WLAN communication protocol. The communication protocol may include 802.11be (or referred to as Wi-Fi 7, an extremely high throughput (extremely high throughput, EHT) protocol), and may further include protocols such as 802.11ax and 802.11ac. Certainly, with the continuous evolution and development of communication technologies, the communication protocol may further include a next-generation protocol of 802.11be, and the like. A WLAN is used as an example. An apparatus for implementing the method in this application may be an AP or a STA in the WLAN, or a chip or a processing system installed in an AP or a STA.

Optionally, the access point (for example, the AP 100 in FIG. 1) in this application is an apparatus having a wireless communication function, and supports communication based on a wireless local area network (wireless local area network, WLAN) protocol. The access point has a function of communicating with another device (for example, a station or another access point) in a WLAN network. Certainly, the access point may further have a function of communicating with another device. In a WLAN system, the access point may be referred to as an access point station (access point station, AP STA). The apparatus having a wireless communication function may be an entire device, or may be a chip or a processing system installed in an entire device, or the like. A device on which the chip or the processing system is installed may implement the method and the function in embodiments of this application under control of the chip or the processing system. The AP in embodiments of this application is an apparatus that provides a service for the STA, and may support 802.11 family protocols. For example, the AP may be a communication entity such as a communication server, a router, a switch, or a bridge. The AP may include a macro base station, a micro base station, a relay station, and the like in various forms. Certainly, the AP may alternatively be a chip and a processing system in these devices in various forms, to implement the method and the function in embodiments of this application.

Optionally, the station (for example, the STA 200 or the STA 300 in FIG. 1) in this application is an apparatus having a wireless communication function, and supports communication by using a WLAN protocol. The station has a capability of communicating with another station or an access point in the WLAN network. In the WLAN system, the station may be referred to as a non-access point station (non-access point station, non-AP STA). For example, the STA is any user communication device that allows a user to communicate with the AP and further communicate with the WLAN. The apparatus having a wireless communication function may be an entire device, or may be a chip or a processing system installed in an entire device, or the like. A device on which the chip or the processing system is installed may implement the method and the function in embodiments of this application under control of the chip or the processing system. For example, the STA may be user equipment that can be connected to the Internet, for example, a tablet computer, a desktop computer, a laptop computer, a notebook computer, an ultra-mobile personal computer (Ultra-mobile personal computer, UMPC), a handheld computer, a netbook, a personal digital assistant (personal digital assistant, PDA), or a mobile phone. Alternatively, the STA may be an internet of things node in the internet of things, an in-vehicle communication apparatus in the internet of vehicles, an entertainment device, a game device or system, a global positioning system device, or the like. Alternatively, the STA may be a chip and a processing system in the foregoing terminals.

The WLAN system can provide high-speed and low-latency transmission. With the continuous evolution of WLAN application scenarios, the WLAN system is to be applied to more scenarios or industries, for example, an internet of things industry, an internet of vehicles industry, a banking industry, an enterprise office, a stadium and an exhibition hall, a concert hall, a hotel room, a dormitory, a ward, a classroom, a supermarket, a square, a street, a production workshop, and a warehouse. Certainly, a device (for example, an access point or a station) that supports WLAN communication may be a sensor node (for example, a smart water meter, a smart electricity meter, or a smart air detection node) in a smart city, a smart device (for example, a smart camera, a projector, a display, a television, a stereo, a refrigerator, or a washing machine) in a smart home, a node in the internet of things, an entertainment terminal (for example, a wearable device such as an augmented reality (augmented reality, AR) device or a virtual reality (virtual reality, VR) device), a smart device (for example, a printer, a projector, a speaker, or a stereo) in a smart office, an internet of vehicles device in the internet of vehicles, an infrastructure (for example, a vending machine, a self-service navigation console in a supermarket, a self-service cashier, or a self-service ordering machine) in a daily life scenario, a device in a large-scale stadium and music venue, and the like. Specific forms of the STA and the AP are not limited in embodiments of this application, and are merely examples for description herein.

It should be understood that the 802.11 standard focuses on a physical layer (physical layer, PHY) and a medium access control layer (medium access control, MAC). For example, FIG. 2a is a schematic diagram of a structure of an access point according to an embodiment of this application. The AP may be a multi-antenna/multi-radio frequency AP, or may be a single-antenna/single-radio frequency AP. The antenna/radio frequency is configured to send/receive a data packet (the data packet in this specification may also be referred to as a physical layer protocol data unit, namely, PPDU). In an implementation, an antenna part or a radio frequency part of the AP may be separated from a main body part of the AP, and is in a remote layout structure. In FIG. 2a, the AP may include a physical layer processing circuit and a medium access control processing circuit. The physical layer processing circuit may be configured to process a physical layer signal, and the MAC layer processing circuit may be configured to process a MAC layer signal. For another example, FIG. 2b is a schematic diagram of a structure of a station according to an embodiment of this application. FIG. 2b is a schematic diagram of a structure of a single-antenna/single-radio frequency STA. In an actual scenario, the STA may alternatively be a multi-antenna/multi-radio frequency STA, and may be a device with more than two antennas. The antenna/radio frequency is configured to send/receive a data packet. In an implementation, an antenna part or a radio frequency part of the STA may be separated from a main body part of the STA, and is in a remote layout structure. In FIG. 2b, the STA may include a PHY processing circuit and a MAC processing circuit. The physical layer processing circuit may be configured to process a physical layer signal, and the MAC layer processing circuit may be configured to process a MAC layer signal.

The foregoing content briefly describes the system architecture in embodiments of this application. To better understand the technical solutions in embodiments of this application, the following describes content related to embodiments of this application.

1. Tone plan (tone plan) based on a resource unit (resource unit, RU)

An 802.11ax standard (also referred to as a high efficient (high efficient, HE) standard) supports bandwidth configurations at 20 MHz, 40 MHz, 80 MHz, 160 MHz, and 80+80 MHz. A difference between 160 MHz and 80+80 MHz lies in that 160 MHz is a contiguous frequency band, and 80+80 MHz is two non-contiguous 80 MHz (each 80 MHz is a contiguous frequency band). To meet users' requirements for ultra-large bandwidth, an ultra-high transmission rate, and an ultra-high throughput, an 802.11be standard (also referred to as an EHT standard) expands the bandwidth from 160 MHz to 320 MHz. That is, the 802.11be standard supports 320 MHz/160+160 MHz bandwidth configuration. In addition, the 802.11be standard allocates resources in the unit of RU.

The following separately describes a tone plan and RU distribution of different bandwidth sizes by using examples.

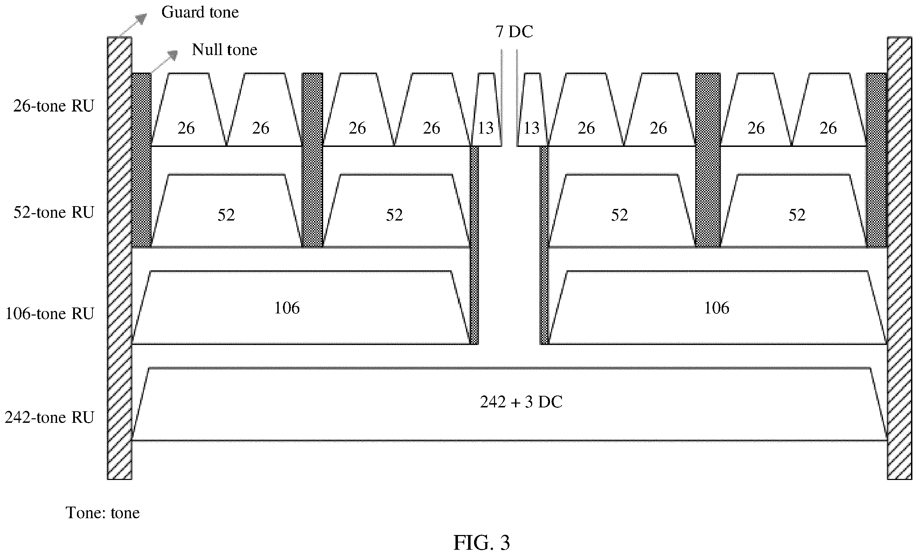

FIG. 3 is a schematic diagram of a tone plan and RU distribution for 20 MHz. As shown in FIG. 3, when the bandwidth is 20 MHz, the entire bandwidth (namely, 20 MHz) includes one 242-tone RU, or includes various combinations of 26-tone RUs, 52-tone RUs, and 106-tone RUs.

Each RU includes a data tone and a pilot tone. The data tone may be used to carry data information, and the pilot tone is used to estimate a phase offset and/or a frequency offset.

Optionally, the data tone and the pilot tone may be used to carry an LTF sequence.

In addition to the RU, the 20 MHz bandwidth further includes some guard (guard) tones, null tones, and/or direct current (direct current, DC) tones. Specifically, for a range (subcarrier range) of tones included in the RU, refer to Table 27-7 in 802.11ax.

It should be understood that the 242-tone RU may be understood as an RU including 242 tones. Similarly, the 26-tone RU may be understood as an RU including 26 tones, the 52-tone RU may be understood as an RU including 52 tones, and the 106-tone RU may be understood as an RU including 106 tones.

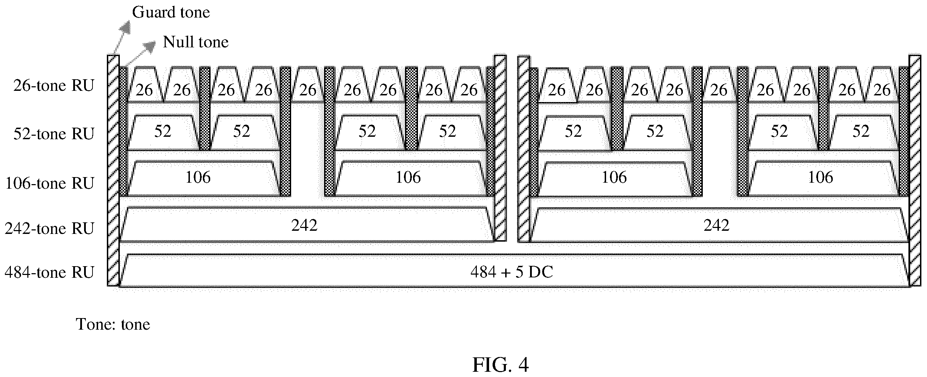

FIG. 4 is a schematic diagram of a tone plan and RU distribution for 40 MHz. As shown in FIG. 4, the entire bandwidth (namely, 40 MHz) includes one 484-tone RU, or includes various combinations of 26-tone RUs, 52-tone RUs, 106-tone RUs, and 242-tone RUs. The 484-tone RU may be understood as an RU including 484 tones. Specifically, for a range of tones included in the RU, refer to Table 27-8 in 802.11ax.

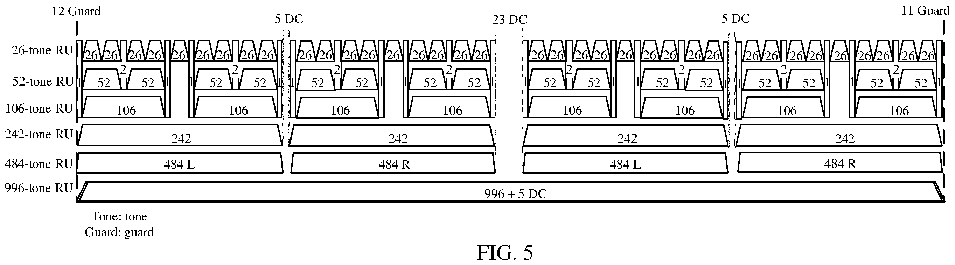

FIG. 5 is a schematic diagram of a tone plan and RU distribution for 80 MHz. As shown in FIG. 5, the entire bandwidth (namely, 80 MHz) includes one 996-tone RU, or includes various combinations of 26-tone RUs, 52-tone RUs, 106-tone RUs, 242-tone RUs, and 484-tone RUs. As shown in FIG. 5, 484L in FIG. 5 represents a left half part of the 484-tone RU (namely, a tone range [-500:-17] or a tone range [17:500]), and 484R in FIG. 5 represents a right half part of the 484-tone RU, including 242 tones, which is another representation manner of 484+5DC. Specifically, for a position of a tone included in the RU, refer to Table 27-8 in 802.11ax. The 996-tone RU may be understood as an RU including 996 tones. The terms "left" and "right" herein refer to only a relative relationship with respect to a central position in frequency domain. The 484-tone RU [-500:-17] is used as an example. On an actual frequency domain resource, "484L" is a low frequency part with respect to a frequency domain center of the 484-tone RU, namely, [-500:-259], and "484R" is a high frequency part with respect to the frequency domain center of the 484-tone RU, namely, [-258:-17]. Similarly, the 484-tone RU [17:500] is used as an example. "484L" is [17:258], and "484R" is [259:500].

When the bandwidth is 160 MHz, the entire bandwidth (namely, 160 MHz) may be understood as replication of tone plans of two 80 MHz. The entire bandwidth (namely, 160 MHz) includes two 996-tone RUs, or any combination of 26-tone RUs, 52-tone RUs, 106-tone RUs, 242-tone RUs, 484-tone RUs, and 996-tone RUs. When the bandwidth is 320 MHz, the entire bandwidth (namely, 320 MHz) may be understood as replication of a tone plan of four 80 MHz. Details are not described herein again.

In various tone plans shown in FIG. 3 to FIG. 5, a 242-tone RU is used as a unit. It is assumed that a leftmost RU in FIG. 3 to FIG. 5 has a lowest frequency, and a rightmost RU in FIG. 3 to FIG. 5 has a highest frequency. From left to right, 242-tone RUs may be numbered as follows: first (1st), second (2nd), ..., and sixteenth (16th). It should be understood that the 320 MHz bandwidth is used as an example. A data (Data) field in a radio frame occupies a maximum of 16 242-tone RUs. In other words, in the data field, a maximum of 16 242-tone RUs are in a one-to-one correspondence with 16 20 MHz channels in ascending order of frequencies.

In terms of bandwidth, 26-tone RUs correspond to 2 MHz, 52-tone RUs correspond to 4 MHz, 106-tone RUs correspond to 8 MHz, and 242-tone RUs correspond to 20 MHz. A bandwidth corresponding to an RU of another size may be correspondingly obtained through addition or multiplication. Details are not described herein again.

It should be understood that the 802.11be standard allows a plurality of RUs to be allocated to one STA. That is, a plurality of RUs are combined and allocated to one STA. Therefore, the 802.11be standard supports multiple resource units (multiple RUs, MRUs). In other words, in addition to the foregoing several RUs, the 802.11be standard further includes some MRUs. For example, one 52-tone RU and one 26-tone RU form a 52+26-tone MRU, and one 106-tone RU and one 26-tone RU form a 106+26-tone MRU. For example, one 996-tone RU and one 484-tone RU form a 996+484-tone MRU; two 996-tone RUs and one 484-tone RU form a 2*996+484-tone MRU; three 996-tone RUs form a 3*996-tone MRU; and three 996-tone RUs and one 484-tone RU form a 3*996+484-tone RU. It should be further understood that the symbol "*" in this specification means "multiplying" or "being multiplied by".

2. Uplink multi-user transmission and LTF

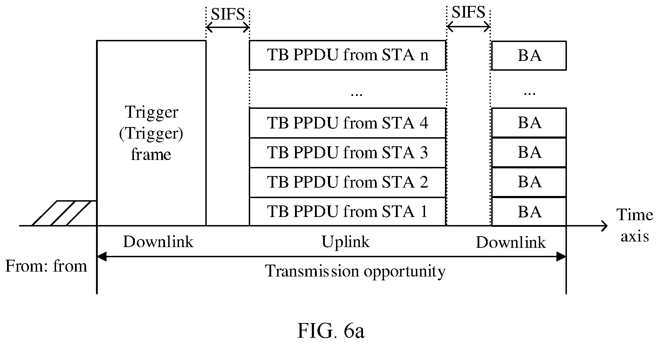

In 802.11ax and 802.11be, uplink multi-user transmission is an important technology. FIG. 6a is a schematic flowchart of uplink multi-user transmission. As shown in FIG. 6a, an uplink multi-user transmission procedure includes: An AP sends a trigger frame to trigger uplink multi-user transmission, where the trigger frame carries identifier information and resource allocation information of one or more stations. After receiving the trigger frame, each station sends an uplink data frame on an allocated resource unit (RU) by using a TB PPDU, and receives, after a short interframe space (short interframe space, SIFS), an acknowledgment (block acknowledgement, BA) frame sent by the AP.

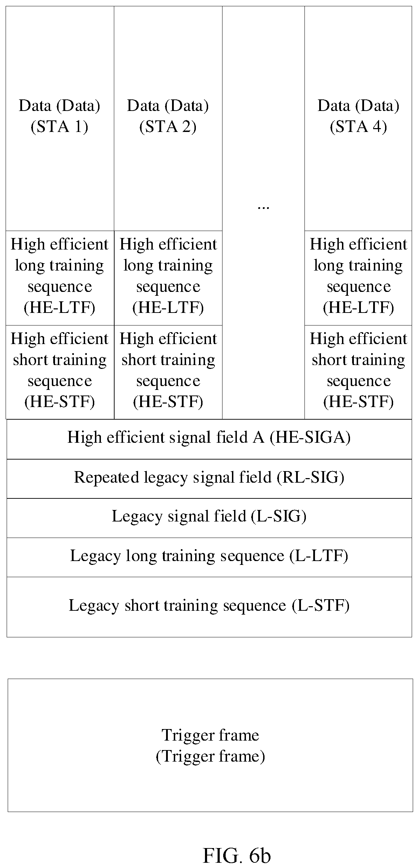

In an implementation example, a communication process in the implementation process shown in FIG. 6a may be implemented through FIG. 6b. After receiving the trigger frame, the STA obtains, through parsing, a user information field that matches an AID of the STA from the trigger frame, and then sends the TB PPDU on an RU indicated by a resource unit allocation subfield in the user information field.

For example, in an HE communication scenario, fields included in an HE TB PPDU are shown in FIG. 6b, and names and functions of the fields are shown in Table 1.

**Table 1 Meanings of fields in an HE TB PPDU**

| Acronyms and abbreviations | Full English description | 中文表达 | Function |
|---|---|---|---|
| L-STF | Legacy short training field | 传统短训练序列 | Used for PPDU discovery, coarse synchronization, and automatic gain control |
| L-LTF | Legacy long training field | 传统长训练序列 | Used for fine synchronization and channel estimation |
| L-SIG | Legacy signal field A | 传统信令字段 | Used for carrying signal information related to a PPDU length, to ensure coexistence |
| HE-SIG-A | High efficient signal field A | 高效信令字段 A | Used for carrying a signal for demodulating subsequent data |
| HE-STF | High efficient short training field | 高效短训练序列 | Used for automatic gain control of a subsequent field |
| HE-LTF | High efficient long training field | 高效长训练序列 | Used for channel estimation |
| Data | | 数据 | Carry data information |

Optionally, in another communication scenario other than the HE, the TB PPDU may also include an LTF (namely, an L-LTF in Table 1), where the LTF is used for channel estimation. The LTF sequence is designed for each bandwidth, and specifies a value carried on each tone during an LTF sending process. In a multi-stream scenario, a plurality of OFDM symbols are sent to perform channel estimation for each stream.

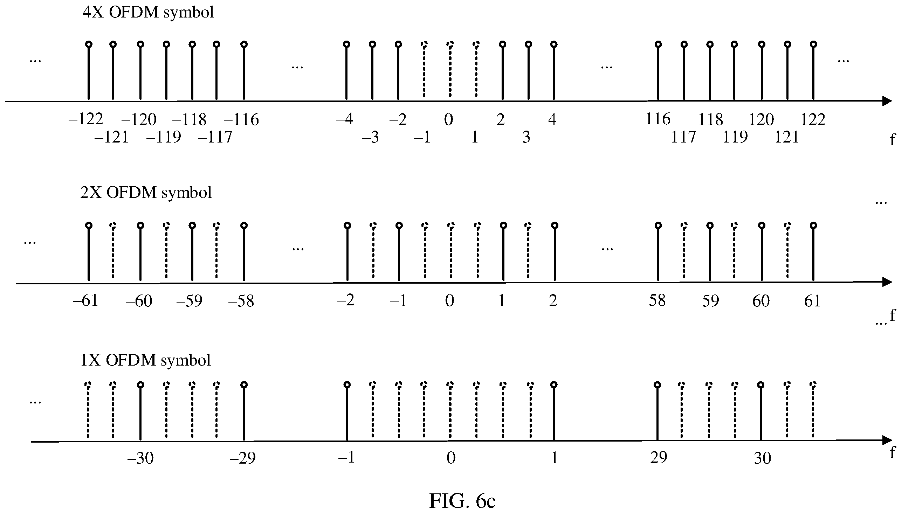

The following describes 4x, 2x, and 1x modes of the LTF. To further improve system efficiency in different scenarios, an LTF field needs to support the 4x, 2x, and 1x modes. FIG. 6c is a schematic diagram of 4x, 2x, and 1x modes applicable to an embodiment of this application. The 20 MHz bandwidth is used as an example. When positions of tones are marked as -128, - 127, ..., -2, -1, 0, 1, 2, ..., and 127, tones in a 4x HE-LTF symbol that carry a long training sequence are located in -122, -121, ..., -3, -2, 2, 3, ..., 121, and 122, remaining tones are null tones, and a tone spacing

is $\Delta_F^{4\times} = 20MHz / 256 = 78.125kHz$. Tones in a 2x HE-LTF symbol that carry a long training sequence are located in -122, -120, ..., -4, -2, 2, 4, ..., 120, and 122, and remaining tones are null tones. Equivalently, positions of the tones may be marked as -64, -63, ..., -2, -1, 0, 1, 2, ..., and 63. In this case, the tones in the 2x HE-LTF symbol that carry the long training sequence are located in -61, -60, ..., -2, -1, 1, 2, ..., 60, and 61, remaining tones are null tones, and a tone spacing is $\Delta_F^{2\times} = 20MHz / 128 = 156.25kHz$. Similarly, tones in a 1x HE-LTF symbol that carry a long training sequence are located in -120, -116, ..., -8, -4, 4, 8, ..., 116, and 120, and remaining tones are null tones. Equivalently, positions of the tones may be marked as -32, -31, ..., -2, -1, 0, 1, 2, ..., and 31. In this case, the tones in the 1x HE-LTF symbol that carry the long training sequence are located in -30, -29, ..., -2, -1, 1, 2, ..., 29, and 30, remaining tones are null tones, and a tone spacing is $\Delta_F^{1\times} = 20MHz / 64 = 312.5kHz$.

That is, four adjacent elements in a sequence form a group. If only one element in the group is not 0, the 1x mode is used. If two elements in the group are not 0, the 2x mode is used. If none of the four elements in the group is 0, the 4x mode is used. In other words, the LTF sequence is divided into a 1x sequence, a 2x sequence, and a 4x sequence. There are at least three zeros between two non-zero elements in the LTF 1x sequence, there is at least one zero between two non-zero elements in the LTF 2x sequence, and there are consecutive non-zero elements in the LTF 4x sequence. The non-zero elements in the LTF 4x sequence are densest, and therefore, channel estimation is most accurate. The protocol defines the LTF 1x, LTF 2x, and LTF 4x sequences in different bandwidths.

The 80 M bandwidth is used as an example. The LTF 4x sequence is as follows.

HELTF4x$_{-500, 500}$ =

[+1, +1, −1, +1, −1, +1, −1, −1, −1, +1, −1, −1, −1, +1, +1, −1, +1, +1, +1, +1, +1, −1, −1, +1, +1, +1, +1, −1, +1, −1, +1, −1, −1, +1, +1, −1, +1, +1, +1, −1, −1, +1, −1, −1, −1, −1, +1, +1, +1, −1, −1, −1, −1, −1, −1, +1, +1, +1, +1, +1, +1, −1, +1, +1, +1, −1, +1, +1, −1,−1, −1, +1, −1, +1, −1, −1, +1, +1, −1, +1, −1, +1, +1, +1, +1, +1, −1, −1, +1, +1, +1, −1, +1, +1, −1, −1, −1, +1, −1, +1, +1, −1, +1, +1, −1, +1, −1, −1, +1, +1, +1, +1, −1, −1, +1, +1, +1, +1, +1, −1, +1, +1, −1, −1, −1, +1, −1, −1, −1, +1, −1, +1, −1, +1, +1, −1, +1, −1, +1, −1, +1, +1, +1, −1, +1, +1, +1, −1, −1, +1, −1, −1, −1, −1, −1, +1, +1, −1, −1, −1, −1, +1, −1, +1, −1, +1, +1, −1, −1, +1, −1, −1, −1, +1, +1, −1, +1, +1, +1, +1, −1, −1, −1, +1, +1, +1, +1, −1, +1, +1, +1, +1, +1, +1, +1, −1, +1, +1, +1, −1, +1, +1, −1, −1, −1, +1, −1, +1, −1, −1, +1, +1, −1, +1, −1, +1, +1, +1, +1, +1, −1, −1, +1, +1, +1, −1, +1, +1, −1, −1,−1, +1, −1, +1, +1, −1, +1, +1, −1, +1, −1, −1, +1, −1, +1, −1, +1, −1, +1, +1, +1, −1, +1, +1, +1, −1, −1, +1, −1, −1, −1, −1, −1, +1, +1, −1, −1, −1, −1, +1, −1, +1, −1, +1, +1, −1,−1, +1, −1, −1, −1, +1, +1, −1, +1, +1, +1, +1, −1, −1, −1, +1, +1, +1, +1, −1, +1, −1, −1,−1, −1, −1, −1, +1, −1, −1, −1, +1, −1, −1, +1, +1, +1, −1, +1, −1, +1, +1, −1, −1, +1, −1, +1, −1, −1, −1, −1, −1, +1, +1, −1, −1, −1, +1, −1, −1, +1, +1, +1, −1, +1, −1, −1, +1, −1,−1, +1, −1, +1, +1, +1, +1, +1, +1, −1, −1, +1, +1, +1, +1, +1, −1, +1, +1, −1, −1, −1, +1,−1, −1, −1, −1, −1, +1, +1, −1, −1, −1, −1, +1, −1, +1, −1, +1, +1, −1, +1, +1, +1, −1, −1, +1, −1, −1, −1, −1, −1, +1, +1, −1, −1, −1, −1, +1, −1, +1, −1, +1, +1, −1, −1, +1, +1, +1, +1, −1, −1, −1, +1, +1, +1, +1, −1, −1, −1, +1, +1, +1, +1, −1, −1, +1, +1, +1, +1, +1, +1, +1,−1, +1, +1, +1, −1, +1, +1, −1, −1, −1, +1, −1, +1, −1, −1, +1, +1, −1, +1, −1, +1, +1, +1, +1, +1, −1, +1, +1, +1, +1, +1, −1, −1, +1, +1, +1, −1, +1, +1, −1, −1, −1, +1, −1, +1, +1, −1, +1, +1, −1, +1, −1,−1, −1, +1, −1, +1, −1, −1, −1, −1, +1, +1, +1, −1, −1, +1, 0, 0, 0, 0, 0, +1, −1, −1, −1, −1,−1, −1, +1, −1, +1, +1, −1, −1, +1, +1, −1, +1, −1, +1, +1, −1, −1, +1, −1, +1, −1, −1, −1, +1, +1, −1, +1, +1, +1, −1, +1, +1, +1, +1, +1, +1, +1, −1, +1, −1, −1, +1, −1, −1, +1, −1, +1, +1, +1, −1, −1, +1, −1, −1, −1, +1, +1, −1, −1, −1, −1, −1, +1, −1, −1, −1, −1, −1, +1, +1, −1, −1, −1, −1, −1, +1, −1, −1, +1, +1, +1, −1, +1, +1, +1, −1, +1, −1, +1, −1, −1, −1,−1, −1, +1, +1, +1, −1, −1, −1, −1, +1, −1, 1, −1, +1, +1, +1, −1, +1, +1, −1, −1, +1, −1, +1,−1, −1, −1, −1, −1, −1, −1, +1, +1, −1, −1, −1, +1,

−1, −1, +1, +1, +1, −1, +1, −1, −1, +1,−1, −1, +1, −1, +1, +1, +1, −1, +1, −1, −1, +1, +1, −1, +1, −1, +1, +1, +1, −1, −1, +1, −1,−1, −1, +1, −1, −1, −1, −1, −1, −1, −1, +1, −1, +1, +1, −1, +1, +1, −1, +1, −1, −1, −1, +1, +1, −1, +1, +1, +1, −1, −1, +1, +1, +1, +1, +1, −1, +1, −1, −1, −1, −1, +1, +1, −1, −1, −1,−1, −1, +1, −1, −1, +1, +1, +1, −1, +1, +1, +1, −1, +1, −1, +1, −1, −1, −1, −1, −1, +1, +1, +1, −1, −1, −1, −1, +1, −1, −1, +1, +1, +1, −1, +1, +1, −1, −1, +1, −1, +1, −1, +1, +1, +1,−1, +1, −1, −1, +1, +1, −1, +1, −1, +1, +1, +1, −1, −1, +1, −1, −1, −1, +1, −1, −1, −1, −1,−1, −1, −1, +1, −1, +1, +1, −1, +1, +1, −1, +1, +1, −1, +1, −1, −1, −1, +1, +1, −1, +1, +1, +1, −1, −1, +1, +1, +1, +1, +1, −1, +1, +1, +1, +1, −1, −1, +1, +1, +1, +1, +1, −1, +1, +1, −1, −1,−1, +1, −1, −1, −1, +1, −1, +1, −1, +1, +1, +1, +1, −1, −1, −1, +1, +1, +1, +1, −1, +1, +1, −1, −1, −1, +1, −1, −1, +1, +1, −1, +1, −1, +1, −1, −1, +1, −1, −1, −1, −1, −1, −1, +1, +1, −1, −1,−1, +1, −1, −1, +1, +1, +1, −1, +1, −1, −1, +1, −1, −1, +1, −1, +1, −1, +1, −1, +1, −1, −1, +1, +1, −1, +1, −1, +1, +1, +1, −1, −1, +1, −1, −1, −1, +1, −1, −1, −1, +1, −1, −1, −1, −1, +1,−1, +1, +1, −1, +1, +1, −1, +1, −1, −1, −1, +1, +1, −1, +1, +1, +1, −1, −1, +1, +1, +1, +1, +1, −1, +1, −1, −1, −1, −1, +1, +1, −1, −1, −1, −1, −1, +1, −1, −1, +1, +1, +1, −1, +1, +1, +1, −1, +1, −1, +1, −1, −1, −1, −1, −1, +1, +1, +1, −1, −1, −1, −1, +1, −1, −1, +1, +1, +1,−1, +1, +1, −1, −1, +1, −1, +1, −1, −1, −1, −1, −1, +1, +1, +1, −1, −1, −1, −1, +1, −1, −1, +1, +1, +1,−1, +1, +1, −1, −1, +1, −1, +1, −1, −1, −1, −1, −1, +1, +1, +1, −1, −1, −1, −1, +1, −1, −1, +1, +1, +1,−1, +1, +1, −1, −1, +1, −1, +1, −1, +1].

In addition, in the 11ax protocol, the LTF 1x sequence, the LTF 2x sequence, and the LTF 4x sequence in bandwidths of 20 M, 40 M, 80 M, and 160 M are respectively specified. In the 11be generation, the LTF 1x sequence, the LTF 2x sequence, and the LTF 4x sequence of 20 M, 40 M, 80 M, and 160 M are consistent with those of 11ax, and only the LTF 1x sequence, the LTF 2x sequence, and the LTF 4x sequence are designed for a newly added 320 M bandwidth.

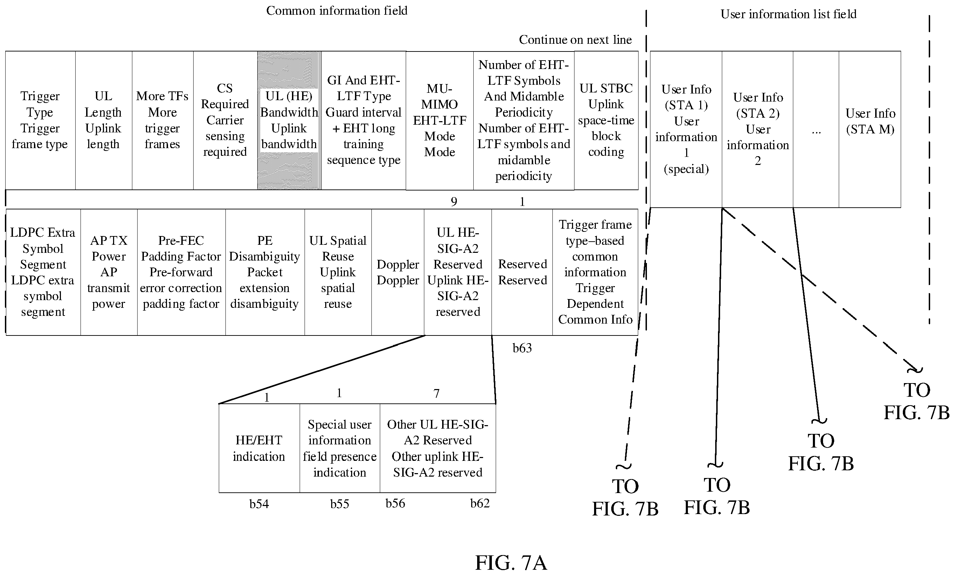

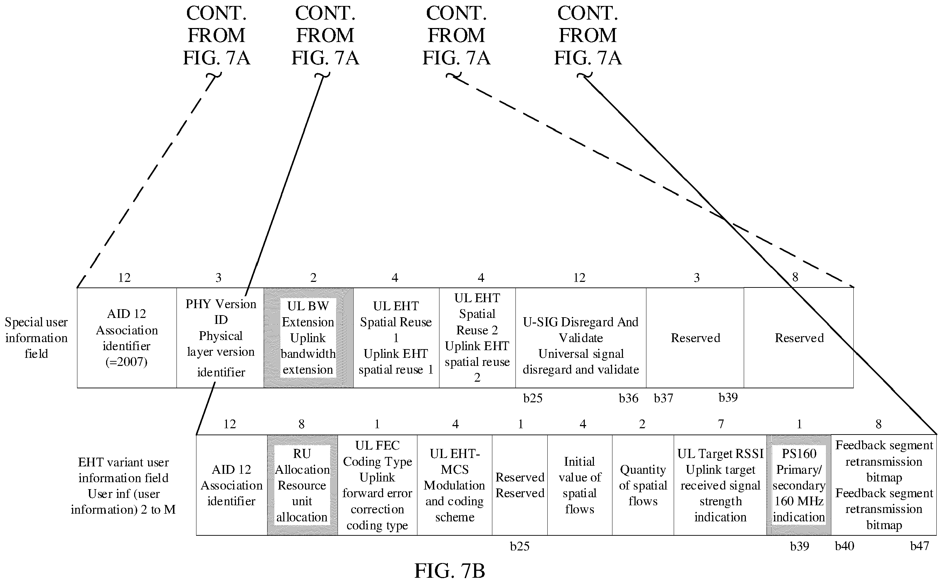

Optionally, FIG. 7A and FIG. 7B are a schematic diagram of a frame format of an 802. 11be trigger frame. As shown in FIG. 7A and FIG. 7B, the 802. 11be trigger frame includes but is not limited to a common information field and a user information list field. The common information field includes common information that needs to be read by all STAs (the STA herein includes at least one of an HE STA and an EHT STA). The EHT STA in this specification is a station that not only supports an EHT protocol, but also is compatible with HE and earlier protocols. In some scenarios and embodiments, the HE STA in this application supports a maximum of an HE protocol, but does not support a future Wi-Fi protocol, for example, the EHT protocol. However, it should be understood that, in this application, not all HE STAs cannot support a future Wi-Fi protocol. The common information field includes but is not limited to an uplink bandwidth (UL BW) subfield, and is used together with an uplink bandwidth extension subfield (UL BW Extension subfield) in a special user information field to indicate a total uplink transmission bandwidth. The user information list field includes but is not limited to one special user information field (a value of an association identifier 12 subfield is equal to 2007) and one or more EHT variant user information fields. The special user information field includes common information that needs to be read by all EHT STAs. One EHT variant user information field contains information that one EHT STA needs to read. One EHT variant user information field includes but is not limited to an association identifier 12 (association identifier 12, AID12) subfield and an RU allocation (RU allocation) subfield. The AID12 subfield indicates an association identifier of a STA, and the RU allocation subfield indicates a specific position of a resource unit allocated to the STA (namely, the STA indicated by the AID12 subfield).

For the EHT STA, an RU or an MRU allocated to the EHT STA may be jointly indicated by using the following subfields in the trigger frame: a resource unit allocation subfield (RU Allocation subfield), an uplink bandwidth subfield (UL BW subfield), an uplink bandwidth extension subfield (UL BW Extension subfield), and a primary/secondary 160 subfield (PS160 subfield). It can be learned from a format of the trigger frame shown in FIG. 7A that the common information field includes a special user information field presence indication subfield, which is used to indicate whether there is a special user information field in a domain of user information. For an EHT TB PPDU sent by the station, a bandwidth of the EHT TB PPDU is jointly determined by the UL BW subfield and the UL BW extension subfield. A mapping relationship of B0 of the RU allocation subfield, B7-B1 of the RU allocation subfield, and PS160 is shown in the following Table 2.

A bandwidth (Bandwidth) in Table 2 is determined based on both the UL BW subfield and the UL BW extension subfield, and N may be obtained by using a formula N = 2 * X1 + X0. For values of X1 and X0, refer to the following Table 3. Table 3 shows conversion from logical parameters PS160 and B0 to physical parameters X1 and X0.

**Table 2: Encoding of an RU allocation subfield and a PS160 subfield in an 802.11be trigger frame**

| PS160 subfield (PS160 subfield) | B0 of the RU allocation subfield (B0 of the resource unit allocation subfield) | B7-B1 of the RU allocation subfield (B7-B1 of the resource unit allocation subfield) | Bandwidth (MHz) (Bandwidth) | RU/MRU size (RU/MRU size) | RU/MRU index (RU/MRU index) | PHY RU/MRU index (Physical RU/MRU index) |
|---|---|---|---|---|---|---|
| 0-3: (80 MHz where the RU is located) | | 0-8 | 20, 40, 80, 160, or 320 | 26 | RU1 to RU9, respectively (respectively/in sequence/in order) | $37 \times N + RU$ index |
| | | 9-17 | 40, 80, 160, or 320 | | RU10 to RU18, respectively | |
| | | 18 | 80, 160, or 320 | | Reserved (reserved) | |
| | | 19-36 | 80, 160, or 320 | | RU20 to RU37, respectively | |
| | | 37-40 | 20, 40, 80, 160, or 320 | 52 | RU1 to RU4, respectively | $16 \times N + RU$ index |
| | | 41-44 | 40, 80, 160, or 320 | | RU5 to RU8, respectively | |
| | | 45-52 | 80, 160, or 320 | | RU9 to RU16, respectively | |
| | | 53, 54 | 20, 40, 80, 160, or 320 | 106 | RU1 and RU2, respectively | $8 \times N + RU$ index |
| | | 55, 56 | 40, 80, 160, or 320 | | RU3 and RU4, respectively | |
| | | 57-60 | 80, 160, or 320 | | RU5 to RU8, respectively | |
| | | 61 | 20, 40, 80, 160, or 320 | 242 | RU1 | $4 \times N + RU$ index |
| | | 62 | 40, 80, 160, or 320 | | RU2 | |
| | | 63, 64 | 80, 160, or 320 | | RU3 and RU4, respectively | |
| | | 65 | 40, 80, 160, or 320 | 484 | RU1 | $2 \times N + RU$ index |
| | | 66 | 80, 160, or 320 | | RU2 | |
| | | 67 | 80, 160, or 320 | 996 | RU1 | $N + RU$ index |

(continued)

| PS160 subfield (PS160 subfield) | B0 of the RU allocation subfield (B0 of the resource unit allocation subfield) | B7-B1 of the RU allocation subfield (B7-B1 of the resource unit allocation subfield) | Bandwidth (MHz) (Bandwidth) | RU/MRU size (RU/MRU size) | RU/MRU index (RU/MRU index) | PHY RU/MRU index (Physical RU/MRU index) |
|---|---|---|---|---|---|---|
| 0-1: (160 MHz where the RU is located) | 0 | 68 | Reserved (reserved) | | | Reserved (reserved) |
| | 1 | | 160 or 320 | 2×996 | RU1 | X1 + RU index |
| 0 | 0 | 69 | Reserved (reserved) | | | Reserved (reserved) |
| 0 | 1 | | | | | |
| 1 | 0 | | | | | |
| 1 | 1 | | 320 | 4×996 | RU1 | RU1 |
| 0-3: 80 MHz where the MRU is located | | 70-72 | 20, 40, 80, 160, or 320 | 52+26 | MRU1 to MRU3, respectively | 12×N+ MRU index |
| | | 73-75 | 40, 80, 160, or 320 | 52+26 | MRU4 to MRU6, respectively | |
| | | 76-81 | 80, 160, or 320 | 52+26 | MRU7 to MRU12, respectively | |
| | | 82, 83 | 20, 40, 80, 160, or 320 | 106+26 | MRU1 and MRU2, respectively | 8×N+ MRU index |
| | | 84, 85 | 40, 80, 160, or 320 | 106+26 | MRU3 and MRU4, respectively | |
| | | 86-89 | 80, 160, or 320 | 106+26 | MRU5 to MRU8, respectively | |
| | | 90-93 | 80, 160, or 320 | 484+242 | MRU1 to MRU4, respectively | 4×N+ MRU index |
| 0-1: 160 MHz where the MRU is located | 0 | 94, 95 | 160 or 320 | 996+484 | MRU1 and MRU2, respectively | 4×X1+ MRU index |
| | 1 | | | | MRU3 and MRU4, respectively | |
| 0-1: 160 MHz where the MRU is located | 0 | 96-99 | 160 or 320 | 996+484+242 | MRU1 to MRU4, respectively | 8×X1+ MRU index |
| | 1 | | | | MRU5 to MRU8, respectively | |

(continued)

| PS160 subfield (PS160 subfield) | B0 of the RU allocation subfield (B0 of the resource unit allocation subfield) | B7-B1 of the RU allocation subfield (B7-B1 of the resource unit allocation subfield) | Bandwidth (MHz) (Bandwidth) | RU/MRU size (RU/MRU size) | RU/MRU index (RU/MRU index) | PHY RU/MRU index (Physical RU/MRU index) |
|---|---|---|---|---|---|---|
| 0 | 0 | 100-103 | 320 | 2×996 +484 | MRU1 to MRU4, respectively | MRU index |
| 0 | 1 | | | | MRU5 and MRU6, respectively | |
| 1 | 0 | | | | MRU7 and MRU8, respectively | |
| 1 | 1 | | | | MRU9 to MRU12, respectively | |
| 0 | 0 | 104 | 320 | 3×996 | MRU1 | MRU index |
| 0 | 1 | | | | MRU2 | |
| 1 | 0 | | | | MRU3 | |
| 1 | 1 | | | | MRU4 | |
| 0 | 0 | 105, 106 | 320 | 3×996 +484 | MRU1 and MRU2, respectively | MRU index |
| 0 | 1 | | | | MRU3 and MRU4, respectively | |
| 1 | 0 | | | | MRU5 and MRU6, respectively | |
| 1 | 1 | | | | MRU7 and MRU8, respectively | |
| Any | Any | 107-127 | Any (any) | Reserved | Reserved | Reserved |
| Note: In the primary 160 MHz, B0 of the RU allocation subfield is set to 0 to indicate that the RU/MRU allocation applies to the primary 80 MHz, and is set to 1 to indicate that the RU/MRU allocation applies to the secondary 80 MHz. In the secondary 160 MHz, B0 of the RU allocation subfield is set to 0 to indicate that the RU/MRU allocation applies to the lower 80 MHz, and is set to 1 to indicate that the RU/MRU allocation applies to the higher 80 MHz. | | | | | | |

**Table 3: Conversion from logical parameters to physical parameters**

| Bandwidth (MHz) | Logical inputs | | | Physical outputs/Physical outputs | | |
|---|---|---|---|---|---|---|
| | Frequency band configuration | PS160 | B0 | X0 | X1 | N |
| 20/40/80 | [P80] | 0 | 0 | 0 | 0 | 0 |

(continued)

| Bandwidth (MHz) | Logical inputs | | | | Physical outputs/Physical outputs | | |
|---|---|---|---|---|---|---|---|
| | Frequency band configuration | PS160 | B0 | X0 | X1 | N | |
| 160 | [P80 S80] | 0 | 0 | 0 | 0 | 0 |
| | | 0 | 1 | 1 | 0 | 1 |
| | [S80 P80] | 0 | 0 | 1 | 0 | 1 |
| | | 0 | 1 | 0 | 0 | 0 |
| 320 | [P80 S80 S160] | 0 | 0 | 0 | 0 | 0 |
| | | 0 | 1 | 1 | 0 | 1 |
| | | 1 | 0 | 0 | 1 | 2 |
| | | 1 | 1 | 1 | 1 | 3 |
| | [S80 P80 S160] | 0 | 0 | 1 | 0 | 1 |
| | | 0 | 1 | 0 | 0 | 0 |
| | | 1 | 0 | 0 | 1 | 2 |
| | | 1 | 1 | 1 | 1 | 3 |
| | [S160 P80 S80] | 0 | 0 | 0 | 1 | 2 |
| | | 0 | 1 | 1 | 1 | 3 |
| | | 1 | 0 | 0 | 0 | 0 |
| | | 1 | 1 | 1 | 0 | 1 |
| | [S160 S80 P80] | 0 | 0 | 1 | 1 | 3 |
| | | 0 | 1 | 0 | 1 | 2 |
| | | 1 | 0 | 0 | 0 | 0 |
| | | 1 | 1 | 1 | 0 | 1 |

It should be understood that in Table 3, P80 represents a primary 80 MHz channel, S80 represents a secondary 80 MHz channel, and S160 represents a secondary 160 MHz channel.

The frequency band configuration in Table 3 means a sequence of P80, S80, and S160 in absolute frequencies, and from left to right sequentially represents a low frequency to a high frequency. For example, [P80 S80] indicates that the primary 80 MHz channel is a first 80 MHz channel in ascending order of frequencies, and the secondary 80 MHz channel is a second 80 MHz channel in ascending order of frequencies. In other words, [P80 S80] indicates that the primary 80 MHz channel is a lower 80 MHz channel, and the secondary 80 MHz channel is a higher 80 MHz channel. For another example, [S80 P80 S160] indicates that the secondary 80 MHz channel is a lower 80 MHz channel of the lower 160 MHz channel, the primary 80 MHz channel is a higher 80 MHz channel of the lower 160 MHz channel, and the secondary 160 MHz channel is a higher 160 MHz channel.

3. Distributed (distributed) RU/discrete RU

In a low power indoor (Low Power Indoor, LPI) communication scenario, a maximum power and a maximum power spectral density for transmission are limited. Compared with the maximum power, the maximum power spectral density is more strictly limited, and an allowed maximum power for transmission is usually more limited by a power spectral density. Due to the limitation of the maximum power spectral density, a transmit power of a single contiguous RU is limited. It should be understood that the contiguous RU in this application is an RU including a plurality of consecutive tones, or an RU including two sets of consecutive tone groups. A plurality of tones included in each of the sets of consecutive tone groups are consecutive. The two sets of consecutive tone groups are only spaced apart by a guard tone, a null tone, or a direct current tone. Certainly, the contiguous RU may also have another name. The name of the contiguous RU is not limited in this application.

The maximum power spectral density is a maximum transmit power of 1 MHz. In other words, the maximum power spectral density is limited in a form in which a transmit power of 1 MHz does not exceed x dBm (dBm = 10lg(mW), where lg represents a logarithm to base 10). A minimum granularity of the maximum power spectral density is 1 MHz. Therefore, in a case in which the transmit power of 1 MHz is not changed, that is, in a case in which the power spectral density is not changed, a discrete RU, or referred to as a distributed RU technology, is proposed to increase the transmit power. The discrete RU/distributed RU corresponds to the contiguous RU. The discrete RU includes a plurality of tones that are discrete in frequency domain. Some or all of the plurality of discrete tones may be discrete. In other words, the plurality of discrete tones may include some tones that are consecutive in frequency, and include some tones that are nonconsecutive in frequency. Alternatively, none of the plurality of discrete tones are consecutive in frequency. It should be understood that in this specification, "a discrete RU", "a distributed RU", and "a DRU" may be used interchangeably.

For a discrete RU and a contiguous RU that include a same quantity of tones, a bandwidth spanned by the discrete RU from a low-frequency start position to a high-frequency end position in frequency domain is greater than a frequency domain bandwidth occupied by the contiguous RU. In this way, when maximum power spectral densities are the same, a total transmit power of the discrete RU is higher than a total transmit power of the contiguous RU. In other words, when the power spectral density is limited, a limited quantity of tones (for example, 26 tones included in a contiguous 26-tone RU) are discretely allocated to a wider bandwidth, that is, more tones (for example, odd-numbered tones in two contiguous 26-tone RUs), thereby increasing a transmit power. Therefore, in comparison with the contiguous RU, when data is transmitted by using the discrete RU, a transmit power of a single RU can be increased, thereby increasing a transmit power on a single tone, and improving a signal-to-noise ratio (signal to noise ratio, SNR).

In this embodiment of this application, it may be understood that, in one sending process of a user (STA), transmit powers of all tones in a resource unit RU allocated to the STA are the same. A tone spacing of 78.125 kHz is used as an example. 1 MHz includes 12.8 (approximately 13) tones. It is assumed that a transmit power of 1 MHz does not exceed p mW (namely, the maximum power spectral density). A maximum value of a quantity of tones that carry a signal in any 13 consecutive tones determines an average power of each tone, and further determines a transmit power of the signal. The transmit power of the signal is equal to a product of the average power of each tone and the quantity of tones. For example, it is assumed that a maximum of five tones in the any 13 consecutive tones (1 MHz) carry a signal. In this case, an average power of each tone in the 1 MHz bandwidth is (p/5) mW. It is assumed that a maximum of two tones in the any 13 consecutive tones (1 MHz) carry a signal. In this case, an average power of each tone in the 1 MHz bandwidth is (p/2) mW. In other words, the maximum power spectral density is specific, and a larger quantity of tones that carry a signal in the any 13 consecutive tones indicates a smaller average power on each tone and a smaller total transmit power. It can be learned that, assuming that a resource unit allocated to the STA is a discrete 26-tone RU, that is, a quantity of tones carrying a signal is 26, if a maximum of two tones carry a signal in the any 13 consecutive tones, that is, a bandwidth occupied by the discrete 26-tone RU is 26/2 = 13 MHz, an average power of each tone in the 1 MHz bandwidth is (p/2) mW, and a total transmit power of the discrete 26-tone RU may be calculated based on a total transmit power of the tones, which is specifically (p/2)*26 mW, or is calculated based on a bandwidth occupied by a tone, which is specifically 13*p mW. If a resource unit allocated to the STA is a contiguous 26-tone RU, because the contiguous 26-tone RU includes 26 consecutive tones (two sets of 13 continuous tones), that is, a bandwidth occupied by the contiguous 26-tone RU is 2 MHz, an average power of each tone in the 1 MHz bandwidth is (p/13) mW, and a total transmit power of the contiguous 26-tone RU may be calculated based on a total transmit power of tones, which is specifically (p/13)*26 mW, or calculated based on a bandwidth occupied by a tone, which is specifically 2*p mW. In comparison, under a same maximum power spectrum density, the total transmit power of the discrete 26-tone RU is 6.5 times higher than the total transmit power of the contiguous 26-tone RU.

It should be understood that the discrete RU/distributed RU/DRU described in this specification is an RU with tones discrete in frequency domain. In other words, an RU with this feature is referred to as a discrete RU/distributed RU/DRU in this specification. However, in practice, an RU with this feature may also have another name. This is not limited in this application. For ease of description, in the following embodiments, an RU having this feature is denoted as a DRU.

4. Peak-to-average power ratio

An amplitude of a radio signal changes constantly in time domain. Therefore, a transmit power of the radio signal is not constant. The peak-to-average power ratio (peak to average power ratio, PAPR) is a peak-to-average ratio for short. The peak-to-average power ratio may be a ratio of an instantaneous power peak value of a continuous signal to an average signal power value in one symbol. The peak-to-average power ratio may be expressed by using the following formula:

$$PAPR = 10 \cdot \log_{10}\left(\frac{\max(X_i^2)}{mean(X_i^2)}\right).$$

$X_i$ represents a time-domain discrete value of a set of sequences; $\max(X_{i2})$ represents a maximum value of a square of the time-domain discrete value; and $mean(X_{i2})$ represents an average value of the square of the time-domain discrete value.

An OFDM symbol is obtained by superimposing a plurality of independently modulated tone signals. When phases of tones are the same or similar, superimposed signals are modulated by a same initial phase signal, resulting in a relatively large instantaneous power peak value. This leads to a relatively large PAPR. An OFDM system has a disadvantage of a high PAPR, and especially in high bandwidth, more tones lead to a more severe PAPR. Because a dynamic range of a general power amplifier is limited, a MIMO-OFDM signal with a relatively large peak-to-average ratio is very likely to enter a nonlinear area of the power amplifier. The high PAPR causes nonlinear signal distortion, resulting in obvious spectrum spreading interference and in-band signal distortion. This reduces system performance. Therefore, when a sequence is designed, a smaller PAPR of the sequence is better.

OFDM uses a frequency domain equalization technology. Therefore, accuracy of channel estimation greatly affects communication performance. However, an OFDM system has a disadvantage of a high PAPR, and especially in high bandwidth, more tones lead to a more severe PAPR. The high PAPR leads to nonlinear signal distortion and degrades system performance.

It can be learned from the foregoing content that, the tones included in the resource unit are discretely allocated to a larger bandwidth (larger than the bandwidth occupied by the contiguous RU), thereby improving a transmit power. In addition, in a scenario in which communication is performed based on the DRU, how to reduce a PAPR to improve system performance is a technical problem to be urgently resolved.

For example, if the EHT-LTF4x sequence determined by the 11be generation is still used, for a DRU, a tone corresponding to the DRU is selected to send an LTF, and obtained PAPR data is shown in Table 4.

**Table 4**

|          | DRU 26-tone | DRU 52-tone | DRU 106-tone | DRU 242-tone | DRU 484-tone | DRU 996-tone |
|----------|-------------|-------------|--------------|--------------|--------------|--------------|
| Max PAPR | 9.42        | 12.08       | 12.79        | 12.54        | 12           | 12.43        |

It can be learned from Table 4 that, if the EHT-LTF4x sequence is directly used for the DRU, an excessively large PAPR is caused, channel estimation is inaccurate, and system performance deteriorates.

Therefore, this application provides a communication method and apparatus, to not only improve transmission efficiency in a DRU transmission mode, but also improve system performance due to a relatively low PAPR of an LTF included in a TB PPDU.

The following describes in detail the technical solutions provided in this application with reference to more accompanying drawings.

Optionally, the station in this application may be any STA shown in FIG. 1, for example, a STA 200. The access point in this application may be any AP shown in FIG. 1, for example, an AP 100. Both the station and the access point in this application support an 802.11be protocol, and may further support other WLAN communication protocols such as 802.11ax and 802.11ac. It should be understood that the station and the access point in this application may further support a next-generation protocol of 802.11be. In other words, the method provided in this application is applicable to not only the 802.11be protocol, but also the next-generation protocol of 802.11be.

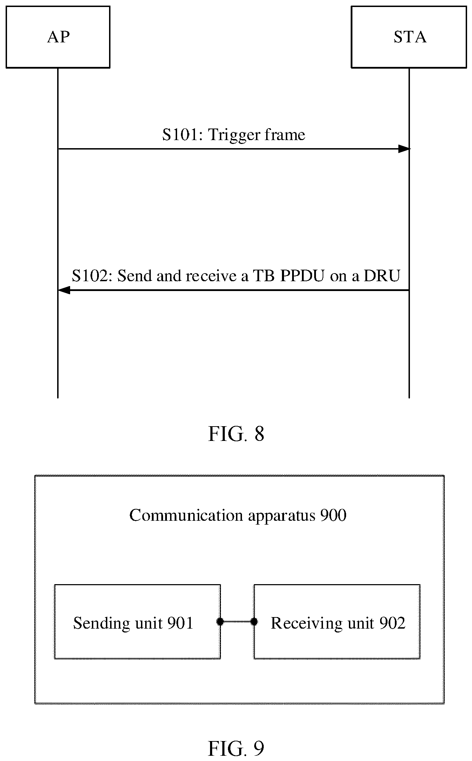

FIG. 8 is a schematic diagram of a communication method according to this application. The method includes the following steps.

S101: An AP sends a trigger frame.

In this embodiment, the AP sends the trigger frame in step S101, and correspondingly, a STA receives the trigger frame in step S101. The trigger frame includes DRU indication information, and the DRU indication information indicates a DRU used by the STA to send a TB PPDU.

It may be understood that the trigger frame described in this embodiment and the following embodiments may be in various possible frame formats, and may be a type of control frame of a MAC frame specified in a standard, and is referred to as a trigger frame (trigger frame), for example, the trigger frame in the foregoing 802.11be, or may be another MAC frame with a trigger function. Another MAC frame with a trigger function may also be referred to as a MAC frame with a TRS (triggered response scheduling, triggered response scheduling) function, and the function is usually implemented by including a TRS control subfield (TRS control subfield) in the MAC frame. In a specific example, the DRU indication information described in step S101 may be carried in an RU allocation (RU allocation) field in a user info field (user information field) in the trigger frame, or may be carried in an RU allocation field in a TRS control subfield in another MAC frame.

Optionally, the DRU indication information indicates a size and a position of a DRU allocated to the station. The size of the DRU is a quantity of tones in the DRU, and the position of the DRU is a position of a tone in the DRU in frequency domain. Usually, a tone index range (subcarrier index range) indicates a position of a tone in the DRU in frequency domain. The size and the position of the DRU conform to a size and a position that are predefined in the standard. Optionally, the DRU indication information in the trigger frame may reuse a contiguous RU signaling indication method, to reduce complexity. In other words, the DRU indication information in the trigger frame may be a predefined RU allocation subfield (RU allocation subfield). Refer to Table 2.

It should be noted that, that the DRU indication information indicates a DRU used by the STA to send a TB PPDU may be expressed as that the DRU indication information indicates a DRU allocated to the STA, or may be expressed as that the DRU indication information indicates a DRU allocated by the AP to the STA, where the DRU is used to carry the TB PPDU.

Optionally, the AP determines, based on a tone plan of DRUs and signal quality of each tone, a DRU to be allocated to one or more stations, for example, allocates a DRU that includes tones with relatively good quality to a station. The AP sends a trigger frame in step S101, to trigger uplink multi-user transmission, where the trigger frame includes DRU indication information of one or more stations. Correspondingly, the AP schedules each station of uplink multi-user transmission to receive the trigger frame in step S101.

For ease of understanding, one station is used as an example for description in this embodiment of this application. A frame format of the trigger frame may be shown in FIG. 7A and FIG. 7B, and details are not described herein again. The DRU indication information included in the trigger frame indicates a DRU (including a size and a position) allocated to the station. The DRU indication information includes an RU allocation subfield, an uplink bandwidth subfield, an uplink bandwidth extension subfield, and a primary/secondary 160 subfield. For an indication manner of the DRU indication information, refer to the following Table 5. Table 5 is similar to Table 2, and a difference lies in that the RU in Table 2 is replaced with a DRU in Table 5. An MDRU in Table 5 is a larger DRU combined by corresponding DRUs. A combination principle is consistent with that of combining contiguous RUs into an MRU, and details are not described again. That is, the AP may allocate a resource unit to the STA in the manner described in Table 2. In other words, in this embodiment of this application, the contiguous RU indication manner may be reused to allocate the discrete resource units to the STA, so that compatibility can be improved, and product implementation complexity can be reduced.

**Table 5: DRU allocation subfield and PS160 subfield**

| PS160 subfield (PS160 subfield) | B0 of the RU allocation subfield (B0 of the resource unit allocation subfield) | B7-B1 of the RU allocation subfield (B7-B1 of the resource unit allocation subfield) | Bandwidth (MHz) (Bandwidth) | DRU/MDRU size (RU/MRU size) | DRU/DMRU index (RU/MRU index) | PHY DRU/DMRU index (Physical RU/MRU index) |
|---|---|---|---|---|---|---|
| 0-3: (80 MHz where the DRU is located) | 0-8 | | 20, 40, 80, 160, or 320 | 26 | DRU1 to DRU9, respectively (respectively /in sequence/in order) | 37×N+ DRU index |
| | | 9-17 | 40, 80, 160, or 320 | | DRU10 to DRU18, respectively | |
| | | 18 | 80, 160, or 320 | | Reserved (reserved) | |
| | | 19-36 | 80, 160, or 320 | | DRU20 to DRU37, respectively | |

(continued)

| PS160 subfield (PS160 subfield) | B0 of the RU allocation subfield (B0 of the resource unit allocation subfield) | B7-B1 of the RU allocation subfield (B7-B1 of the resource unit allocation subfield) | Bandwidth (MHz) (Bandwidth) | DRU/MDRU size (RU/MRU size) | DRU/DMRU index (RU/MRU index) | PHY DRU/ DMRU index (Physical RU/MRU index) |
|---|---|---|---|---|---|---|
| | | 37-40 | 20, 40, 80, 160, or 320 | 52 | DRU1 to DRU4, respectively | 16×N+ DRU index |
| | | 41-44 | 40, 80, 160, or 320 | | DRU5 to DRU8, respectively | |
| | | 45-52 | 80, 160, or 320 | | DRU9 to DRU16, respectively | |
| | | 53, 54 | 20, 40, 80, 160, or 320 | 106 | DRU1 and DRU2, respectively | 8×N+ DRU index |
| | | 55, 56 | 40, 80, 160, or 320 | | DRU3 and DRU4, respectively | |
| | | 57-60 | 80, 160, or 320 | | DRU5 to DRU8, respectively | |
| | | 61 | 20, 40, 80, 160, or 320 | 242 | DRU1 | 4×N+ DRU index |
| | | 62 | 40, 80, 160, or 320 | | DRU2 | |
| | | 63, 64 | 80, 160, or 320 | | DRU3 and DRU4, respectively | |
| | | 65 | 40, 80, 160, or 320 | 484 | DRU1 | 2×N+ DRU index |
| | | 66 | 80, 160, or 320 | | DRU2 | |
| | | 67 | 80, 160, or 320 | 996 | DRU1 | N+ DRU index |
| 0-1: (160 MHz where the DRU is located) | 0 | 68 | Reserved (reserved) | | | Reserved (reserved) |
| | 1 | | 160 or 320 | 2×996 | DRU1 | X1+ DRU index |
| 0 | 0 | 69 | Reserved (reserved) | | | Reserved (reserved) |
| 0 | 1 | | | | | |
| 1 | 0 | | | | | |
| 1 | 1 | | 320 | 4×996 | DRU1 | DRU1 |

(continued)

| PS160 subfield (PS160 subfield) | B0 of the RU allocation subfield (B0 of the resource unit allocation subfield) | B7-B1 of the RU allocation subfield (B7-B1 of the resource unit allocation subfield) | Bandwidth (MHz) (Bandwidth) | DRU/MDRU size (RU/MRU size) | DRU/DMRU index (RU/MRU index) | PHY DRU/ DMRU index (Physical RU/MRU index) |
|---|---|---|---|---|---|---|
| 0-3: 80 MHz where the MDRU is located | | 70-72 | 20, 40, 80, 160, or 320 | 52+26 | MDRU1 to MDRU3, respectively | $12 \times N+$ MDRU index |
| | | 73-75 | 40, 80, 160, or 320 | 52+26 | MDRU4 to MDRU6, respectively | |
| | | 76-81 | 80, 160, or 320 | 52+26 | MDRU7 to MDRU12, respectively | |
| | | 82, 83 | 20, 40, 80, 160, or 320 | 106+26 | MDRU1 and MDRU2, respectively | $8 \times N+$ MDRU index |
| | | 84, 85 | 40, 80, 160, or 320 | 106+26 | MDRU3 and MDRU4, respectively | |
| | | 86-89 | 80, 160, or 320 | 106+26 | MDRU5 to MDRU8, respectively | |
| | | 90-93 | 80, 160, or 320 | 484+242 | MDRU1 to MDRU4, respectively | $4 \times N+$ MDRU index |
| 0-1: 160 MHz where the MDRU is located | 0 | 94, 95 | 160 or 320 | 996+484 | MDRU1 and MDRU2, respectively | $4 \times X1+$ MDRU index |
| | 1 | | | | MDRU3 and MDRU4, respectively | |
| 0-1: 160 MHz where the MDRU is located | 0 | 96-99 | 160 or 320 | 996+484+242 | MDRU1 to MDRU4, respectively | $8 \times X1+$ MDRU index |
| | 1 | | | | MDRU5 to MDRU8, respectively | |

(continued)

| PS160 subfield (PS160 subfield) | B0 of the RU allocation subfield (B0 of the resource unit allocation subfield) | B7-B1 of the RU allocation subfield (B7-B1 of the resource unit allocation subfield) | Bandwidth (MHz) (Bandwidth) | DRU/MDRU size (RU/MRU size) | DRU/DMRU index (RU/MRU index) | PHY DRU/DMRU index (Physical RU/MRU index) |
|---|---|---|---|---|---|---|
| 0 | 0 | 100-103 | 320 | 2×996+484 | MDRU1 to MDRU4, respectively | MDRU index |
| 0 | 1 | | | | MDRU5 and MDRU6, respectively | |
| 1 | 0 | | | | MDRU7 and MDRU8, respectively | |
| 1 | 1 | | | | MDRU9 to MDRU12, respectively | |
| 0 | 0 | 104 | 320 | 3×996 | MDRU1 | MDRU index |
| 0 | 1 | | | | MDRU2 | |
| 1 | 0 | | | | MDRU3 | |
| 1 | 1 | | | | MDRU4 | |
| 0 | 0 | 105, 106 | 320 | 3×996+484 | MDRU1 and MDRU2, respectively | MDRU index |
| 0 | 1 | | | | MDRU3 and MDRU4, respectively | |
| 1 | 0 | | | | MDRU5 and MDRU6, respectively | |
| 1 | 1 | | | | MDRU7 and MDRU8, respectively | |
| Any | Any | 107-127 | Any (any) | Reserved | Reserved | Reserved |

Note: In the primary 160 MHz, B0 of the RU allocation subfield is set to 0 to indicate that the RU/MRU allocation applies to the primary 80 MHz, and is set to 1 to indicate that the DRU/MDRU allocation applies to the secondary 80 MHz. In the secondary 160 MHz, B0 of the RU allocation subfield is set to 0 to indicate that the DRU/MDRU allocation applies to the lower 80 MHz, and is set to 1 to indicate that the DRU/MDRU allocation applies to the higher 80 MHz.

It should be understood that, because the AP may simultaneously schedule a plurality of STAs to perform uplink transmission, the AP may determine, based on a resource unit allocated to each STA and a tone plan for distributed RUs at a 20 MHz bandwidth, data of which tones belongs to a same STA, so that the AP can distinguish uplink data from different STAs.

Optionally, the trigger frame may include indication information indicating whether the station uses a DRU or a contiguous RU. Based on indication of the indication information, after receiving the trigger frame, the station may know a type of a scheduled RU, that is, whether the RU is a DRU or a contiguous RU, so that compatible use of the DRU and the contiguous RU can be implemented without increasing signaling overheads.

For example, the indication information may be carried in a subfield of a common information field (Common info Field) of the trigger frame. The subfield in the common info field may be a reserved field (a reserved field in 11be) in the common information field in the trigger frame, or may be another field. This is not specifically limited in this application. In addition, if the reserved field in the common information field in the trigger frame is used to carry the indication information, the reserved field is used, and is no longer considered as a reserved field. It should be understood that the trigger frame herein may also be replaced with a MAC frame having a TRS function, and the indication information indicating whether the station uses a distributed RU or a contiguous RU may be located in a reserved bit or a newly added subfield of a TRS subfield. Similarly, when the reserved bit is used, the reserved bit is no longer considered as a reserved bit.

S102: The AP and the STA send and receive a TB PPDU on a DRU.

In this embodiment, in step S102, the STA sends the TB PPDU on the DRU. Correspondingly, in step S 102, the AP receives the TB PPDU on the DRU.

It may be understood that, after the STA receives, in step S101, the trigger frame sent by the AP, the STA may determine, based on the indication of the indication information of the DRU in the trigger frame, a DRU allocated to the station, and in step S102, the STA sends the TB PPDU on the DRU.

A specific tone included in the DRU may be determined by the tone plan (tone plan) of the DRUs. A plurality of implementations of this application provide tone plans (tone plan) of a plurality of DRUs. For details, refer to the following embodiments. It should be noted that a communication bandwidth between the STA and the AP provided in this embodiment of this application may include 20 MHz, 40 MHz, 80 MHz, 160 MHz, or 320 MHz. The following is described by using a tone plan for 20 MHz as an example. Apparently, tone plans at 40 MHz, 80 MHz, 160 MHz, or 320 MHz may be implemented with reference to this example.

In a tone plan of distributed RUs, the 20 MHz bandwidth includes nine 26-tone DRUs, and each 26-tone DRU includes 24 data tones and two pilot tones.

In the tone plan of the distributed RUs, the 20 MHz bandwidth may further include four 52-tone DRUs, and each 52-tone DRU may be considered as splicing of two 26-tone DRUs. That is, each 52-tone DRU includes 48 data tones and four pilot tones.

In the tone plan of the distributed RUs, the 20 MHz bandwidth may further include two 106-tone DRUs, and each 106-tone DRU may be considered as splicing of two 52-tone DRUs and two supplementary tones.

Optionally, because two 52-tone DRUs include eight pilot tones, and one 106-tone DRU needs only four pilot tones, four pilot tones are selected from the eight pilot tones as pilot tones of the 106-tone DRU, and the other four pilot tones are used as data tones of the 106-tone DRU. In other words, each 106-tone DRU includes 100 data tones, two supplementary tones, and four pilot tones. Because the supplementary tone is also a data tone, each 106-tone DRU is equivalent to including 102 data tones and four pilot tones. The 26-tone DRU may be understood as a distributed RU including 26 tones, and may also be referred to as a DRU 26 for short. Similarly, the 52-tone DRU may be understood as a distributed RU including 52 tones, and may also be referred to as a DRU 52 for short; and the 106-tone DRU may be understood as a distributed RU including 106 tones, and may also be referred to as a DRU 106 for short. It should be further understood that DRUs of other dimensions/sizes have similar understandings, and may also have corresponding short names, which are not listed one by one herein.

Specifically, for tones included in the 26-tone DRU, the 52-tone DRU, and the 106-tone DRU in the foregoing implementations, refer to the following descriptions.

It should be understood that there are a total of 256 tones at the 20 MHz bandwidth, and indexes of the 256 tones may be represented as [-128:127], namely, -128, -127, -126, ..., -1, 0, 1, ..., 125, 126, and 127. Tone indexes in this application may be numbered in ascending order of frequencies. To be specific, a tone with a smallest index value has a lowest frequency, and a tone with a largest index value has a highest frequency. An index of a guard tone at the 20 MHz bandwidth is [-128:-123, 123:127], and an index of a direct current tone is [-3:3]. Data and pilot tone indexes are [-122:-4, 4:122]. Specifically, for a total quantity of data tones and a total quantity of pilot tones corresponding to resource units of different sizes/dimensions at the 20 MHz bandwidth, refer to the following descriptions. Details are not described herein again.

It should be noted that, during design of a tone plan of distributed RUs at the 20 MHz bandwidth, data and pilot tones whose indexes are [-122:-4, 4:122] may be used as an initial tone set, and a data tone set and a pilot tone set that adapt to a distributed RU of a corresponding size are selected from the initial tone set. For example, for a DRU whose distributed RU size is 26-tone, the 20 MHz bandwidth may include nine 26-tone DRUs, and each 26-tone DRU includes 24 data tones and two pilot tones. For example, 24*9 data tones in [-122:-4, 4:122] may be used as a data tone set, and then a part of the initial tone set [-122:-4, 4:122] except the data tone set is used as a pilot tone set. A data tone set and a pilot tone set of a larger distributed RU may be adjusted based on the data tone set and the pilot tone set of the 26-tone DRU, or a corresponding data tone set and a corresponding pilot tone set are re-determined based on a DRU of a corresponding size (for example, a 52-tone RU, a 106-tone RU, or a 242-tone RU). This is not limited in this application. Further, under a condition that a transmit power of the STA can be increased, tones that are specifically used as the data tone set and the pilot tone set is not limited in this application. For example, a 26-tone DRU is used as an example. A middle part whose index is [-122:-4, 4:122] may be used as a data tone set at the 20 MHz bandwidth, and a part of the tone set [-122:-4, 4:122] except the data tone set is used as a pilot tone set. The middle part herein may be understood as that positive and negative frequencies (positive and negative tone indexes) are symmetric with respect to a center frequency (a tone whose index is 0) as a boundary. Alternatively, the data tone set may not be exactly the middle part of [-122:-4, 4:122]. Instead, the middle part with several tones translated either leftward or rightward is also possible. In other words, the negative tone index and the positive tone index of the data tone set are not completely symmetric.

In this embodiment of this application, specific description is given by using an example in which a part of tones on positive and negative frequency bands (namely, tones whose indexes are [-122:-4, 4:122]) are used as a data tone set at the 20 MHz bandwidth and a part of the tone set [-122:-4, 4:122] except the data tone set is used as a pilot tone set.

Optionally, in a tone plan for a distributed RU on a 20 MHz bandwidth (20 MHz tone plan), 216 tones whose indexes are [-115:-8, 8:115] are used as a data tone set at the 20 MHz bandwidth, 18 of 22 tones whose tone range is [-122:-116, -7:-4, 4:7, 114:122] are used as pilot tones, and the other four tones are used as null tones (for a 26-tone RU and a 52-tone RU) or are used as supplementary tones of two 106-tone RUs.

It should be noted that, in another 20 MHz tone plan, 216 tones whose indexes are [-117:-10, 10:117] (or [-113:-6, 6:113]) may be used as a data tone set at the 20 MHz bandwidth, 18 of 22 tones whose tone range is [-122:-118, -9:-4, 4:9, 118:122] (or [-122:-114, -5:-4, 4:5, 114:122]) are used as pilot tones, and the other four tones are used as null tones (for a 26-tone RU and a 52-tone RU), or are used as supplementary tones of two 106-tone RUs. In the following embodiment, only an implementation process of "using 216 tones whose indexes are [-115:-8, 8:115] as a data tone set at the 20 MHz bandwidth" is used as an example for description.

For example, two principles are used for designing the tone plan of the DRUs. One is that an amplification multiple is increased as much as possible. That is, for a DRU of any size at any bandwidth, a quantity of tones carrying signals in any 13 consecutive tones of the DRU is minimized as much as possible (in other words, tones included in the DRU are dispersed as much as possible). The other is to reuse existing signaling. A relative relationship between RUs needs to be maintained. That is, a DRU-52 is obtained by splicing two DRUs-26, and a DRU 106 includes two DRUs-52, and so on.

In a design process, to increase the amplification multiple, for the 20 M bandwidth, tones in a central area of positive and negative frequency parts are first evenly grouped. In the 20 MHz tone plan, tone indexes included in a 26-tone DRU at the 20 MHz bandwidth are shown in the following rows of data numbered (1) to (36), including:

| | | | | | | |
|------|------|-----|-----|----|----|-----|
| (1)  | -115 | -79 | -43 | 8  | 44 | 80  |
| (2)  | -114 | -78 | -42 | 9  | 45 | 81  |
| (3)  | -113 | -77 | -41 | 10 | 46 | 82  |
| (4)  | -112 | -76 | -40 | 11 | 47 | 83  |
| (5)  | -111 | -75 | -39 | 12 | 48 | 84  |
| (6)  | -110 | -74 | -38 | 13 | 49 | 85  |
| (7)  | -109 | -73 | -37 | 14 | 50 | 86  |
| (8)  | -108 | -72 | -36 | 15 | 51 | 87  |
| (9)  | -107 | -71 | -35 | 16 | 52 | 88  |
| (10) | -106 | -70 | -34 | 17 | 53 | 89  |
| (11) | -105 | -69 | -33 | 18 | 54 | 90  |
| (12) | -104 | -68 | -32 | 19 | 55 | 91  |
| (13) | -103 | -67 | -31 | 20 | 56 | 92  |
| (14) | -102 | -66 | -30 | 21 | 57 | 93  |
| (15) | -101 | -65 | -29 | 22 | 58 | 94  |
| (16) | -100 | -64 | -28 | 23 | 59 | 95  |
| (17) | -99  | -63 | -27 | 24 | 60 | 96  |
| (18) | -98  | -62 | -26 | 25 | 61 | 97  |
| (19) | -97  | -61 | -25 | 26 | 62 | 98  |
| (20) | -96  | -60 | -24 | 27 | 63 | 99  |
| (21) | -95  | -59 | -23 | 28 | 64 | 100 |
| (22) | -94  | -58 | -22 | 29 | 65 | 101 |
| (23) | -93  | -57 | -21 | 30 | 66 | 102 |
| (24) | -92  | -56 | -20 | 31 | 67 | 103 |
| (25) | -91  | -55 | -19 | 32 | 68 | 104 |

(continued)

| | | | | | | |
|---|---|---|---|---|---|---|
| (26) | -90 | -54 | -18 | 33 | 69 | 105 |
| (27) | -89 | -53 | -17 | 34 | 70 | 106 |
| (28) | -88 | -52 | -16 | 35 | 71 | 107 |
| (29) | -87 | -51 | -15 | 36 | 72 | 108 |
| (30) | -86 | -50 | -14 | 37 | 73 | 109 |
| (31) | -85 | -49 | -13 | 38 | 74 | 110 |
| (32) | -84 | -48 | -12 | 39 | 75 | 111 |
| (33) | -83 | -47 | -11 | 40 | 76 | 112 |
| (34) | -82 | -46 | -10 | 41 | 77 | 113 |
| (35) | -81 | -45 | -9 | 42 | 78 | 114 |
| (36) | -80 | -44 | -8 | 43 | 79 | 115 |

Optionally, in a construction process of the DRU-26, 24 tones included in each DRU-26 may be referred to as grouped tones (grouped subcarriers), and the other two tones are referred to as ungrouped tones (ungrouped subcarriers). In the construction process of the DRU-26, to increase the amplification multiple, a symmetric splicing principle is used, so that grouped subcarriers of each DRU-26 form an overall translation relationship. For a detailed design, refer to Table 6, which indicates the 26-tone DRU at the 20 M bandwidth.

As shown in Table 6, in the foregoing rows of data numbered (1) to (36), tones whose row numbers are 1, 10, 19, and 28 may be a first DRU-26, and are denoted as DRU26-1, and the DRU26-1 further includes tones whose tone indexes are -7 and 118. Tones whose row numbers are 2, 11, 20, and 29 may be a second DRU-26, and are denoted as DRU26-2, and the DRU26-2 further includes tones whose tone indexes are -6 and 119. By analogy, tones whose row numbers are 9, 18, 27, and 36 may be a ninth DRU-26, and are denoted as DRU26-9, and the DRU26-9 further includes tones whose tone indexes are -118 and 7.

**Table 6**

| | DRU 26-1 | DRU 26-2 | DRU 26-3 | DRU 26-4 | DRU 26-5 | DRU 26-6 | DRU 26-7 | DRU 26-8 | DRU 26-9 |
|---|---|---|---|---|---|---|---|---|---|
| Grouped subcarriers | 1, 10, 19, 28 | 2, 11, 20, 29 | 3, 12, 21, 30 | 4, 13, 22, 31 | 5, 14, 23, 32 | 6, 15, 24, 33 | 7, 16, 25, 34 | 8, 17, 26, 35 | 9, 18, 27, 36 |
| Ungrouped subcarriers | -7, 118 | -6, 119 | -5, 120 | -4, 121 | -122, 122 | -121, 4 | -120, 5 | -119, 6 | -118, 7 |

Optionally, a DRU-52 is obtained by symmetrically splicing the DRUs-26 shown in Table 6. For a detailed design, see Table 7. Grouped subcarriers of the DRU-52 also form an overall translation relationship.

**Table 7**

| | DRU52-1 | DRU52-2 | DRU52-3 | DRU52-4 |
|---|---|---|---|---|
| DRU26 | 1, 6 | 2, 7 | 3, 8 | 4, 9 |

Optionally, two DRUs-52 included in a DRU-106 are obtained by symmetrically splicing the DRUs-52 shown in Table 7. For a detailed design, see Table 8. Grouped subcarriers of the DRU-106 also form an overall translation relationship.

**Table 8**

| | DRU106-1 | DRU106-2 |
|---|---|---|
| DRU-52 | 1, 3 | 2, 4 |
| Supplementary tones | -117, 116 | -116, 117 |

In addition, for other bandwidths (40 M, 80 M, 160 M, and 320 M), data tone groups of the other bandwidths are obtained by translating groups at the 20 M bandwidth, and DRUs of various sizes are also constructed by using a symmetric splicing principle. Therefore, an overall translation relationship of grouped subcarriers can also be maintained.

It may be understood that, based on the 20 MHz tone plan used in the foregoing standard, an access point may schedule any DRU in the 20 MHz tone plan used in the standard, or may schedule a plurality of DRUs that do not conflict with each other, and the DRUs are allocated to one or more different stations. Not conflicting with each other means that there is no same tone or no overlapping (overlap). For example, a DRU106 (namely, the DRU106-1) whose index is 1 is allocated to one or more stations, a DRU52 (namely, the DRU52-2) whose index is 2 is allocated to one or more other stations, a DRU26 (namely, the DRU26-4) whose index is 4 is allocated to one or more other stations, and a DRU26 (namely, the DRU26-9) whose index is 9 is allocated to one or more other stations. Other embodiments are similar and details are not described again.

Specifically, in one uplink scheduling, either contiguous RUs or discrete RUs are used. Usually, contiguous RUs and discrete RUs are not allocated at a same time. Therefore, under the premise of indicating in some way that current RUs are contiguous RUs or discrete RUs, only one piece of resource unit allocation signaling may be required in scheduling information. A person skilled in the art may understand that, in the foregoing implementations, an existing contiguous RU allocation signaling indication field may be reused for DRU allocation, but a meaning of the field is replaced with an indication for the DRU, for example, the indication manner shown in the foregoing Table 5. In this way, additional signaling overheads are reduced on the whole, thereby reducing complexity. DRU allocation signaling may be an uplink RU allocation indication in a trigger frame or another MAC frame (for example, a trigger response scheduling (triggered response scheduling, TRS) field).

As described above, the communication bandwidth between the STA and the AP may include 20 MHz, 40 MHz, 80 MHz, 160 MHz, or 320 MHz. After the STA determines, based on the DRU indication information included in the trigger frame received in step S101, the DRU allocated to the STA, the STA sends the TB PPDU on the DRU in step S102. The TB PPDU includes an LTF. The following describes LTFs included in the TB PPDU.

In a possible implementation, a bandwidth occupied by the DRU is 20 megahertz (MHz), 40 MHz, 80 MHz, 160 MHz, or 320 MHz. The LTF included in the TB PPDU is determined based on the bandwidth occupied by the DRU.

Specifically, because different channel bandwidths occupy different tone indexes, a PAPR of a radio signal is associated with an index of a tone carrying the radio signal. In other words, in different channel bandwidths, tone plans for DRUs may be different. That is, a quantity of tones included in each DRU and positions of the tones may be different. A PAPR of the LTF is associated with an index of a tone carrying the LTF and a sequence value of the LTF. In a process in which the STA generates and sends the TB PPDU, the STA may determine, based on the bandwidth occupied by the DRU, an LTF with a relatively low PAPR in the bandwidth, so that the STA can obtain a benefit of a relatively low PAPR in different bandwidth communication scenarios, to improve system performance.

Optionally, the STA and the AP may pre-configure (or pre-define in a standard, or pre-store) LTFs corresponding to different bandwidths, so that the STA generates and sends the TB PPDU based on the LTF in step S 102. Correspondingly, after the AP receives the TB PPDU in step S102, the AP may perform channel estimation on one or more STAs based on the received TB PPDU sent by the one or more STAs and the LFT included in the TB PPDU.

In a possible implementation, the bandwidth occupied by the DRU includes k distributed resource units, each of the k distributed resource units includes x data tones, an absolute value of an index difference between every two data tones in y data tones in the x data tones is greater than or equal to 2, k, x, and y are all positive integers, and $y \leq x$.

Indexes of y data tones in different distributed resource units in the k distributed resource units form an overall translation relationship.

Optionally, if the y data tones in the different distributed resource units in the k distributed resource units carry a same LTF sequence, peak-to-average power ratios PAPRs of the y data tones in the different distributed resource units in the k distributed resource units are the same.

Optionally, each of the k distributed resource units further includes z pilot tones, and a quantity of tones included in each of the k distributed resource units is a sum of x and z.

Specifically, in the k distributed resource units included in the bandwidth occupied by the DRU, each distributed resource unit includes x data tones. The absolute value of the index difference between every two data tones in the y data tones in the x data tones is greater than or equal to 2, so that there is a large spacing between tones included in each of the k distributed resource units, and sufficient discretization of the tones included in the DRU can be implemented. Therefore, at a same power spectral density, in comparison with a contiguous RU, a maximum power amplification multiple can be implemented, thereby improving transmission efficiency.

In addition, the indexes of the y data tones in the different distributed resource units in the k distributed resource units form an overall translation relationship. Therefore, if the y data tones in the different distributed resource units in the k distributed resource units carry a same LTF sequence, peak-to-average power ratios PAPRs of the y data tones in the different distributed resource units in the k distributed resource units are the same. Therefore, in a process of constructing an LTF corresponding to the bandwidth occupied by the DRU, a sequence set including a plurality of LTF basic sequences having a relatively low PAPR feature may be determined for y data tones included in a distributed resource unit in the k distributed resource units, and an LTF corresponding to y data tones included in another distributed resource unit in the k distributed resource units is determined based on the sequence set, to simplify a construction process of the LTF.

The following describes the LTF for different bandwidths by using an example.

In an implementation, when the STA determines that the DRU indication information included in the trigger frame indicates that the bandwidth occupied by the DRU (allocated) of the STA is 20 MHz, the following condition is met:

when a value of k is 9, a value of x is 24, and a value of y is 24; or
when a value of k is 4, a value of x is 48, and a value of y is 48; or
when a value of k is 2, a value of x is 102, and a value of y is 96.

Specifically, when the bandwidth occupied by the DRU is 20 MHz, the bandwidth may include 256 tones with a tone spacing of 78.125 kilohertz (kHz). If a 26-tone DRU is used as a minimum DRU, the 256 tones may be divided into nine (that is, a value of k is 9) 26-tone DRUs (that is, each DRU includes 26 tones). In addition, each 26-tone DRU includes 24 data tones, and a spacing between any two tones among the 24 tones is greater than or equal to 2, to improve a discrete degree of the tones.

Optionally, each 26-tone DRU further includes two pilot tones.

Similarly, when the bandwidth occupied by the DRU is 20 MHz, 52-tone DRUs (that is, when a value of k is 4, a value of x is 48, and a value of y is 48) and 106-tone DRUs (that is, when a value of k is 2, a value of x is 102, and a value of y is 96) may be further included.

Optionally, each 52-tone DRU further includes four pilot tones, and each 106-tone DRU further includes four pilot tones.

Optionally, an LTF corresponding to the 20 MHz bandwidth includes 256 elements, and values of LTFs (denoted as Proposed Seq 20 MHz) corresponding to tones from a lowest frequency to a highest frequency are:

$$
\begin{aligned}
&\{0 \quad 0 \quad 0 \quad 0 \quad 0 \quad 0 \quad -1 \quad -1 \quad -1 \quad -1 \quad -1 \quad -1 \quad -1 \quad -1 \quad -1 \quad -1 \quad -1 \quad -1 \quad -1 \\
&-1 \quad -1 \quad -1 \quad -1 \quad -1 \quad -1 \quad -1 \quad -1 \quad 1 \quad 1 \quad 1 \quad 1 \quad 1 \\
&\quad 1 \ 1 \quad 1 \quad 1 \quad 1 \quad 1 \quad 1 \quad 1 \quad -1 \quad -1 \quad -1 \quad -1 \quad -1 \quad 1 \quad 1 \quad 1 \quad 1 \quad 1 \quad 1 \quad 1 \\
&1 \quad 1 \quad 1 \quad 1 \quad 1 \quad 1 \quad 1 \quad 1 \quad 1 \quad 1 \quad 1 \quad -1 \\
&\quad -1 \quad -1 \quad -1 \quad 1 \quad 1 \quad 1 \quad 1 \quad -1 \quad -1 \quad -1 \quad -1 \quad -1 \quad 1 \quad 1 \quad 1 \quad 1 \quad -1 \quad 1 \quad 1 \\
&1 \quad 1 \quad -1 \quad -1 \quad -1 \quad -1 \quad 1 \quad 1 \quad 1 \quad 1 \quad 1 \quad 1 \quad 1 \\
&\quad 1 \ 1 \quad -1 \quad 1 \quad 1 \quad 1 \quad 1 \quad -1 \quad -1 \quad -1 \quad -1 \quad 1 \quad 1 \quad 1 \quad 1 \quad 1 \quad -1 \quad -1 \quad -1 \quad -1 \\
&1 \quad -1 \quad -1 \quad -1 \quad -1 \quad -1 \quad -1 \quad -1 \quad -1 \quad 0 \quad 0 \quad 0 \\
&\quad 0 \ 0 \quad 0 \quad 0 \quad 1 \quad 1 \quad -1 \quad -1 \quad -1 \quad -1 \quad 1 \quad 1 \quad 1 \quad -1 \quad -1 \quad 1 \quad 1 \quad -1 \quad -1 \quad 1 \\
&1 \quad 1 \quad 1 \quad 1 \quad -1 \quad -1 \quad 1 \quad 1 \quad -1 \quad -1 \quad -1 \quad 1 \\
&\quad 1 \ -1 \quad -1 \quad -1 \quad -1 \quad 1 \quad 1 \quad 1 \quad 1 \quad 1 \quad -1 \quad -1 \quad 1 \quad 1 \quad -1 \quad -1 \quad -1 \quad 1 \quad 1 \quad -1 \\
&-1 \quad 1 \quad 1 \quad -1 \quad -1 \quad -1 \quad -1 \quad -1 \quad 1 \quad 1 \quad -1 \quad -1 \\
&\quad 1 \ 1 \quad -1 \quad 1 \quad 1 \quad -1 \quad -1 \quad -1 \quad -1 \quad 1 \quad 1 \quad -1 \quad -1 \quad -1 \quad 1 \quad 1 \quad 1 \quad 1 \quad -1 \quad -1 \\
&1 \quad -1 \quad -1 \quad 1 \quad 1 \quad -1 \quad -1 \quad 1 \quad 1 \quad -1 \quad -1 \quad -1 \\
&\quad 1 \ 1 \quad 1 \quad 1 \quad -1 \quad -1 \quad 1 \quad -1 \quad -1 \quad 1 \quad 1 \quad 1 \quad 1 \quad -1 \quad -1 \quad 1 \quad 1 \quad 1 \quad -1 \quad -1 \\
&1 \quad 1 \quad -1 \quad -1 \quad -1 \quad -1 \quad 1 \quad 0 \quad 0 \quad 0 \quad 0 \quad 0 \}.
\end{aligned}
$$

For example, at the 20 M bandwidth, there are two 106-tone DRUs in total. The two 106-tone DRUs do not form an overall translation relationship. Therefore, for a same sequence whose length is 106, PAPRs of the two 106-tone DRUs are different. However, each of the two 106-tone DRUs includes a 96-tone part, and two 96-tone parts form an overall translation relationship. Therefore, for a same sequence whose length is 96, PAPRs of the two 96-tone parts are the same. Each 96-tone part is formed by splicing two 48-tone parts, and the two 48-tone parts form an overall translation relationship. For a same sequence whose length is 48, PAPRs of the two 48-tone parts are the same. It is not difficult to understand that four 48-tone parts included in the two 96-tone parts form an overall translation relationship. For a same sequence whose length is 48, PAPRs of the four 48-tone parts are the same. Each 48-tone part is formed by splicing two 24-tone parts, and the two 24-tone parts form an overall translation relationship. For a same sequence whose length is 24, PAPRs of the two 24-tone parts are the same. It is not difficult to understand that all eight 24-tone parts form an overall translation relationship. For a same sequence whose length is 24, PAPRs of the eight 24-tone parts are the same.

Therefore, at the 20 M bandwidth, a sequence design process of the LTF includes the following processes.

Step 1: First, a sequence set Seq_24 with a length of 24 that includes 1 and -1 and that has a relatively low PAPR when a position is in the 24-tone part is obtained through searching.

Step 2: Considering a case in which there are M (M is an integer greater than 0 and less than $2^{24}$) sequences in Seq_24, $M^2$ sequences whose lengths are 48 may be obtained by splicing any two sequences, and a sequence set Seq_48 that has a relatively low PAPR when a position is in the 48-tone part is selected.

Step 3: Considering a case in which there are N (N is an integer greater than 0 and less than $2^{48}$) sequences in Seq_48, $N^2$ sequences whose lengths are 96 may be obtained by splicing any two sequences, and a sequence set Seq_96 that has a relatively low PAPR when a position is in the 96-tone part is selected.

Step 4: Considering a case in which there are Q (Q is an integer greater than 0 and less than $2^{96}$) sequences in Seq_96 and $2^{10}$ sequences whose lengths are 10 are generated, $Q*2^{10}$ sequences whose lengths are 106 may be obtained through splicing. For a first 106-tone DRU, a sequence S106-1 with a lowest PAPR and a length of 106 is selected from the first 106-tone DRU. For a second 106-tone DRU, a sequence S106-2 with a lowest PAPR and a length of 106 is selected from the second 106-tone DRU. Herein, a screening criterion is to make maximum values of PAPRs of the eight DRUs-26, four DRUs-52, and two DRUs-106 the smallest.

Step 5: For a DRU26-5, considering a case in which there are M sequences included in Seq_24 and four sequences whose lengths are 2 are generated: $2^2 = 4$, $4*M$ sequences whose lengths are 26 may be obtained through splicing, and a sequence with a lowest PAPR is selected as S26-5. S106-1 is placed on the first 106-tone DRU, S106-2 is placed on the second 106-tone DRU, S26-5 is placed on a fifth 26-tone DRU, and the remaining positions are padded with zeros to obtain an LTF sequence with a length of 256 of the 20 M bandwidth.

It should be noted that, in actual application, M, N, and Q in the foregoing processes may be set to relatively small values, for example, integers less than or equal to 100, 1000, or 10000, to reduce complexity. In addition, it can be learned from the foregoing processes that, if a corresponding LTF is determined in an exhaustive manner for 256 tones included in the 20 MHz bandwidth, an order of magnitude of computational complexity of the determining process is at least $2^{256}$, which is far beyond computing power of an existing computer and cannot be implemented. However, in the foregoing sequence-related process, considering a feature that if a same LTF sequence is carried among a plurality of DRUs that form the "overall translation relationship", PAPRs of the plurality of DRUs are the same, by selecting relatively small values for M, N, and Q, the order of magnitude of computational complexity of the foregoing implementation process may be reduced to as low as $2^{24}$. This reduces the computational complexity and greatly improves computing efficiency.

In addition, compared with the EHT-LTF4x sequence, the LTF with 256 elements that corresponds to the 20 MHz bandwidth and that is obtained based on the foregoing design process may reduce a PAPR by about 2 dB, as shown in Table 9.

**Table 9**

|  | Proposed Seq 20 MHz | EHT-LTF4x (HE-LTF4x) |
|---|---|---|
| Max PAPR of DRU26 | 6.21 | 8.54 |
| Max PAPR of DRU52 | 5.98 | 8.65 |
| Max PAPR of DRU106 | 5.24 | 7.84 |

In an implementation, when the STA determines that the DRU indication information included in the trigger frame indicates that the bandwidth occupied by the DRU (allocated) of the STA is 40 MHz, the following condition is met:

when a value of k is 18, a value of x is 24, and a value of y is 24; or
when a value of k is 8, a value of x is 48, and a value of y is 48; or
when a value of k is 4, a value of x is 102, and a value of y is 96.

Specifically, when the bandwidth occupied by the DRU is 40 MHz, the bandwidth may include 512 tones with a tone spacing of 78.125 kHz. If a 26-tone DRU is used as a minimum DRU, the 256 tones may be divided into 18 (that is, a value of k is 18) 26-tone DRUs (that is, each DRU includes 26 tones). In addition, each 26-tone DRU includes 24 data tones, and a spacing between any two tones among the 24 tones is greater than or equal to 2, to improve a discrete degree of the tones.

Optionally, each 26-tone DRU further includes two pilot tones.

Similarly, when the bandwidth occupied by the DRU is 40 MHz, 52-tone DRUs (that is, when a value of k is 8, a value of x is 48, and a value of y is 48) and 106-tone DRUs (that is, when a value of k is 4, a value of x is 102, and a value of y is 96) may be further included.

Optionally, each 52-tone DRU further includes four pilot tones, and each 106-tone DRU further includes four pilot tones.

Optionally, a bandwidth occupied by the DRU is 40 MHz, an LTF corresponding to the 40 MHz bandwidth includes 512 elements, and values of LTFs (denoted as Proposed Seq 40 MHz) corresponding to tones from a lowest frequency to a highest frequency are:

$$
\begin{aligned}
&\{0 \quad 0 \quad 0 \quad 0 \quad 0 \quad 0 \quad 0 \quad 0 \quad 0 \quad 0 \quad 0 \quad 0 \quad 0 \quad -1 \quad -1 \quad -1 \quad -1 \quad -1 \quad -1 \\
&-1 \quad -1 \quad -1 \quad -1 \quad -1 \quad -1 \quad -1 \quad -1 \quad -1 \quad -1 \quad -1 \quad -1 \quad 1 \quad 1 \quad 1 \quad 1 \quad 1 \quad 1 \quad 1 \quad 1 \quad 1 \\
&1 \quad 1 \quad 1 \quad 1 \quad 1 \quad 1 \quad 1 \quad 1 \quad 1 \quad 1 \quad 1 \quad 1 \quad 1 \quad 1 \quad 1 \quad 1 \quad 1 \quad 1 \quad 1 \quad 1 \\
&1 \quad 1 \quad 1 \\
&1 \ 1 \quad 1 \quad 1 \quad 1 \quad 1 \quad 1 \quad 1 \quad 1 \quad 1 \quad 1 \quad 1 \quad 1 \quad 1 \quad 1 \quad 1 \quad 1 \quad 1 \quad 1 \\
&1 \quad 1 \quad 1 \quad 1 \quad 1 \quad 1 \quad 1 \quad 1 \quad 1 \quad 1 \quad 1 \quad 1 \quad 1 \quad 1 \quad 1 \quad 1 \quad 1 \quad 1 \quad -1 \quad -1 \\
&-1 \quad -1 \quad -1 \quad -1 \quad -1 \quad -1 \quad -1 \quad -1 \quad -1 \quad -1 \quad -1 \quad -1 \quad -1 \quad -1 \quad -1 \quad -1 \quad -1 \quad -1 \quad -1 \quad -1 \quad 0 \\
&0 \quad 0 \\
&-1 \quad -1 \quad -1 \quad 1 \quad -1 \quad -1 \quad -1 \quad -1 \quad -1 \quad -1 \quad -1 \quad -1 \quad -1 \quad -1 \quad -1 \quad -1 \quad -1 \quad 1 \quad 1 \\
&1 \quad 1 \quad -1 \quad 1 \quad 1 \quad 1 \quad 1 \quad 1 \quad 1 \quad 1 \quad 1 \quad 1 \quad 1 \quad 1 \quad 1 \quad -1 \quad -1 \quad -1 \quad -1 \quad 1 \\
&-1 \quad -1 \quad -1 \quad -1 \quad 1 \quad 1 \quad 1 \quad 1 \quad 1 \quad 1 \quad 1 \quad 1 \quad 1 \quad -1 \quad -1 \quad -1 \quad -1 \quad 1 \quad -1 \quad -1 \quad -1 \\
&-1 \quad 1 \quad 1 \\
&1 \ 1 \quad 1 \quad 1 \quad 1 \quad 1 \quad 1 \quad -1 \quad -1 \quad -1 \quad -1 \quad 1 \quad -1 \quad -1 \quad -1 \quad -1 \quad 1 \quad 1 \quad 1 \quad 1 \\
&1 \quad 1 \quad 1 \quad 1 \quad 1 \quad -1 \quad -1 \quad -1 \quad -1 \quad 1 \quad -1 \quad -1 \quad -1 \quad -1 \quad -1 \quad -1 \quad -1 \quad -1 \quad -1 \quad -1 \\
&-1 \quad -1 \quad 1 \quad 1 \quad 1 \quad 1 \quad -1 \quad 1 \quad 1 \quad 1 \quad 1 \quad -1 \quad -1 \quad -1 \quad -1 \quad -1 \quad -1 \quad 1 \quad 1 \quad 1 \quad 1
\end{aligned}
$$

0    0

0 0    0    –1   –1   –1   1    –1   1    1    1    0    0    –1   –1   –1   –1   –1   1    1

1    1    –1   –1   –1   –1   1    1    1    1    1    1    1    1    1    1    –1   –1   –1   –1   1

1    1    1    –1   –1   –1   –1   –1   1    1    1    1    1    –1   –1   –1   –1   1    1    1    1

–1   –1

–1    –1   –1   1    1    1    1    1    –1   –1   –1   –1   1    1    1    1    –1   –1   –1

–1   –1   1    1    1    1    1    –1   –1   –1   –1   1    1    1    1    –1   –1   –1   –1   –1   –1

–1   –1   –1   –1   1    1    1    1    –1   –1   –1   –1   1    1    1    1    1    1    –1   –1   –1

1    –1   –1

–1    –1   –1   –1   –1   –1   0    0    1    1    1    1    1    –1   –1   –1   –1   –1   –1

–1   –1   –1   1    1    1    1    –1   –1   –1   –1   –1   1    1    1    1    1    1    1    1    1

–1   –1   –1   –1   –1   –1   –1   –1   –1   1    1    1    1    1    1    1    1    1    –1   –1   –1

–1   –1   –1

–1    –1   –1   1    1    1    1    1    1    1    1    1    –1   –1   –1   –1   –1   –1   –1

–1   –1   1    1    1    1    1    1    1    1    1    –1   –1   –1   –1   1    1    1    1    1    –1

–1   –1   –1   –1   –1   –1   –1   –1   1    1    1    1    –1   0    0    0    0    0    0    0    0

0    0    0}.

For example, at the 40 M bandwidth, there are four 106-tone DRUs in total. The four 106-tone DRUs do not form an overall translation relationship. Therefore, for a same sequence whose length is 106, PAPRs of the four 106-tone DRUs are different. However, each of the four 106-tone DRUs includes a 96-tone part, and the four 96-tone parts form an overall translation relationship. Therefore, for a same sequence whose length is 96, PAPRs of the four 96-tone parts are the same. Each 96-tone part is formed by splicing two 48-tone parts, and the two 48-tone parts form an overall translation relationship. For a same sequence whose length is 48, PAPRs of the two 48-tone parts are the same. It is not difficult to understand that eight 48-tone parts included in the four 96-tone parts form an overall translation relationship. For a same sequence whose length is 48, PAPRs of the eight 48-tone parts are the same. Each 48-tone part is formed by splicing two 24-tone parts, and the two 24-tone parts form an overall translation relationship. For a same sequence whose length is 24, PAPRs of the two 24-tone parts are the same. It is not difficult to understand that all 16 24-tone parts form an overall translation relationship. For a same sequence whose length is 24, PAPRs of the 16 24-tone parts are the same.

Therefore, at the 40 MHz bandwidth, a sequence design process of the LTF includes the following processes.

Step 1: First, a sequence set Seq_24 with a length of 24 that includes 1 and -1 and that has a relatively low PAPR when a position is in the 24-tone part is obtained through searching. It should be noted that a position of the 24-tone at the 40 M is different from a position of the 24-tone at the 20 M, and searching needs to be performed again in each bandwidth.

Step 2: Considering a case in which there are M sequences in Seq_24, $M^2$ sequences whose lengths are 48 may be obtained by splicing any two sequences, and a sequence set Seq_48 that has a relatively low PAPR when a position is in the 48-tone part is selected.

Step 3: Considering a case in which there are N sequences in Seq_48, $N^2$ sequences whose lengths are 96 may be obtained by splicing any two sequences, and a sequence set Seq_96 that has a relatively low PAPR when a position is in the 96-tone part is selected.

Step 4: Considering a case in which there are Q sequences in Seq_96 and $2^{10}$ sequences whose lengths are 10 are generated, $Q \cdot 2^{10}$ sequences whose lengths are 106 may be obtained through splicing. For a first 106-tone DRU, a sequence S106-1 with a lowest PAPR and a length of 106 is selected from the first 106-tone DRU. For a second 106-tone DRU, a sequence S106-2 with a lowest PAPR and a length of 106 is selected from the second 106-tone DRU. For a third 106-tone DRU, a sequence S106-3 with a lowest PAPR and a length of 106 is selected from the third 106-tone DRU. For a fourth 106-tone DRU, a sequence S106-4 with a lowest PAPR and a length of 106 is selected from the fourth 106-tone DRU. Herein, a screening criterion is to make maximum values of PAPRs of the 16 DRUs-26, eight DRUs-52, and four DRUs-106 the smallest.

Step 5: For a DRU26-5 and a DRU26-14, considering a case in which there are M sequences included in Seq_24 and four sequences whose lengths are 2 are generated: $2^2 = 4$, 4*M sequences whose lengths are 26 may be obtained through splicing. For the DRU26-5, a sequence with a lowest PAPR is selected as S26-5. For the DRU26-14, a sequence with a lowest PAPR is selected as S26-14. S106-1 is placed on the first 106-tone DRU, S106-2 is placed on the second 106-tone DRU, S106-3 is placed on the third 106-tone DRU, and S106-4 is placed on the fourth 106-tone DRU. S26-5 is placed on a fifth 26-tone DRU, S26-14 is placed on a fourteenth 26-tone DRU, and the remaining positions are padded with zeros to obtain an LTF sequence with a length of 512 of the 40 M bandwidth.

It should be noted that, in actual application, M, N, and Q in the foregoing processes may be set to relatively small values, for example, integers less than or equal to 100, 1000, or 10000, to reduce complexity. In addition, it can be learned from the foregoing processes that, if a corresponding LTF is determined in an exhaustive manner for 256 tones included in the 40 MHz bandwidth, an order of magnitude of computational complexity of the determining process is at least $2^{512}$, which is far beyond computing power of an existing computer and cannot be implemented. However, in the foregoing sequence-related process, considering a feature that if a same LTF sequence is carried among a plurality of DRUs that form the "overall translation relationship", PAPRs of the plurality of DRUs are the same, by selecting relatively small values for M, N, and Q, the order of magnitude of computational complexity of the foregoing implementation process may be reduced to as low as $2^{24}$. This reduces the computational complexity and greatly improves computing efficiency.

In addition, compared with the EHT-LTF4x sequence, the LTF with 512 elements that corresponds to the 40 MHz bandwidth and that is obtained based on the foregoing design process may reduce a PAPR by about 1 dB, as shown in Table 10.

**Table 10**

|  | Proposed Seq 40 MHz | EHT-LTF4x (HE-LTF4x) |
|---|---|---|
| Max PAPR of DRU26 | 7.23 | 8.80 |
| Max PAPR of DRU52 | 7.67 | 7.86 |
| Max PAPR of DRU106 | 6.88 | 8.53 |

In an implementation, when the STA determines that the DRU indication information included in the trigger frame indicates that the bandwidth occupied by the DRU (allocated) of the STA is 80 MHz, the following condition is met:

when a value of k is 36, a value of x is 24, and a value of y is 24; or
when a value of k is 16, a value of x is 48, and a value of y is 48; or
when a value of k is 8, a value of x is 102, and a value of y is 96; or
when a value of k is 4, a value of x is 234, and a value of y is 192.

Specifically, when the bandwidth occupied by the DRU is 80 MHz, the bandwidth may include 1,024 tones with a tone spacing of 78.125 kHz. If a 26-tone DRU is used as a minimum DRU, the 256 tones may be divided into 36 (that is, a value of k is 36) 26-tone DRUs (that is, each DRU includes 26 tones). In addition, each 26-tone DRU includes 24 data tones, and a spacing between any two tones among the 24 tones is greater than or equal to 2, to improve a discrete degree of the tones.

Optionally, each 26-tone DRU further includes two pilot tones.

Similarly, when the bandwidth occupied by the DRU is 80 MHz, 52-tone DRUs (that is, when a value of k is 16, a value of x is 48, and a value of y is 48), 106-tone DRUs (that is, when a value of k is 8, a value of x is 102, and a value of y is 96), and 242-tone DRUs (that is, when a value of k is 4, a value of x is 234, and a value of y is 192) may be further included.

Optionally, each 52-tone DRU further includes four pilot tones, each 106-tone DRU further includes four pilot tones, and each 242-tone DRU further includes eight pilot tones.

Optionally, a bandwidth occupied by the DRU is 80 MHz, an LTF corresponding to the 80 MHz bandwidth includes 1,024 elements (denoted as Proposed Seq 80 MHz), and values of LTFs carried by tones from a lowest frequency to a highest frequency are:

{0 0 0 0 0 0 0 0 0 0 0 0 0 −1 −1 −1 −1 1 −1
−1 −1 −1 −1 −1 −1 −1 −1 −1 −1 −1 −1 1 1 1 1 −1 1 1 1 1
1 1 1 1 1 1 1 1 1 1 1 1 −1 1 1 1 1 1 1 1 1
1 1 1 1 1 1 1 1 1 1 −1 1 1 1 1 1 1 1 1 1 1
1 1 1 1 1 1 1 −1 1 1 1 1 1 1 1 1 1 1 1 1 1
−1 −1 −1 −1 1 −1 −1 −1 −1 −1 −1 −1 −1 −1 −1 −1 −1 −1 0 0 0
0 0 0 0

−1 −1 −1 −1 1 −1 1 −1 −1 −1 −1 −1 1 1 −1 1 −1 −1 −1
−1 −1 1 1 −1 1 −1 1 1 1 1 −1 −1 1 −1 1 1 1 1 1 −1
−1 1 −1 1 1 1 1 1 −1 −1 1 −1 1 1 1 1 1 −1 −1 1 −1
1 1 1 1 1 −1 −1 1 −1 1 1 1 1 1 1 −1 −1 1 −1 1 1 1
1 1 −1 −1 1 −1 1 1 1 1 1 −1 −1 1 −1 1 −1 −1 −1 −1 1
1 −1 1 −1 −1 −1 −1 −1 1 1 −1 1 −1 −1 −1 1 −1 −1 −1 −1 1
−1 1 0 0

0 0 0 −1 −1 −1 −1 1 −1 −1 1 0 0 −1 −1 −1 −1 −1 −1 −1
−1 −1 −1 1 −1 1 1 −1 1 −1 1 1 1 1 1 1 1 1 1 1 1
−1 1 −1 −1 1 −1 1 −1 1 1 1 1 1 1 1 1 1 1 −1 1 −1
−1 1 −1 1 −1 1 1 1 1 1 1 1 1 1 −1 1 −1 −1 1 −1
1 −1 1 1 1 1 1 1 1 1 1 −1 1 −1 −1 1 −1 1 −1 −1
−1 −1 −1 −1 −1 −1 −1 −1 −1 1 −1 1 1 −1 1 −1 1 −1 −1 −1 −1
−1 −1 −1

−1 −1 −1 0 0 0 0 0 1 1 1 1 1 −1 1 −1 1 1 −1
1 −1 1 −1 −1 −1 −1 −1 −1 −1 −1 −1 1 −1 1 −1 −1 1 −1 1 −1
1 1 1 1 −1 −1 −1 −1 −1 1 −1 1 −1 −1 1 −1 1 −1 1 1 1
1 −1 −1 −1 −1 −1 1 −1 1 −1 −1 1 −1 1 −1 1 1 1 1 −1 −1
−1 −1 −1 1 −1 1 −1 −1 1 −1 1 −1 1 1 1 1 1 1 1 1
−1 1 −1 1 1 −1 1 −1 1 −1 −1 −1 −1 −1 −1 −1 −1 −1 −1 −1
−1 −1 0 0

0 0 0 −1 −1 −1 −1 −1 −1 −1 −1 −1 −1 1 −1 1 1 −1 1 1
1 −1 −1 −1 −1 1 1 −1 1 −1 −1 −1 1 −1 −1 1 −1 −1 −1 1 1
1 1 −1 −1 1 −1 1 1 −1 1 −1 −1 1 −1 −1 −1 1 1 1 1 −1
−1 1 −1 1 1 −1 1 1 −1 −1 1 −1 −1 −1 1 1 1 1 −1 −1 1 −1
1 1 −1 1 −1 −1 1 1 −1 −1 −1 1 1 1 1 −1 −1 1 −1 1 1 1
−1 1 1 −1 1 1 1 −1 −1 −1 −1 1 1 −1 1 −1 −1 −1 1 −1 −1

0  0  0

1 –1 –1 –1 –1 1  –1 1  1  1  1  –1 1  –1 –1 –1 1  –1 1  –1

–1 1  1  –1 1  1  –1 –1 –1 1  –1 1  1  1  –1 1  –1 1  1  –1 –1

1  –1 –1 –1 –1 –1 1  –1 1  1  1  –1 1  –1 1  1  –1 –1 1  –1 –1

–1 –1 –1 1  –1 1  1  1  –1 1  –1 1  1  –1 –1 1  –1 –1 –1 –1 –1

1  –1 1  1  1  –1 1  –1 1  1  –1 –1 1  –1 –1 1  1  1  –1 1  –1

–1 –1 1  –1 1  –1 –1 1  1  –1 1  1  –1 1  –1 1  –1 1  –1 1  1

–1 –1 –1

–1   –1 0  –1 –1 –1 –1 –1 –1 –1 –1 0  0  –1 –1 –1 1  1  –1

1  –1 –1 1  1  1  –1 1  1  –1 1  1  1  1  1  –1 –1 1  –1 1  1

–1 –1 –1 1  –1 –1 1  –1 –1 1  1  1  –1 –1 1  –1 1  1  –1 –1 –1

1  –1 –1 1  –1 –1 1  1  1  –1 –1 1  –1 1  1  –1 –1 –1 1  –1 –1

1  –1 –1 1  1  1  –1 –1 1  –1 1  1  –1 –1 –1 1  –1 –1 1  –1 –1

–1 –1 –1 1  1  –1 1  –1 –1 1  1  1  –1 1  1  –1 1  1  –1 –1 –1

–1 –1 –1 –1

–1   –1 –1 –1 –1 –1 –1 0  1  –1 1  1  1  –1 1  –1 –1 –1 1

–1 –1 –1 1  –1 1  1  –1 1  –1 –1 –1 1  –1 1  1  1  –1 1  1  1

–1 1  –1 –1 –1 1  –1 –1 –1 1  –1 1  1  1  –1 1  1  1  –1 1  –1

–1 –1 1  –1 –1 –1 1  –1 1  1  1  –1 1  1  1  –1 1  –1 –1 –1 1

–1 –1 –1 1  –1 1  1  1  –1 1  1  –1 1  –1 –1 1  –1 1  1  1

–1 1  –1 –1 –1 1  –1 –1 –1 1  –1 1  1  0  0  0  0  0  0  0  0

0  0  0  0}.

For example, at the 80 M bandwidth, there are four 242-tone DRUs in total. The four 242-tone DRUs do not form an overall translation relationship. Therefore, for a same sequence whose length is 242, PAPRs of the four 242-tone DRUs are different. However, each of the four 242-tone DRUs includes a 192-tone part, and four 192-tone parts form an overall translation relationship. Therefore, for a same sequence whose length is 192, PAPRs of the four 192-tone parts are the same. Each of the four 242-tone DRUs further includes a 24-tone part, and four 24-tone parts form an overall translation relationship. Therefore, for a same sequence whose length is 24, PAPRs of the four 24-tone parts are the same. Each 192-tone part is formed by splicing two 96-tone parts, and the two 96-tone parts form an overall translation relationship. For a same sequence whose length is 96, PAPRs of the two 96-tone parts are the same. It is not difficult to understand that eight 96-tone parts included in the four 192-tone parts form an overall translation relationship. For a same sequence whose length is 96, PAPRs of the eight 96-tone parts are the same. Each 96-tone part is formed by splicing two 48-tone parts, and the two 48-tone parts form an overall translation relationship. For a same sequence whose length is 48, PAPRs of the two 48-tone parts are the same. It is not difficult to understand that 16 48-tone parts included in the eight 96-tone parts form an overall translation relationship. For a same sequence whose length is 48, PAPRs of the 16 48-tone parts are the same. Each 48-tone part is formed by splicing two 24-tone parts, and the two 24-tone parts form an overall translation relationship. For a same sequence whose length is 24, PAPRs of the two 24-tone parts are the same. It is not difficult to understand that all 32 24-tone parts form an overall translation relationship. For a same sequence whose length is 24, PAPRs of the 32 24-tone parts are the same.

Therefore, at the 80 MHz bandwidth, a sequence design process of the LTF includes the following processes.

Step 1: First, a sequence set Seq_24 with a length of 24 that includes 1 and -1 and that has a relatively low PAPR when a position is in the 24-tone part is obtained through searching.

Step 2: Considering a case in which there are M sequences in Seq_24, $M^2$ sequences whose lengths are 48 may be obtained by splicing any two sequences, and a sequence set Seq_48 that has a relatively low PAPR when a position is in the 48-tone part is selected.

Step 3: Considering a case in which there are N sequences in Seq_48, $N^2$ sequences whose lengths are 96 may be obtained by splicing any two sequences, and a sequence set Seq_96 that has a relatively low PAPR when a position is in the 96-tone part is selected.

Step 4: Considering a case in which there are T sequences in Seq_96, $T^2$ sequences whose lengths are 192 may be obtained by splicing any two sequences, and a sequence set Seq_192 that has a relatively low PAPR when a position is in the 192-tone part is selected.

Step 5: Considering a case in which there are Q sequences in Seq_192 and there are M sequences in Seq_24, Q•M sequences whose lengths are 216 may be obtained through splicing. For a first 216-tone, a sequence set Seq_216_1 with a relatively low PAPR and a length of 216 is selected from the first 216-tone. For a second 216-tone, a sequence set Seq_216_2 with a relatively low PAPR and a length of 216 is selected from the second 216-tone. For a third 216-tone, a sequence set Seq_216_3 with a relatively low PAPR and a length of 216 is selected from the third 216-tone. For a fourth 216-tone, a sequence set Seq_216_4 whose length is 216 and whose PAPR is relatively low is selected from the fourth 216-tone.

Step 6: For a DRU242-1, considering a case in which there are U sequences included in Seq_216_1 and V sequences whose lengths are 26 are generated, U*V sequences whose lengths are 242 may be obtained through splicing, and a sequence with a lowest PAPR is obtained through screening and used as S242-1. Herein, a screening criterion is to make maximum values of PAPRs of 36 DRUs-26, 16 DRUs-52, eight DRUs-106, and four DRUs-242 the smallest. Similarly, S242-2, S242-3, and S242-4 may be obtained. S242-1 is placed on a first 242-tone DRU, S242-2 is placed on a second 242-tone DRU, S242-3 is placed on a third 242-tone DRU, S242-4 is placed on a fourth 242-tone DRU, and the remaining positions are padded with zeros to obtain an LTF sequence with a length of 1024 of the 80 M bandwidth.

It should be noted that, in actual application, M, N, Q, U, and V in the foregoing processes may be set to relatively small values, for example, integers less than or equal to 100, 1000, or 10000, to reduce complexity. In addition, it can be learned from the foregoing processes that, if a corresponding LTF is determined in an exhaustive manner for 1,024 tones included in the 80 MHz bandwidth, an order of magnitude of computational complexity of the determining process is at least $2^{1024}$, which is far beyond computing power of an existing computer and cannot be implemented. However, in the foregoing sequence-related process, considering a feature that if a same LTF sequence is carried among a plurality of DRUs that form the "overall translation relationship", PAPRs of the plurality of DRUs are the same, by selecting relatively small values for M, N, Q, U, and V, the order of magnitude of computational complexity of the foregoing implementation process may be reduced to as low as $2^{24}$. This reduces the computational complexity and greatly improves computing efficiency.

In addition, compared with the EHT-LTF4x sequence, the LTF with 1,024 elements that corresponds to the 80 MHz bandwidth and that is obtained based on the foregoing design process may reduce a PAPR by about 2 dB, as shown in Table 11.

**Table 11**

|  | Proposed Seq 80 MHz | EHT-LTF4x (HE-LTF4x) |
| --- | --- | --- |
| Max PAPR of DRU26 | 7.23 | 9.22 |
| Max PAPR of DRU52 | 7.94 | 9.32 |
| Max PAPR of DRU106 | 7.78 | 9.44 |
| Max PAPR of DRU242 | 7.94 | 9.99 |

In an implementation, when the STA determines that the DRU indication information included in the trigger frame indicates that the bandwidth occupied by the DRU (allocated) of the STA is 160 MHz, the following condition is met:

when a value of k is 72, a value of x is 24, and a value of y is 24; or
when a value of k is 32, a value of x is 48, and a value of y is 48; or
when a value of k is 16, a value of x is 102, and a value of y is 96; or
when a value of k is 8, a value of x is 234, and a value of y is 192; or
when a value of k is 4, a value of x is 468, and a value of y is 384.

Specifically, when the bandwidth occupied by the DRU is 160 MHz, the bandwidth may include 2,048 tones with a tone spacing of 78.125 kHz. If a 26-tone DRU is used as a minimum DRU, the 2,048 tones may be divided into 72 (that is, a value of k is 72) 26-tone DRUs (that is, each DRU includes 26 tones). In addition, each 26-tone DRU includes 24 data tones, and a spacing between any two tones among the 24 tones is greater than or equal to 2, to improve a discrete degree of the tones.

Optionally, each 26-tone DRU further includes two pilot tones.

Similarly, when the bandwidth occupied by the DRU is 160 MHz, 52-tone DRUs (that is, when a value of k is 32, a value of x is 48, and a value of y is 48), 106-tone DRUs (that is, when a value of k is 16, a value of x is 102, and a value of y is 96), 242-tone DRUs (that is, when a value of k is 8, a value of x is 234, and a value of y is 192), and 484-tone DRUs (that is, when a value of k is 4, a value of x is 468, and a value of y is 384) may be further included.

Optionally, each 52-tone DRU further includes four pilot tones, each 106-tone DRU further includes four pilot tones, each 242-tone DRU further includes eight pilot tones, and each 484-tone DRU further includes 16 pilot tones.

Optionally, a bandwidth occupied by the DRU is 160 MHz, and a corresponding LTF sequence is denoted as Proposed Seq 160 MHz. For an 80 MHz part with a lower frequency in the 160 MHz, a corresponding LTF includes 1,024 elements, and values of LTFs carried by tones from a lowest frequency to a highest frequency are:

$$
\begin{aligned}
&\{\ 0\ \ 0\ \ 0\ \ 0\ \ 0\ \ 0\ \ 0\ \ 0\ \ 0\ \ 0\ \ 0\ \ 0\ \ 0\ -1\ -1\ -1\ -1\ \ 1\ -1\\
&-1\ -1\ -1\ -1\ -1\ -1\ -1\ \ 1\ -1\ -1\ -1\ -1\ \ 1\ \ 1\ \ 1\ \ 1\ -1\ \ 1\ \ 1\ \ 1\ \ 1\\
&\ 1\ \ 1\ \ 1\ \ 1\ -1\ \ 1\ \ 1\ \ 1\ \ 1\ \ 1\ \ 1\ \ 1\ \ 1\ -1\ \ 1\ \ 1\ \ 1\ \ 1\ \ 1\ \ 1\ \ 1\\
&\ 1\ -1\ \ 1\ \ 1\ \ 1\ \ 1\ \ 1\ \ 1\ \ 1\ \ 1\ -1\ \ 1\ \ 1\ \ 1\ \ 1\ \ 1\ \ 1\ \ 1\ \ 1\ -1\ \ 1\\
&\ 1\ \ 1\ \ 1\ \ 1\ \ 1\ \ 1\ \ 1\ -1\ \ 1\ \ 1\ \ 1\ \ 1\ \ 1\ \ 1\ \ 1\ \ 1\ -1\ \ 1\ \ 1\ \ 1\ \ 1\\
&-1\ -1\ -1\ -1\ \ 1\ -1\ -1\ -1\ -1\ -1\ -1\ -1\ -1\ \ 1\ -1\ -1\ -1\ -1\ -1\ -1\ \ 1\\
&\ 1\ -1\ \ 1\ \ 0\\[4pt]
&\phantom{0000}-1\ \ 1\ \ 1\ \ 1\ -1\ -1\ \ 1\ -1\ -1\ -1\ -1\ -1\ \ 1\ -1\ -1\ -1\ -1\ -1\ -1\\
&-1\ -1\ -1\ -1\ -1\ -1\ -1\ \ 1\ \ 1\ \ 1\ \ 1\ -1\ \ 1\ \ 1\ \ 1\ \ 1\ \ 1\ \ 1\ \ 1\ \ 1\ \ 1\\
&\ 1\ \ 1\ \ 1\ \ 1\ \ 1\ \ 1\ \ 1\ \ 1\ -1\ \ 1\ \ 1\ \ 1\ \ 1\ \ 1\ \ 1\ \ 1\ \ 1\ \ 1\ \ 1\ \ 1\\
&\ 1\ \ 1\ \ 1\ \ 1\ \ 1\ -1\ \ 1\ \ 1\ \ 1\ \ 1\ \ 1\ \ 1\ \ 1\ \ 1\ \ 1\ \ 1\ \ 1\ \ 1\ \ 1\ \ 1\ \ 1\\
&\ 1\ \ 1\ -1\ \ 1\ \ 1\ \ 1\ \ 1\ \ 1\ \ 1\ \ 1\ \ 1\ \ 1\ \ 1\ \ 1\ \ 1\ \ 1\ -1\ -1\ -1\ -1\ \ 1\\
&-1\ -1\ -1\ -1\ -1\ -1\ -1\ -1\ -1\ -1\ -1\ -1\ -1\ \ 1\ \ 1\ \ 1\ \ 1\ -1\ \ 1\ \ 1\ -1\\
&-1\ \ 1\ -1\ -1\\[4pt]
&\phantom{0000}-1\ -1\ \ 0\ -1\ -1\ -1\ -1\ -1\ -1\ -1\ -1\ -1\ -1\ \ 1\ \ 1\ \ 1\ -1\ \ 1\ \ 1\\
&\ 1\ \ 1\ -1\ \ 1\ \ 1\ \ 1\ -1\ -1\ \ 1\ \ 1\ \ 1\ -1\ -1\ -1\ -1\ \ 1\ -1\ -1\ -1\ -1\ \ 1\\
&-1\ -1\ -1\ \ 1\ \ 1\ -1\ -1\ -1\ \ 1\ -1\ -1\ -1\ \ 1\ -1\ -1\ -1\ -1\ \ 1\ -1\ -1\ -1
\end{aligned}
$$

```
1   1  −1  −1  −1  1  −1  −1  −1  1  −1  −1  −1  −1  1  −1  −1  −1  1   1  −1
−1  −1   1  −1  −1  −1  1  −1  −1  −1  −1  1  −1  −1  −1  1   1  −1  −1  −1  1
1   1   1  −1   1   1  1   1  −1   1   1  1  −1  −1   1   1   1  −1  −1  −1  −1
−1  −1  −1  −1

    −1  −1  −1  −1  −1  −1  −1  0  −1  −1  −1  1  −1  −1  −1  −1  1  −1  −1  −1
−1   1  −1  −1  −1  −1  1   1   1  1  −1   1  1   1   1   1  −1   1  1   1  −1  1
1   1   1  −1   1   1  1  −1   1  1   1   1  −1   1  1   1   1  −1   1  1   1   1
−1   1   1   1  −1   1  1   1   1  −1   1  1   1  −1   1  1   1   1   1  −1   1  1
1  −1   1   1   1   1  1  −1   1  1   1  −1   1   1  1   1   1  −1  −1  −1  −1  1  −1
−1  −1  −1   1  −1  −1  −1  1  −1  −1  −1  −1  1   1  1  −1  −1  −1  1  −1  1
1   1   0   0

    0   0   0  −1   1   1  −1   1   1  −1  −1  1   1   1  1   1   1   1   1   1
1   1   1  −1  −1  −1  −1  1  −1  −1  −1  −1  −1  −1  −1  −1  −1  −1  −1  −1  −1
1   1   1   1  −1   1  1   1   1  −1  −1  −1  −1  −1  −1  −1  −1  −1  1   1   1
1  −1   1   1   1   1  −1  −1  −1  −1  −1  −1  −1  −1  −1  1   1   1   1  −1   1
1   1   1  −1  −1  −1  −1  −1  −1  −1  −1  −1  1   1  1   1  −1   1   1   1   1
1   1   1   1   1   1  1   1   1  −1  −1  −1  −1  1  −1  −1  −1  −1  −1  −1  −1
−1   0   0   0

    −1  −1  −1  −1  −1  −1  −1  −1  1  1  −1  1  1   1  1  −1  1  −1  −1
1  −1  −1  −1  −1   1  −1  −1  −1  1  −1  −1  −1  −1  1  −1  1   1  −1  1   1
1   1  −1   1  −1  −1  1  −1  −1  −1  −1  1  −1  1   1  −1  1   1   1   1  −1
1  −1  −1   1  −1  −1  −1  1  −1  1  1  −1  1  1   1  1  −1  1  −1  −1
1  −1  −1  −1  −1   1  −1  1   1  −1  1  1   1  1  −1  1   1   1  −1  1   1
1   1  −1   1  −1  −1  1  −1  −1  −1  −1  1  −1  −1  −1  −1  −1  −1  −1  −1  −1
−1  −1  −1  −1

    −1  −1   0  −1  −1  −1  −1  −1  −1  1  −1  0   0  1   1  −1  −1  1   1
1  −1  −1  −1  −1   1   1   1  −1  −1  1  1  −1  −1  1   1  −1  −1  −1  1   1
1   1  −1  −1  −1   1   1  −1  −1  −1  −1  1   1  −1  −1  −1  1   1   1   1  −1
−1  −1   1   1  −1  −1  −1  −1  1  1  −1  −1  −1  1   1   1   1  −1  −1  −1  1
1  −1  −1  −1  −1   1   1  −1  −1  −1  1  1   1  1  −1  −1  −1  1   1  −1  −1
1   1  −1  −1   1   1   1  −1  −1  −1  −1  1   1   1  −1  −1  1   1  −1  −1  1
−1  −1  −1   1

    1   1   1   0   0   0   0   0  −1  −1  −1  1  −1  −1  −1  −1  1   1   1
1  −1   1   1   1   1  −1  1   1   1  −1  1   1   1  1  −1  −1  −1  −1  1  −1
−1  −1  −1   1   1   1  1  −1   1   1   1  1  −1  −1  −1  −1  1  −1  −1  −1  −1
```

1 1 1 1 −1 1 1 1 1 −1 −1 −1 −1 1 −1 −1 −1 −1 1 1 1

1 −1 1 1 1 1 −1 −1 −1 −1 1 −1 −1 −1 −1 1 −1 −1 −1 1 −1

−1 −1 −1 1 1 1 1 −1 1 1 1 1 −1 0 0 0 0 0 0 0 0

0 0 0 0}.

For an 80 MHz part with a higher frequency in the 160 MHz, a corresponding LTF includes 1,024 elements, and values of LTFs carried by tones from a lowest frequency to a highest frequency are:

{ 0  0  0  0  0  0  0  0  0  0  0  0  0  −1  −1  −1  1  1  1
1  1  −1  −1  −1  −1  1  1  1  1  1  −1  1  1  1  −1  −1  −1  −1  −1  1
1  1  1  −1  −1  −1  −1  −1  1  1  1  1  −1  −1  −1  −1  −1  1  1  1  1
−1  −1  −1  −1  −1  1  1  1  1  −1  −1  −1  −1  −1  1  1  1  1  −1  −1  −1
−1  −1  1  1  1  1  −1  −1  −1  −1  −1  1  1  1  1  −1  −1  −1  −1  −1  1
−1  −1  −1  1  1  1  1  1  −1  −1  −1  −1  1  1  1  1  1  −1  1  1  0
0  0  0  0

1  −1  1  1  1  1  1  1  1  1  −1  −1  −1  −1  −1  1  1  1  1
−1  −1  1  −1  −1  1  1  −1  −1  1  1  1  1  1  −1  −1  −1  −1  1  1  −1
1  1  −1  −1  −1  −1  1  1  1  1  1  −1  −1  −1  −1  1  1  −1  1  1  −1
−1  −1  −1  1  1  1  1  1  −1  −1  −1  −1  1  1  −1  1  1  −1  −1  −1  −1
1  1  1  1  1  −1  −1  −1  −1  1  1  −1  1  1  −1  −1  1  1  −1  −1  −1
−1  −1  1  1  1  1  −1  −1  1  −1  −1  1  1  −1  −1  −1  −1  1  −1  −1  −1
−1  −1  0  0

0  0  0  −1  −1  −1  −1  −1  −1  −1  −1  0  0  1  1  −1  1  1  −1
−1  1  −1  1  1  −1  1  −1  −1  −1  1  −1  −1  −1  1  −1  −1  1  1  −1  1
−1  −1  1  −1  1  1  1  −1  1  −1  −1  1  −1  −1  1  1  −1  1  −1  −1  1
−1  1  1  1  −1  1  −1  −1  1  −1  −1  1  1  −1  1  −1  −1  1  −1  1  1
1  −1  1  −1  −1  1  −1  −1  1  1  −1  1  −1  −1  1  −1  1  1  1  −1  1
1  1  −1  1  1  −1  −1  1  −1  1  1  −1  1  −1  −1  −1  1  −1  −1  −1  −1
−1  −1  −1  −1

−1  −1  −1  0  0  0  0  0  1  1  1  1  1  −1  −1  −1  −1  1  1
1  1  1  −1  −1  −1  −1  −1  −1  −1  −1  −1  1  1  1  1  −1  −1  −1  −1  −1
1  1  1  1  −1  −1  −1  −1  −1  1  1  1  1  −1  −1  −1  −1  −1  1  1  1
1  −1  −1  −1  −1  −1  1  1  1  1  −1  −1  −1  −1  −1  1  1  1  1  −1  −1
−1  −1  −1  1  1  1  1  −1  −1  −1  −1  −1  1  1  1  1  1  1  1  1  1
−1  −1  −1  −1  1  1  1  1  1  −1  −1  −1  −1  −1  −1  −1  −1  −1  −1  −1  −1
1  −1  0  0

0  0  0  −1  −1  −1  1  −1  1  1  −1  0  0  1  1  1  −1  1  −1

−1  −1  1  −1  −1  −1  1  −1  1  1  1  −1  −1  −1  −1  1  −1  1  1  1  −1

1  1  1  −1  1  −1  −1  −1  1  −1  −1  −1  1  −1  1  1  1  −1  1  1  1

−1  1  −1  −1  −1  1  −1  −1  −1  1  −1  1  1  1  −1  1  1  1  −1  1  −1

−1  −1  1  −1  −1  −1  1  −1  1  1  1  −1  1  1  1  −1  1  −1  −1  −1  1

1  1  1  −1  1  −1  −1  −1  1  −1  −1  −1  1  −1  1  1  1  −1  0  0  0

0  0  0  0

−1  −1  1  −1  1  −1  1  −1  −1  −1  −1  1  1  1  1  1  −1  1  1

1  −1  1  −1  −1  −1  1  1  1  1  −1  −1  −1  −1  −1  1  −1  −1  −1  1  −1

1  1  1  −1  1  1  1  −1  −1  −1  −1  −1  1  −1  −1  −1  1  −1  1  1  1

−1  1  1  1  −1  −1  −1  −1  −1  1  −1  −1  −1  1  −1  1  1  1  −1  1  1

1  −1  −1  −1  −1  −1  1  −1  −1  −1  1  −1  1  1  1  −1  −1  −1  −1  1  1

1  1  1  −1  1  1  1  −1  1  −1  −1  −1  1  −1  −1  −1  −1  −1  −1  −1  −1

−1  −1  0  0

0  0  0  −1  −1  −1  −1  −1  −1  −1  −1  0  0  1  1  1  1  −1  −1

−1  −1  −1  −1  −1  −1  −1  1  1  1  1  1  −1  −1  −1  −1  1  1  1  1  1

1  1  1  1  −1  −1  −1  −1  −1  −1  −1  −1  −1  1  1  1  1  1  1  1  1

1  −1  −1  −1  −1  −1  −1  −1  −1  1  1  1  1  1  1  1  1  1  1  −1  −1

−1  −1  −1  −1  −1  −1  −1  1  1  1  1  1  1  1  1  1  −1  −1  −1  −1  −1

1  1  1  1  −1  −1  −1  −1  −1  −1  −1  −1  −1  1  1  1  1  1  −1  −1  −1

−1  −1  −1  −1

−1  −1  −1  0  0  0  0  0  1  1  1  1  1  −1  −1  −1  −1  −1  −1

−1  −1  1  1  1  1  1  −1  −1  −1  −1  −1  1  1  1  1  1  1  1  1  −1

−1  −1  −1  −1  −1  −1  −1  −1  1  1  1  1  1  1  1  1  1  −1  −1  −1  −1

−1  −1  −1  −1  −1  −1  1  1  1  1  1  1  1  1  1  −1  −1  −1  −1  −1  −1  −1

−1  −1  −1  1  1  1  1  1  1  1  1  −1  −1  −1  −1  −1  1  1  1  1  1

−1  −1  −1  −1  −1  −1  −1  −1  1  1  1  1  1  0  0  0  0  0  0  0  0

0  0  0  0}.

For example, at the 160 M bandwidth, there are four 484-tone DRUs in total. The four 484-tone DRUs do not form an overall translation relationship. Therefore, for a same sequence whose length is 484, PAPRs of the four 484-tone DRUs are different. However, each of the four 484-tone DRUs includes a 384-tone part, and four 384-tone parts form an overall translation relationship. Therefore, for a same sequence whose length is 384, PAPRs of the four 384-tone parts are the same. Each of the four 484-tone DRUs further includes a 48-tone part, and four 48-tone parts form an overall translation relationship. Therefore, for a same sequence whose length is 48, PAPRs of the four 48-tone parts are the same. Each 384-tone part is formed by splicing two 192-tone parts, and the two 192-tone parts form an overall translation relationship. For a same sequence whose length is 192, PAPRs of the two 192-tone parts are the same. It is not difficult to understand that eight 192-tone parts included in the four 384-tone parts form an overall translation relationship. For a same sequence whose length is 192, PAPRs of the eight 192-tone parts are the same. Each 192-tone part is formed by splicing two 96-tone parts, and the two 96-tone parts form an overall translation relationship. For a same sequence whose length is 96, PAPRs of the two 96-tone parts are the same. It is not difficult to understand that 16 96-tone parts included in the eight 192-tone parts form an overall translation relationship. For a same sequence whose length is 96, PAPRs of the 16 96-tone parts are the same. Each 96-tone part is formed by splicing two 48-tone parts, and the two 48-tone parts form an overall translation relationship. For a same sequence whose length is 48, PAPRs of the two 48-tone parts are the same. It is not difficult to understand that 32 48-tone parts included in the 16 96-tone parts form an overall translation relationship. For a same sequence whose length is 48, PAPRs of the 32 48-tone parts are the same. Each 48-tone part is formed by splicing two 24-tone parts, and the two 24-tone parts form an overall translation relationship. For a same sequence whose length is 24, PAPRs of the two 24-tone parts are the same. It is not difficult to understand that all 64 24-tone parts form an overall translation relationship. For a same sequence whose length is 24, PAPRs of the 64 24-tone parts are the same.

Therefore, at the 80 MHz bandwidth, a sequence design process of the LTF includes the following processes.

Step 1: First, a sequence set Seq_24 with a length of 24 that includes 1 and -1 and that has a relatively low PAPR when a position is in the 24-tone part is obtained through searching.

Step 2: Considering a case in which there are M sequences in Seq_24, $M^2$ sequences whose lengths are 48 may be obtained by splicing any two sequences, and a sequence set Seq_48 that has a relatively low PAPR when a position is in the 48-tone part is selected.

Step 3: Considering a case in which there are N sequences in Seq_48, $N^2$ sequences whose lengths are 96 may be obtained by splicing any two sequences, and a sequence set Seq_96 that has a relatively low PAPR when a position is in the 96-tone part is selected.

Step 4: Considering a case in which there are T sequences in Seq_96, $T^2$ sequences whose lengths are 192 may be obtained by splicing any two sequences, and a sequence set Seq_192 that has a relatively low PAPR when a position is in the 192-tone part is selected.

Step 5: Considering that there are R sequences in Seq_192, $R^2$ sequences whose lengths are 384 may be obtained by splicing any two sequences, and a sequence set Seq_384 that has a relatively low PAPR when a position is in the 384-tone part is selected.

Step 6: Considering a case in which there are Q sequences in Seq_384 and there are N sequences in Seq_48, Q•N sequences whose lengths are 432 may be obtained through splicing. For a first 432-tone, a sequence set Seq_432_1 with a relatively low PAPR and a length of 432 is selected from the first 432-tone. For a second 432-tone, a sequence set Seq_432_2 with a relatively low PAPR and a length of 432 is selected from the second 432-tone. For a third 432-tone, a sequence set Seq_432_3 with a relatively low PAPR and a length of 432 is selected from the third 432-tone. For a fourth 432-tone, a sequence set Seq_432_4 whose length is 432 and whose PAPR is relatively low is selected from the fourth 432-tone.

Step 7: For a DRU484-1, considering a case in which there are A sequences included in Seq_432_1 and B sequences whose lengths are 52 are generated, A*B sequences whose lengths are 484 may be obtained through splicing, and a sequence with a lowest PAPR is obtained through screening and used as S484-1. Herein, a screening criterion is to make maximum values of PAPRs of 72 DRUs-26, 32 DRUs-52, 16 DRUs-106, eight DRUs-242, and four DRUs-484 the smallest. Similarly, S484-2, S484-3, and S484-4 may be obtained. S484-1 is placed on a first 484-tone DRU, S484-2 is placed on a second 484-tone DRU, S484-3 is placed on a third 484-tone DRU, S484-4 is placed on a fourth 484-tone DRU, and the remaining positions are padded with zeros to obtain an LTF sequence with a length of 2048 of the 160 M bandwidth.

It should be noted that, in actual application, M, N, Q, T, R, A, and B in the foregoing processes may be set to relatively small values, for example, integers less than or equal to 100, 1000, or 10000, to reduce complexity. In addition, it can be learned from the foregoing processes that, if a corresponding LTF is determined in an exhaustive manner for 2,048 tones included in the 160 MHz bandwidth, an order of magnitude of computational complexity of the determining process is at least $2^{2048}$, which is far beyond computing power of an existing computer and cannot be implemented. However, in the foregoing sequence-related process, considering a feature that if a same LTF sequence is carried among a plurality of DRUs that form the "overall translation relationship", PAPRs of the plurality of DRUs are the same, by selecting relatively small values for M, N, Q, T, R, A, and B, the order of magnitude of computational complexity of the foregoing implementation process may be reduced to as low as $2^{24}$. This reduces the computational complexity and greatly improves computing efficiency.

In addition, compared with the EHT-LTF4x sequence, the LTF with 2,048 elements that corresponds to the 160 MHz bandwidth and that is obtained based on the foregoing design process may reduce a PAPR by about 2 dB, as shown in Table 12.

Table 12

|  | Proposed Seq 160 MHz | EHT-LTF4x (HE-LTF4x) |
|---|---|---|
| Max PAPR of DRU26 | 7.23 | 9.24 |
| Max PAPR of DRU52 | 7.90 | 12.23 |
| Max PAPR of DRU106 | 7.37 | 9.81 |
| Max PAPR of DRU242 | 7.96 | 9.38 |
| Max PAPR of DRU484 | 7.87 | 10.09 |

In an implementation, when the STA determines that the DRU indication information included in the trigger frame indicates that the bandwidth occupied by the DRU (allocated) of the STA is 320 MHz, the following condition is met:

when a value of k is 144, a value of x is 24, and a value of y is 24; or
when a value of k is 64, a value of x is 48, and a value of y is 48; or
when a value of k is 32, a value of x is 102, and a value of y is 96; or
when a value of k is 16, a value of x is 234, and a value of y is 192; or
when a value of k is 8, a value of x is 468, and a value of y is 384; or
when a value of k is 4, a value of x is 980, and a value of y is 768.

Specifically, when the bandwidth occupied by the DRU is 320 MHz, the bandwidth may include 4,096 tones with a tone spacing of 78.125 kHz. If a 26-tone DRU is used as a minimum DRU, the 4,096 tones may be divided into 144 (that is, a value of k is 144) 26-tone DRUs (that is, each DRU includes 26 tones). In addition, each 26-tone DRU includes 24 data tones, and a spacing between any two tones among the 24 tones is greater than or equal to 2, to improve a discrete degree of the tones.
Optionally, each 26-tone DRU further includes two pilot tones.
Similarly, when the bandwidth occupied by the DRU is 320 MHz, 52-tone DRUs (that is, when a value of k is 64, a value of x is 48, and a value of y is 48), 106-tone DRUs (that is, when a value of k is 32, a value of x is 102, and a value of y is 96), 242-tone DRUs (that is, when a value of k is 16, a value of x is 234, and a value of y is 192), 484-tone DRUs (that is, when a value of k is 8, a value of x is 468, and a value of y is 384), and 996-tone DRUs (that is, when a value of k is 8, a value of x is 980, and a value of y is 768) DRUs may be further included.
Optionally, each 52-tone DRU further includes four pilot tones, each 106-tone DRU further includes four pilot tones, each 242-tone DRU further includes eight pilot tones, each 484-tone DRU further includes 16 pilot tones, and each 996-tone DRU further includes 16 pilot tones.
Optionally, a bandwidth occupied by the DRU is 320 MHz, and a corresponding LTF is denoted as Proposed Seq 320 MHz. For an 80 MHz part with a lowest frequency in the 320 MHz, a corresponding LTF includes 1,024 elements, and values of LTFs carried by tones from a lowest frequency to a highest frequency are:

{0   0   0   0   0   0   0   0   0   0   0   0   −1  −1  1  −1  1  1  −1

1 −1 1 1 −1 −1 −1 1 −1 1 −1 1 1 −1 1 −1 −1 1 −1 1 −1

−1 1 1 1 −1 1 −1 1 −1 1 −1 1 −1 −1 1 −1 1 −1 −1 1 1

1 −1 1 −1 1 −1 1 −1 1 −1 −1 1 −1 1 −1 −1 1 1 1 −1 1

−1 1 −1 1 −1 1 −1 −1 1 −1 1 −1 −1 1 1 1 −1 1 −1 1 −1

−1 1 −1 1 1 −1 1 −1 1 1 −1 −1 −1 1 −1 1 −1 1 1 −1 −1

−1 −1 1 −1

−1 1 1 1 1 1 1 −1 −1 −1 −1 1 1 −1 −1 −1 1 1 1

−1 −1 −1 −1 −1 −1 1 1 1 1 −1 −1 1 1 1 −1 −1 −1 1 1 1

1 1 1 −1 1 1 1 −1 −1 1 1 1 −1 −1 −1 1 1 1 1 1 1

−1 1 1 1 −1 −1 1 1 1 −1 −1 −1 1 1 1 1 1 1 −1 1 1

1 −1 −1 1 1 1 −1 −1 −1 1 1 1 1 1 1 −1 −1 −1 −1 1 1

−1 −1 −1 1 1 1 −1 −1 −1 −1 −1 −1 1 1 1 1 −1 1 1 −1 1

−1 −1 1 −1

−1 −1 −1 −1 −1 −1 −1 −1 −1 −1 −1 −1 −1 1 1 1 1 −1 1

1 1 1 −1 −1 1 −1 1 1 1 1 1 −1 −1 −1 −1 1 −1 −1 −1 −1

1 1 −1 1 −1 −1 −1 −1 −1 −1 −1 −1 1 −1 −1 −1 −1 1 1 1 −1

1 −1 −1 −1 −1 −1 −1 −1 −1 1 −1 −1 −1 −1 1 1 −1 1 1 −1 −1

−1 −1 −1 −1 −1 −1 −1 1 −1 −1 −1 −1 1 1 −1 1 −1 −1 −1 −1 −1

1 1 1 1 −1 1 1 1 1 −1 −1 1 −1 1 1 1 1 1 −1 −1 −1

−1 −1 −1 1

−1 −1 1 1 −1 −1 −1 −1 −1 1 −1 −1 1 −1 1 −1 −1 1 −1

−1 1 1 −1 1 −1 −1 1 −1 1 1 −1 1 −1 1 1 −1 1 1 −1 −1

1 −1 1 1 1 −1 1 1 −1 1 −1 1 1 −1 1 1 −1 −1 1 −1 1

1 1 −1 1 1 −1 1 −1 1 1 −1 1 1 −1 −1 1 −1 1 1 1 −1

1 1 −1 1 −1 1 1 −1 1 1 −1 −1 1 −1 1 1 −1 1 −1 −1 1

−1 1 −1 −1 1 −1 −1 1 1 −1 1 −1 −1 1 −1 1 −1 1 1 −1 1

1 −1 0 0

0 0 0 −1 −1 −1 −1 −1 1 −1 −1 1 −1 1 1 1 1 1 1

1 −1 1 −1 −1 1 1 −1 1 1 −1 −1 −1 −1 −1 −1 −1 −1 −1 1 −1

1 1 −1 −1 1 −1 −1 1 1 −1 −1 −1 −1 −1 −1 −1 1 −1 1 1 −1

−1 1 −1 −1 1 1 −1 −1 −1 −1 −1 −1 −1 1 −1 1 1 1 −1 −1 1 −1

−1 1 1 −1 −1 −1 −1 −1 −1 −1 1 −1 1 1 −1 −1 1 −1 −1 1 1

1  1  1  1  1  1  1  −1  1  −1  −1  1  1  −1  1  1  −1  −1  −1  −1  −1

−1  −1  −1  −1

−1  −1  −1  −1  −1  −1  −1  −1  1  −1  1  1  −1  1  −1  −1  1  −1  1

1  1  1  1  −1  −1  −1  −1  1  −1  −1  1  −1  1  1  −1  1  −1  −1  −1  −1

−1  1  1  1  −1  1  −1  −1  1  −1  1  1  −1  1  −1  −1  −1  −1  −1  1  1

1  −1  1  −1  −1  1  −1  1  1  −1  1  −1  −1  −1  −1  −1  1  1  1  −1  1

−1  −1  1  −1  1  1  −1  1  −1  −1  −1  −1  −1  1  1  1  1  −1  1  1  1  −1

1  −1  −1  1  −1  1  1  1  1  1  −1  −1  −1  −1  1  −1  −1  −1  −1  −1  1

1  −1  −1  −1

1  1  −1  −1  1  1  1  −1  −1  1  1  −1  −1  −1  1  −1  1  −1  −1

1  1  1  1  −1  −1  1  −1  −1  1  1  −1  1  −1  1  −1  1  1  −1  −1  −1

−1  1  1  −1  1  1  −1  −1  1  1  −1  1  −1  1  1  −1  −1  −1  −1  1  1

−1  1  1  −1  −1  1  1  −1  1  −1  1  1  −1  −1  −1  −1  1  1  −1  1  1

−1  −1  1  1  −1  1  −1  1  1  −1  −1  −1  −1  1  1  −1  1  1  −1  −1  1

−1  1  −1  1  −1  −1  1  1  1  1  −1  −1  1  −1  −1  1  1  −1  1  −1  −1

−1  1  −1  −1

−1  −1  −1  −1  −1  −1  −1  −1  1  1  1  −1  −1  1  1  −1  −1  −1  −1

1  −1  −1  1  1  −1  1  −1  −1  −1  1  1  −1  −1  1  1  1  1  −1  1  1

−1  −1  1  −1  −1  −1  −1  1  1  −1  −1  1  1  1  1  −1  1  1  −1  −1  1

−1  −1  −1  −1  1  1  −1  −1  1  1  1  1  −1  1  1  −1  −1  1  −1  −1  −1

−1  1  1  −1  −1  1  1  1  1  −1  1  1  −1  −1  1  −1  1  1  1  −1  −1

1  1  −1  −1  −1  −1  1  −1  −1  1  1  −1  1  −1  0  0  0  0  0  0  0

0  0  0  0}.

For an 80 MHz part with a second lowest frequency in the 320 MHz, a corresponding LTF includes 1,024 elements, and values of LTFs carried by tones from a lowest frequency to a highest frequency are:

{0 0 0 0 0 0 0 0 0 0 0 0 −1 −1 −1 −1 −1 1 −1
−1 −1 −1 1 1 −1 1 1 −1 −1 −1 −1 1 1 1 1 −1 1 1 1 1
−1 −1 1 −1 −1 1 1 1 1 1 1 1 1 −1 1 1 1 1 −1 −1 1
−1 −1 1 1 1 1 1 1 1 1 −1 1 1 1 1 −1 −1 1 −1 −1 1
1 1 1 1 1 1 1 −1 1 1 1 1 −1 −1 1 −1 −1 1 1 1 1
−1 −1 −1 −1 1 −1 −1 −1 −1 1 1 −1 1 1 −1 −1 −1 −1 −1 −1 −1
−1 −1 −1 −1
−1 −1 −1 −1 −1 1 −1 −1 1 −1 1 1 1 1 −1 1 1 −1 1
1 −1 1 1 −1 1 1 −1 1 −1 −1 −1 −1 1 −1 −1 1 −1 −1 1 −1

−1 1 −1 −1 −1 1 −1 −1 −1 −1 1 −1 −1 1 −1 −1 1 −1 −1 1 −1
−1 −1 1 −1 −1 −1 −1 1 −1 −1 1 −1 −1 1 −1 −1 1 −1 −1 −1 1
−1 −1 −1 −1 1 −1 −1 1 −1 −1 1 −1 −1 1 −1 −1 1 −1 1 1 1
1 −1 1 1 −1 1 1 −1 1 1 −1 1 1 −1 −1 −1 1 1 1 1 1
1 1 1 1

1 1 1 −1 −1 1 −1 −1 −1 1 1 −1 −1 1 −1 1 −1 1 1
−1 1 −1 −1 1 1 1 1 1 −1 1 −1 −1 1 −1 1 −1 −1 1 −1 1
1 −1 −1 −1 −1 −1 1 −1 1 −1 1 −1 1 −1 −1 1 −1 1 1 −1 −1
−1 −1 −1 1 −1 1 −1 1 −1 1 −1 −1 1 −1 1 1 −1 −1 −1 −1 −1
1 −1 1 −1 1 −1 1 −1 −1 1 −1 1 1 −1 −1 −1 −1 −1 1 −1 1
1 −1 1 −1 1 1 −1 1 −1 −1 1 1 1 1 1 −1 1 −1 −1 −1 −1
−1 −1 −1 −1

−1 −1 −1 −1 −1 −1 −1 −1 1 1 1 −1 −1 1 1 1 −1 −1 −1
1 1 −1 1 1 1 −1 −1 −1 −1 1 1 −1 −1 −1 1 1 1 −1 −1 1
−1 −1 −1 1 −1 −1 −1 1 1 −1 −1 −1 1 1 1 −1 −1 1 −1 −1 −1
1 −1 −1 −1 1 1 −1 −1 −1 1 1 1 −1 −1 1 −1 −1 −1 1 −1 −1
−1 1 1 −1 −1 −1 1 1 1 −1 −1 1 −1 −1 −1 1 1 1 1 −1 −1
1 1 1 −1 −1 −1 1 1 −1 1 1 1 −1 −1 1 −1 −1 1 −1 −1 −1
1 −1 0 0

0 0 0 −1 1 1 1 −1 −1 −1 1 −1 −1 −1 1 −1 1 −1 −1
1 1 1 1 −1 −1 1 1 −1 1 1 −1 1 −1 1 −1 1 1 −1 −1 −1
−1 1 1 −1 −1 1 −1 −1 1 1 −1 1 −1 1 1 −1 −1 −1 −1 1 1
−1 −1 1 −1 −1 1 1 −1 1 −1 1 1 −1 −1 −1 1 1 −1 −1 1
−1 −1 1 1 −1 1 1 −1 1 1 −1 −1 −1 −1 1 1 −1 −1 1
−1 1 −1 1 −1 −1 1 1 1 1 −1 −1 1 1 −1 1 1 −1 −1 −1 1
−1 1 −1 1

−1 −1 1 −1 −1 −1 1 −1 1 1 1 −1 −1 1 1 −1 −1 −1 −1
1 −1 1 1 1 −1 1 −1 −1 −1 1 1 −1 −1 1 1 1 1 −1 1 −1
−1 −1 1 −1 −1 −1 −1 1 1 −1 −1 1 1 1 1 −1 1 −1 −1 −1 1
−1 −1 −1 −1 1 1 −1 −1 1 1 1 1 −1 1 −1 −1 −1 1 −1 −1 −1
−1 1 1 −1 −1 1 1 1 1 −1 1 −1 −1 −1 1 −1 1 1 1 −1 −1
1 1 −1 −1 −1 −1 1 −1 1 1 1 1 −1 1 −1 −1 −1 −1 −1 −1 −1 −1
−1 −1 −1 −1

−1 −1 −1 1 −1 −1 −1 1 1 −1 −1 −1 −1 1 1 1 1 1 1
1 −1 1 −1 −1 1 1 1 1 1 −1 −1 −1 −1 −1 −1 −1 −1 −1 1 −1

1  1  −1  −1  −1  −1  −1  1  1  −1  −1  −1  −1  −1  −1  −1  1  −1  1  1  −1

−1  −1  −1  −1  1  1  −1  −1  −1  −1  −1  −1  −1  1  −1  1  1  −1  −1  −1  −1

−1  1  1  −1  −1  −1  −1  −1  −1  −1  1  −1  1  1  −1  −1  −1  −1  −1  1  1

1  1  1  1  1  1  1  −1  1  −1  −1  1  1  1  1  1  −1  −1  −1  1  −1

−1  −1  1  1

−1  −1  1  −1  1  1  1  −1  1  −1  1  1  −1  1  −1  −1  1  −1  1

1  1  −1  1  −1  −1  −1  −1  1  −1  −1  1  −1  1  1  −1  1  −1  −1  −1  1

−1  1  1  1  −1  1  −1  −1  1  −1  1  1  −1  1  −1  −1  −1  1  −1  1  1

1  −1  1  −1  −1  1  −1  1  1  −1  1  −1  −1  −1  1  −1  1  1  1  −1  1

−1  −1  1  −1  1  1  −1  1  −1  −1  −1  1  −1  1  1  1  1  −1  1  1  −1

1  −1  −1  1  −1  1  1  1  −1  1  −1  −1  −1  −1  0  0  0  0  0  0  0

0  0  0  0}.

For an 80 MHz part with a second highest frequency in the 320 MHz, a corresponding LTF includes 1,024 elements, and values of LTFs carried by tones from a lowest frequency to a highest frequency are:

```
    {0   0   0   0   0   0   0   0   0   0   0   0  −1   1  −1   1   1   1   1
 −1   1   1   1  −1  −1  −1  −1  −1   1  −1   1  −1   1  −1  −1  −1  −1   1  −1  −1
 −1   1   1   1   1   1  −1   1  −1  −1   1  −1  −1  −1  −1   1  −1  −1  −1   1   1
  1   1   1  −1   1  −1  −1   1  −1  −1  −1  −1   1  −1  −1  −1   1   1   1   1   1
 −1   1  −1  −1   1  −1  −1  −1  −1   1  −1  −1  −1   1   1   1   1   1  −1   1  −1
  1  −1   1   1   1   1  −1   1   1   1  −1  −1  −1  −1  −1   1  −1   1  −1  −1  −1
 −1  −1  −1  −1

     −1  −1  −1  −1  −1  −1  −1  −1   1   1   1   1  −1   1   1   1   1   1   1
 −1  −1   1  −1  −1  −1   1  −1  −1  −1  −1   1  −1  −1  −1  −1  −1  −1   1   1  −1
  1   1   1  −1  −1  −1  −1   1  −1  −1  −1  −1  −1  −1   1   1  −1   1   1   1
 −1  −1  −1  −1  −1   1  −1  −1  −1  −1  −1  −1   1   1  −1   1   1   1  −1  −1  −1
 −1  −1   1  −1  −1  −1  −1  −1  −1   1   1  −1   1   1   1  −1   1   1   1   1  −1
  1   1   1   1   1   1  −1  −1   1  −1  −1  −1   1  −1  −1  −1  −1  −1  −1   1  −1
 −1  −1   1   1

      1  −1   1   1  −1  −1   1   1  −1   1   1  −1   1   1   1   1  −1  −1   1
  1   1  −1   1   1  −1   1   1  −1  −1  −1  −1  −1  −1  −1   1   1  −1  −1  −1   1
 −1  −1   1  −1  −1   1   1   1   1  −1  −1  −1   1   1  −1  −1  −1   1  −1  −1   1
 −1  −1   1   1   1   1  −1  −1  −1   1   1  −1  −1  −1   1  −1  −1   1  −1  −1   1
  1   1   1  −1  −1  −1   1   1  −1  −1  −1   1  −1  −1   1  −1  −1   1   1   1   1
  1   1   1  −1  −1   1   1   1  −1   1   1  −1   1   1  −1  −1  −1  −1   1  −1   1
```

1 −1 −1 −1
    −1 1 −1 −1 −1 −1 −1 −1 −1 1 −1 1 −1 −1 1 −1 1 −1 1
1 −1 1 1 −1 1 1 1 −1 1 −1 1 1 −1 1 −1 1 −1 −1 1 −1
−1 1 −1 −1 1 −1 1 −1 1 1 −1 1 −1 1 −1 −1 1 −1 −1 1 −1
−1 1 −1 1 −1 1 1 −1 1 −1 1 −1 −1 1 −1 −1 1 −1 −1 1 −1
1 −1 1 1 −1 1 1 −1 1 −1 −1 1 −1 −1 1 −1 −1 −1 1 −1 1 −1
−1 1 −1 1 −1 1 1 −1 1 1 −1 1 1 −1 −1 −1 −1 −1 −1 −1 −1

−1 −1 0 0
    0 0 0 −1 −1 −1 1 −1 −1 −1 1 1 1 −1 −1 −1 1 −1 −1
−1 1 1 −1 −1 1 1 1 1 1 −1 −1 1 1 1 −1 1 1 1 −1 −1
1 1 −1 −1 −1 −1 −1 1 1 1 1 1 −1 1 1 1 −1 −1 1 1 −1
−1 −1 −1 −1 1 1 1 1 1 −1 1 1 1 −1 −1 1 1 −1 −1 −1 −1
−1 1 1 1 1 1 −1 1 1 1 −1 −1 1 1 −1 −1 −1 −1 −1 1 1
−1 −1 −1 1 −1 −1 −1 1 1 −1 −1 1 1 1 1 1 −1 −1 −1 1 1

1 −1 −1 1
    1 −1 1 1 −1 1 −1 −1 −1 1 −1 1 1 −1 1 1 1 −1 1
1 1 −1 1 −1 −1 −1 1 −1 1 −1 −1 1 −1 −1 −1 1 −1 −1 −1 1
−1 1 1 1 1 −1 1 −1 −1 1 −1 −1 −1 1 −1 −1 −1 1 −1 1 1
1 1 −1 1 −1 −1 1 −1 −1 −1 1 −1 −1 −1 1 −1 1 1 1 1 −1
1 −1 −1 1 −1 −1 −1 1 −1 −1 −1 1 −1 1 1 1 −1 1 −1 1 1
−1 1 1 1 −1 1 1 1 −1 1 −1 −1 −1 −1 −1 −1 1 −1 −1 −1 −1

−1 −1 −1 −1
    −1 −1 −1 −1 −1 −1 −1 −1 −1 −1 −1 −1 −1 −1 1 −1 −1 −1 −1
1 1 −1 −1 1 1 −1 −1 1 −1 −1 1 1 −1 1 1 1 1 −1 −1 1
1 −1 −1 1 1 −1 1 1 −1 1 −1 1 1 1 1 −1 −1 1 1 −1 −1
1 1 −1 1 1 −1 1 −1 1 1 1 1 −1 −1 1 1 −1 −1 1 1 −1
1 1 −1 1 −1 1 1 1 1 −1 −1 1 1 −1 −1 1 1 −1 1 1 −1
−1 1 −1 −1 −1 −1 1 1 −1 −1 1 1 −1 −1 1 −1 −1 1 −1 1 −1

1 −1 −1 1
    1 1 1 −1 1 −1 −1 1 1 1 1 1 −1 1 1 −1 1 1 1 1
−1 1 −1 −1 −1 1 −1 −1 −1 −1 −1 1 −1 −1 1 −1 −1 −1 1 −1 1
1 1 −1 1 −1 −1 −1 −1 1 −1 −1 1 −1 −1 −1 1 −1 1 1 1 −1
1 −1 −1 −1 −1 1 −1 −1 1 −1 −1 −1 1 −1 1 1 1 −1 1 −1 −1
−1 −1 1 −1 −1 1 −1 −1 −1 1 −1 1 1 1 −1 1 1 1 1 1 −1
1 1 −1 1 1 1 −1 1 −1 −1 −1 1 −1 1 0 0 0 0 0 0 0

$$0 \quad 0 \quad 0 \quad 0\}.$$

For an 80 MHz part with a highest frequency in the 320 MHz, a corresponding LTF includes 1,024 elements, and values of LTFs carried by tones from a lowest frequency to a highest frequency are:

```
{0   0   0   0   0   0   0   0   0   0   0   0  -1   1   1   1  -1   1   1
 1   1  -1   1   1  -1   1  -1  -1  -1  -1  -1  -1  -1  -1   1  -1  -1  -1  -1   1
-1  -1   1  -1   1   1   1   1   1  -1  -1  -1   1  -1  -1  -1  -1   1  -1  -1   1
-1   1   1   1   1   1  -1  -1  -1   1  -1  -1  -1  -1   1  -1  -1   1  -1   1   1
 1   1   1  -1  -1  -1   1  -1  -1  -1  -1   1  -1  -1   1  -1   1   1   1   1   1
 1   1   1  -1   1   1   1   1  -1   1   1  -1   1  -1  -1  -1  -1  -1  -1   1   1
 1  -1  -1   1

     1   1  -1  -1   1  -1  -1  -1  -1   1  -1   1  -1  -1   1  -1   1  -1   1
 1  -1  -1   1  -1   1   1   1  -1   1  -1   1   1  -1   1  -1   1  -1  -1   1   1
-1   1  -1  -1   1  -1   1  -1   1   1  -1   1  -1   1  -1  -1   1   1  -1   1  -1
-1   1  -1   1  -1   1   1  -1   1  -1   1  -1  -1   1   1  -1   1  -1  -1   1  -1
 1  -1   1   1  -1   1  -1   1  -1  -1   1   1  -1   1  -1  -1  -1   1  -1   1  -1
-1   1  -1   1  -1   1   1  -1  -1   1  -1   1   1   1  -1  -1  -1   1   1  -1  -1
-1  -1  -1  -1

    -1  -1  -1  -1  -1  -1   1  -1  -1  -1   1   1  -1   1  -1   1   1   1   1
-1   1   1   1  -1  -1  -1   1  -1   1  -1   1  -1   1  -1  -1  -1  -1   1  -1  -1
-1   1   1   1  -1   1  -1   1  -1  -1   1  -1  -1  -1  -1   1  -1  -1  -1   1   1
 1  -1   1  -1   1  -1  -1   1  -1  -1  -1  -1   1  -1  -1  -1   1   1   1  -1   1
-1   1  -1  -1   1  -1  -1  -1  -1   1  -1  -1  -1   1   1   1  -1   1  -1   1  -1
 1  -1   1   1   1   1  -1   1   1   1  -1  -1  -1   1  -1   1  -1   1   1   1  -1
-1  -1   1   1

    -1   1   1   1   1  -1   1   1   1   1   1   1   1   1   1   1   1   1   1
-1  -1  -1  -1  -1  -1   1  -1  -1  -1  -1  -1  -1  -1  -1  -1  -1  -1   1   1   1
 1   1   1  -1  -1  -1  -1  -1  -1  -1  -1  -1  -1  -1  -1   1   1   1   1   1   1
-1  -1  -1  -1  -1  -1  -1  -1  -1  -1  -1  -1   1   1   1   1   1   1  -1  -1  -1
-1  -1  -1  -1  -1  -1  -1  -1  -1   1   1   1   1   1   1   1  -1   1   1   1   1
 1   1   1   1   1   1  -1  -1  -1  -1  -1  -1   1  -1  -1   1   1   1  -1  -1  -1
-1  -1   0   0

     0   0   0  -1  -1  -1  -1  -1  -1  -1  -1  -1  -1   1  -1   1   1   1   1
-1  -1   1   1  -1  -1   1  -1  -1   1   1  -1  -1   1  -1  -1  -1  -1   1   1  -1
-1   1   1  -1   1   1  -1  -1   1  -1   1  -1  -1  -1  -1   1   1  -1  -1   1   1
```

```
–1  1   1  –1  –1  1  –1  1  –1  –1  –1  –1  1   1  –1  –1  1   1  –1  1   1
–1 –1   1  –1   1 –1  –1 –1  –1   1   1  –1 –1   1   1  –1  1   1  –1 –1   1
 1 –1   1   1   1  1  –1 –1   1   1  –1  –1  1  –1  –1   1  1  –1  –1 –1  –1
–1 –1   1  –1
         1  –1  –1  1  –1  1   1   1  –1  –1 –1  –1   1  –1  –1  1  –1 –1  –1
 1 –1  –1   1   1 –1   1  1   1   1   1  –1  1   1  –1   1   1  1  –1  1   1
–1 –1   1  –1   1  1   1  1  –1   1   1  –1  1   1   1  –1   1  1  –1 –1   1
–1  1   1   1   1 –1   1  1  –1   1   1   1 –1   1   1  –1  –1  1  –1  1   1
 1  1  –1   1   1 –1   1  1   1  –1   1   1 –1  –1   1  –1  –1 –1  –1 –1   1
–1 –1   1  –1  –1 –1   1 –1  –1   1   1  –1  1   1   1   1   1  1  –1 –1   1
 1  1   1   1
         1   1   1 –1   1 –1  –1   1  –1  –1  –1  1  –1   1   1  1  –1  1   1
 1 –1  –1   1   1 –1  –1  1  –1  –1   1   1  –1 –1  –1   1  –1 –1  –1  1   1
–1 –1   1   1  –1  1   1 –1  –1  –1  –1  –1   1 –1  –1  –1   1  1  –1 –1   1
 1 –1   1   1  –1 –1  –1 –1  –1   1  –1  –1  –1  1   1  –1  –1  1   1 –1   1
 1 –1  –1  –1  –1 –1   1 –1  –1  –1   1   1  –1 –1   1   1  –1  1   1 –1  –1
 1  1   1  –1   1  1   1 –1  –1   1  –1  –1   1 –1  –1   1   1  1  –1 –1
–1 –1  –1  –1
        –1  –1  –1 –1  –1 –1  –1   1  –1   1  –1 –1   1  –1  –1 –1   1  –1
–1 –1  –1  –1   1  1   1 –1   1  –1   1   1  –1  1   1   1  –1  1   1  1   1
 1 –1  –1  –1  –1  1  –1  1   1  –1   1   1   1 –1   1   1   1  1   1 –1  –1
–1 –1   1  –1   1  1  –1  1   1   1  –1   1   1  1   1   1  –1 –1  –1 –1   1
–1  1   1  –1   1  1   1 –1   1   1   1   1   1 –1  –1  –1   1 –1   1 –1  –1
 1 –1  –1  –1   1 –1  –1 –1  –1  –1   1   1   1 –1   0   0   0  0   0  0   0
 0  0   0   0}.
```

For example, at the 320 M bandwidth, there are four 996-tone DRUs in total. The four 996-tone DRUs do not form an overall translation relationship. Therefore, for a same sequence whose length is 996, PAPRs of the four 996-tone DRUs are different. However, each of the four 996-tone DRUs includes a 768-tone part, and four 768-tone parts form an overall translation relationship. Therefore, for a same sequence whose length is 768, PAPRs of the four 768-tone parts are the same. Each 768-tone part is formed by splicing two 384-tone parts, and the two 384-tone parts form an overall translation relationship. For a same sequence whose length is 384, PAPRs of the two 384-tone parts are the same. It is not difficult to understand that eight 384-tone parts included in the four 768-tone parts form an overall translation relationship. For a same sequence whose length is 384, PAPRs of the eight 384-tone parts are the same. Each 384-tone part is formed by splicing two 192-tone parts, and the two 192-tone parts form an overall translation relationship. For a same sequence whose length is 192, PAPRs of the two 192-tone parts are the same. It is not difficult to understand that 16 192-tone parts included in the eight 384-tone parts form an overall translation relationship. For a same sequence whose length is 192, PAPRs of the 16 192-tone parts are the same. Each 192-tone part is formed by splicing two 96-tone parts, and the two 96-tone parts form an overall translation relationship. For a same sequence whose length is 96, PAPRs of the two 96-tone parts are the same. It is not difficult to understand that 32 96-tone parts included in the 16 192-tone parts form an overall translation relationship. For a same sequence whose length is 96, PAPRs of the 32 96-tone parts are the same. Each 96-tone part is formed by splicing two 48-tone parts, and the two 48-tone parts form an overall translation relationship. For a same sequence whose length is 48, PAPRs of the two 48-tone parts are the same. It is not difficult to understand that 64 48-tone parts included in the 32 96-tone parts form an overall translation relationship. For a same sequence whose length is 48, PAPRs of the 64 48-tone parts are the same. Each 48-tone part is formed by splicing two 24-tone parts, and the two 24-tone parts form an overall translation relationship. For a same sequence whose length is 24, PAPRs of the two 24-tone parts are the same. It is not difficult to understand that all 128 24-tone parts form an overall translation relationship. For a same sequence whose length is 24, PAPRs of the 128 24-tone parts are the same.

Therefore, at the 80 MHz bandwidth, a sequence design process of the LTF includes the following processes.

Step 1: First, a sequence set Seq_24 with a length of 24 that includes 1 and -1 and that has a relatively low PAPR when a position is in the 24-tone part is obtained through searching.

Step 2: Considering a case in which there are M sequences in Seq_24, $M^2$ sequences whose lengths are 48 may be obtained by splicing any two sequences, and a sequence set Seq_48 that has a relatively low PAPR when a position is in the 48-tone part is selected.

Step 3: Considering a case in which there are N sequences in Seq_48, $N^2$ sequences whose lengths are 96 may be obtained by splicing any two sequences, and a sequence set Seq_96 that has a relatively low PAPR when a position is in the 96-tone part is selected.

Step 4: Considering a case in which there are T sequences in Seq_96, $T^2$ sequences whose lengths are 192 may be obtained by splicing any two sequences, and a sequence set Seq_192 that has a relatively low PAPR when a position is in the 192-tone part is selected.

Step 5: Considering that there are R sequences in Seq_192, $R^2$ sequences whose lengths are 384 may be obtained by splicing any two sequences, and a sequence set Seq_384 that has a relatively low PAPR when a position is in the 384-tone part is selected.

Step 6: Considering that there are W sequences in Seq_384, $W^2$ sequences whose lengths are 768 may be obtained by splicing any two sequences, and a sequence set Seq_768 that has a relatively low PAPR when a position is in the 768-tone part is selected.

Step 7: Considering that there are A sequences in Seq_768 and there are T sequences in Seq_96, X•T sequences whose lengths are 864 may be obtained through splicing. For a first 864-tone, a sequence set Seq_864_1 with a relatively low PAPR and a length of 864 is selected from the first 864-tone. For a second 864-tone, a sequence set Seq_864_2 with a relatively low PAPR and a length of 864 is selected from the second 864-tone. For a third 864-tone, a sequence set Seq_864_3 with a relatively low PAPR and a length of 864 is selected from the third 864-tone. For a fourth 864-tone, a sequence set Seq_864_4 whose length is 864 and whose PAPR is relatively low is selected from the fourth 864-tone.

Step 8: For a DRU996-1, considering a case in which there are Z sequences included in Seq_864_1 and B sequences whose lengths are 132 are generated, Z*B sequences whose lengths are 996 may be obtained through splicing, and a sequence with a lowest PAPR is obtained through screening and used as S996-1. Herein, a screening criterion is to make maximum values of PAPRs of 144 DRUs-26, 64 DRUs-52, 32 DRUs-106, 16 DRUs-242, eight DRUs-484, and four DRUs-996 the smallest. Similarly, S996-2, S996-3, and S996-4 may be obtained.

S996-1 is placed on a first 996-tone DRU, S996-2 is placed on a second 996-tone DRU, S996-3 is placed on a third 996-tone DRU, S996-4 is placed on a fourth 996-tone DRU, and the remaining positions are padded with zeros to obtain an LTF sequence with a length of 4096 of the 320 M bandwidth.

It should be noted that, in actual application, M, N, Q, T, R, A, B, W, and Z in the foregoing processes may be set to relatively small values, for example, integers less than or equal to 100, 1000, or 10000, to reduce complexity. In addition, it can be learned from the foregoing processes that, if a corresponding LTF is determined in an exhaustive manner for 4,096 tones included in the 20 MHz bandwidth, an order of magnitude of computational complexity of the determining process is at least $2^{4096}$, which is far beyond computing power of an existing computer and cannot be implemented. However, in the foregoing sequence-related process, considering a feature that if a same LTF sequence is carried among a plurality of DRUs that form the "overall translation relationship", PAPRs of the plurality of DRUs are the same, by selecting relatively small values for M, N, Q, T, R, A, B, W, and Z, the order of magnitude of computational complexity of the foregoing implementation process may be reduced to as low as $2^{24}$. This reduces the computational complexity and greatly improves computing efficiency.

In addition, compared with the EHT-LTF4x sequence, the LTF with 4,096 elements that corresponds to the 160 MHz bandwidth and that is obtained based on the foregoing design process may reduce a PAPR by about 2 to 4 dB, as shown in Table 13.

Table 13

|  | Proposed Seq 320 MHz | EHT-LTF4x (HE-LTF4x) |
|---|---|---|
| Max PAPR of DRU26 | 7.23 | 9.42 |
| Max PAPR of DRU52 | 7.86 | 12.43 |
| Max PAPR of DRU106 | 7.80 | 13.37 |
| Max PAPR of DRU242 | 8.28 | 12.54 |
| Max PAPR of DRU484 | 8.09 | 12.00 |
| Max PAPR of DRU996 | 8.27 | 12.43 |

In a possible implementation, it can be learned from the LTF provided in any one of the foregoing embodiments that, in the LTF included in the TB PPDU, a value in the x data tones of each of the k distributed resource units is 1 or -1. In other words, the LTF included in the TB PPDU includes a part whose values are 0 and a part whose values are not 0 (that is, 1 or -1).

Optionally, if a tone is included outside any distributed resource unit or is not allocated to any distributed resource unit, a value of an LTF corresponding to the tone is 0. For example, in the foregoing LTF sequence, a tone occupied by an LTF with a value of 0 is a tone that does not belong to any distributed resource unit.

Optionally, if a tone is included in any distributed resource unit or is allocated to any distributed resource unit, a value of an LTF corresponding to the tone is not 0 (that is, 1 or -1). For example, in the foregoing LTF sequence, a tone occupied by an LTF whose value is not 0 (that is, 1 or -1) is a tone that belongs to one or more distributed resource units.

The foregoing describes this application from the perspective of methods, and the following further describes this application from the perspective of apparatuses.

FIG. 9 is a schematic diagram of a communication apparatus 900 according to an embodiment of this application. The communication apparatus 900 includes a sending unit 901 and a receiving unit 902.

In an implementation, the communication apparatus 900 may be specifically applied to WLAN communication. The apparatus may be a STA, or the apparatus may be some components (for example, a processor, a chip, or a chip system) in a STA, and is configured to implement the communication method in the embodiment shown in FIG. 8. Correspondingly, the sending unit 901 and the receiving unit 902 include the following processes:

the receiving unit 902 is configured to receive a trigger frame, where the trigger frame includes DRU indication information, and the DRU indication information indicates a DRU used by the STA to send a TB PPDU; and
the sending unit 901 is configured to send the trigger-based physical layer protocol data unit TB PPDU on the DRU, where the TB PPDU includes a long training field LTF.

In an implementation, the communication apparatus 900 may be specifically applied to WLAN communication. The apparatus may be an AP, or the apparatus may be some components (for example, a processor, a chip, or a chip system) in an AP, and is configured to implement the communication method in the embodiment shown in FIG. 8. Correspondingly, the sending unit 901 and the receiving unit 902 include the following processes:

the sending unit 901 is configured to send a trigger frame, where the trigger frame includes DRU indication information, and the DRU indication information indicates a DRU used by the STA to send a TB PPDU; and
the receiving unit 902 is configured to receive, on the DRU, the trigger-based physical layer protocol data unit TB PPDU, where the TB PPDU includes a long training field LTF.

In a possible implementation,
a bandwidth occupied by the DRU is 20 megahertz MHz, 40 MHz, 80 MHz, 160 MHz, or 320 MHz, where the LTF included in the TB PPDU is determined based on the bandwidth occupied by the DRU.

In a possible implementation,
the bandwidth occupied by the DRU includes k distributed resource units, each of the k distributed resource units includes x data tones, an absolute value of an index difference between every two data tones in y data tones in the x data tones is greater than or equal to 2, k, x, and y are all positive integers, and $y \leq x$.

Indexes of y data tones in different distributed resource units in the k distributed resource units form an overall translation relationship.

Optionally, if the y data tones in the different distributed resource units in the k distributed resource units carry a same LTF sequence, peak-to-average power ratios PAPRs of the y data tones in the different distributed resource units in the k distributed resource units are the same.

In a possible implementation, a bandwidth occupied by the DRU is 20 MHz; and

when a value of k is 9, a value of x is 24, and a value of y is 24; or
when a value of k is 4, a value of x is 48, and a value of y is 48; or
when a value of k is 2, a value of x is 102, and a value of y is 96.

In a possible implementation, a bandwidth occupied by the DRU is 40 MHz; and

when a value of k is 18, a value of x is 24, and a value of y is 24; or
when a value of k is 8, a value of x is 48, and a value of y is 48; or
when a value of k is 4, a value of x is 102, and a value of y is 96.

In a possible implementation, a bandwidth occupied by the DRU is 80 MHz; and

when a value of k is 36, a value of x is 24, and a value of y is 24; or
when a value of k is 16, a value of x is 48, and a value of y is 48; or
when a value of k is 8, a value of x is 102, and a value of y is 96; or
when a value of k is 4, a value of x is 234, and a value of y is 192.

In a possible implementation, a bandwidth occupied by the DRU is 160 MHz; and

when a value of k is 72, a value of x is 24, and a value of y is 24; or
when a value of k is 32, a value of x is 48, and a value of y is 48; or
when a value of k is 16, a value of x is 102, and a value of y is 96; or
when a value of k is 8, a value of x is 234, and a value of y is 192; or
when a value of k is 4, a value of x is 468, and a value of y is 384.

In a possible implementation, a bandwidth occupied by the DRU is 320 MHz; and

when a value of k is 144, a value of x is 24, and a value of y is 24; or
when a value of k is 64, a value of x is 48, and a value of y is 48; or
when a value of k is 32, a value of x is 102, and a value of y is 96; or
when a value of k is 16, a value of x is 234, and a value of y is 192; or
when a value of k is 8, a value of x is 468, and a value of y is 384; or
when a value of k is 4, a value of x is 980, and a value of y is 768.

In a possible implementation, the DRU indication information includes at least one of the following:
a resource unit RU allocation subfield, an uplink bandwidth subfield, an uplink bandwidth extension subfield, or a primary/secondary 160 subfield.

In a possible implementation,
in the LTF included in the TB PPDU, a value in the x data tones of each of the k distributed resource units is 1 or -1.

It should be noted that the communication apparatus 900 may be further configured to perform the foregoing other embodiments and implement corresponding beneficial effects. For details, refer to the descriptions in the foregoing embodiments. Details are not described herein again.

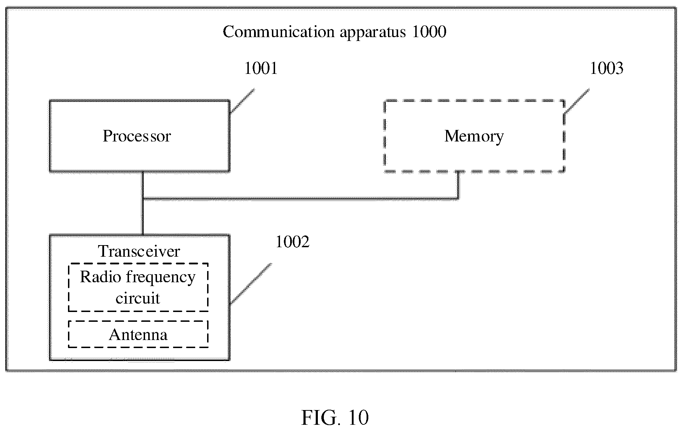

FIG. 10 is a schematic diagram of a structure of a communication apparatus 1000 according to an embodiment of this application. The communication apparatus 1000 includes a processor 1001 and a transceiver 1002.

The communication apparatus 1000 may be a radio frame sending apparatus, a radio frame receiving apparatus, or a chip in a radio frame sending apparatus or a radio frame receiving apparatus.

FIG. 10 shows only main components in the communication apparatus 1000. In addition to the processor 1001 and the transceiver 1002, the communication apparatus may further include a memory 1003 and an input/output apparatus (not shown in the figure).

The processor 1001 is mainly configured to process a communication protocol and communication data, control the entire communication apparatus, execute a software program, and process data of the software program. The memory 1003 is mainly configured to store a software program and data. The transceiver 1002 may include a radio frequency circuit and an antenna. The radio frequency circuit is mainly configured to perform conversion between a baseband signal and a radio frequency signal, and process the radio frequency signal. The antenna is mainly configured to send and receive the radio frequency signal in an electromagnetic wave form. The input/output apparatus, for example, a touchscreen, a display, or a keyboard, is mainly configured to receive data entered by a user and output data to the user.

The processor 1001, the transceiver 1002, and the memory 1003 may be connected through a communication bus.

After the communication apparatus is powered on, the processor 1001 may read the software program in the memory 1003, interpret and execute instructions of the software program, and process data of the software program. When data needs to be sent in a wireless manner, the processor 1001 performs baseband processing on the to-be-sent data, and then outputs a baseband signal to a radio frequency circuit. The radio frequency circuit performs radio frequency processing on the baseband signal, and then sends a radio frequency signal in an electromagnetic wave form by using the antenna. When data is sent to the communication apparatus, the radio frequency circuit receives a radio frequency signal by using the antenna, converts the radio frequency signal into a baseband signal, and outputs the baseband signal to the processor 1001. The processor 1001 converts the baseband signal into data and processes the data.

In any one of the foregoing designs, the processor 1001 may include a communication interface for implementing sending and receiving functions. For example, the communication interface may be a transceiver circuit, an interface, or an interface circuit. A transceiver circuit, an interface, or an interface circuit configured to implement the sending and receiving functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions. The instructions may be a computer program. The computer program is run on the processor 1001, so that the communication apparatus 1000 can perform the method described in any one of the foregoing embodiments. The computer program may be fixed in the processor 1001, and in this case, the processor 1001 may be implemented by hardware.

In an implementation, the communication apparatus 1000 may include a circuit. The circuit may implement a sending, receiving, or communication function in any one of the foregoing embodiments. The processor and the communication interface described in this application may be implemented on an integrated circuit (integrated circuit, IC), an analog IC, a radio frequency integrated circuit (radio frequency integrated circuit, RFIC), a mixed signal IC, an application-specific integrated circuit (application-specific integrated circuit, ASIC), a printed circuit board (printed circuit board, PCB), an electronic device, or the like. The processor and the communication interface may be manufactured using various IC technologies, for example, a complementary metal oxide semiconductor (complementary metal oxide semiconductor, CMOS), an N-type metal oxide semiconductor (N-type Metal-oxide-semiconductor, NMOS), a P-channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

In another implementation, the radio frequency circuit and the antenna may be disposed independently of the processor for baseband processing. For example, in a distributed scenario, the radio frequency circuit and the antenna may be disposed remotely independent of the communication apparatus.

The communication apparatus may be an independent device or may be a part of a large device. For example, the communication apparatus may be:

(1) an independent integrated circuit IC, a chip, or a chip system or subsystem;
(2) a set that has one or more ICs, where optionally, the IC set may alternatively include a storage component configured to store data and an instruction;
(3) an ASIC, for example, a modem (Modem);
(4) a module that can be embedded in another device;
(5) a receiver, an intelligent terminal, a wireless device, a handset, a mobile unit, an in-vehicle device, a cloud device, an artificial intelligence device, or the like; or
(6) others.

In addition, the processor 1001 may be configured to perform, for example but not limited to, baseband related processing; and the transceiver 1002 may be configured to perform, for example but not limited to, radio frequency sending and receiving. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of integrated circuit technologies, an increasing quantity of components may be integrated onto one chip. For example, the digital baseband processor and a plurality of application processors (for example, but not limited to a graphics processing unit and a multimedia processor) may be integrated onto one chip. The chip may be referred to as a system-on-a-chip (system on chip). Whether all the components are separately disposed on different chips or integrated and disposed on one or more chips usually depends on a specific requirement for a product design. Embodiments of this application impose no limitation on specific implementations of the foregoing components.

An embodiment of this application further provides a computer-readable storage medium. The computer-readable storage medium stores computer program code. When the foregoing processor executes the computer program code, an electronic device performs the method in any one of the foregoing embodiments.

An embodiment of this application further provides a computer program product. When the computer program product is run on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through the receive circuit, so that the apparatus performs the method in any one of the foregoing embodiments.

An embodiment of this application further provides a WLAN communication system, including a STA and an AP. The STA and the AP may perform the method in any one of the foregoing embodiments.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to the processor, so that the processor can read information from the storage medium or write information into the storage medium. Certainly, the storage medium may be a component of the processor. The processor and the storage medium may be located in an ASIC.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium, where the communication medium includes any medium that enables a computer program to be transmitted from one place to another. The storage medium may be any available medium that is accessible by a general-purpose or special-purpose computer.

Although this application is described with reference to embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of a plurality. A single processor or another unit may implement several functions enumerated in the claims. Some measures are recorded in dependent claims that are different from each other, but this does not mean that these measures cannot be combined to produce a better effect.

The objectives, technical solutions, and beneficial effects of this application are further described in detail in the foregoing specific implementations. It should be understood that the foregoing descriptions are merely specific implementations of this application, but are not intended to limit the protection scope of this application. Any modification, equivalent replacement, or improvement made based on technical solutions of this application shall fall within the protection scope of this application.

## Claims

1. A communication method, comprising:

   receiving, by a station STA, a trigger frame, wherein the trigger frame comprises distributed resource unit DRU indication information, and the DRU indication information indicates a DRU used by the STA to send a trigger-based physical layer protocol data unit TB PPDU; and
   sending, by the STA, the TB PPDU on the DRU, wherein the TB PPDU comprises a long training field LTF.

2. A communication method, comprising:

   sending, by an access point AP, a trigger frame, wherein the trigger frame comprises distributed resource unit DRU indication information, and the DRU indication information indicates a DRU used by a STA to send a trigger-based physical layer protocol data unit TB PPDU; and

receiving, by the AP on the DRU, the TB PPDU sent by the STA, wherein the TB PPDU comprises a long training field LTF.

3. The method according to claim 1 or 2, wherein
a bandwidth occupied by the DRU is 20 megahertz MHz, 40 MHz, 80 MHz, 160 MHz, or 320 MHz, wherein the LTF comprised in the TB PPDU is determined based on the bandwidth occupied by the DRU.

4. The method according to any one of claims 1 to 3, wherein

the bandwidth occupied by the DRU comprises k distributed resource units, each of the k distributed resource units comprises x data tones, an absolute value of an index difference between every two data tones in y data tones in the x data tones is greater than or equal to 2, k, x, and y are all positive integers, and $y \leq x$; and indexes of y data tones in different distributed resource units in the k distributed resource units form an overall translation relationship.

5. The method according to claim 4, wherein the bandwidth occupied by the DRU is 20 MHz; and

when a value of k is 9, a value of x is 24, and a value of y is 24; or
when a value of k is 4, a value of x is 48, and a value of y is 48; or
when a value of k is 2, a value of x is 102, and a value of y is 96.

6. The method according to claim 4, wherein the bandwidth occupied by the DRU is 40 MHz; and

when a value of k is 18, a value of x is 24, and a value of y is 24; or
when a value of k is 8, a value of x is 48, and a value of y is 48; or
when a value of k is 4, a value of x is 102, and a value of y is 96.

7. The method according to claim 4, wherein the bandwidth occupied by the DRU is 80 MHz; and

when a value of k is 36, a value of x is 24, and a value of y is 24; or
when a value of k is 16, a value of x is 48, and a value of y is 48; or
when a value of k is 8, a value of x is 102, and a value of y is 96; or
when a value of k is 4, a value of x is 234, and a value of y is 192.

8. The method according to claim 4, wherein the bandwidth occupied by the DRU is 160 MHz; and

when a value of k is 72, a value of x is 24, and a value of y is 24; or
when a value of k is 32, a value of x is 48, and a value of y is 48; or
when a value of k is 16, a value of x is 102, and a value of y is 96; or
when a value of k is 8, a value of x is 234, and a value of y is 192; or
when a value of k is 4, a value of x is 468, and a value of y is 384.

9. The method according to claim 4, wherein the bandwidth occupied by the DRU is 320 MHz; and

when a value of k is 144, a value of x is 24, and a value of y is 24; or
when a value of k is 64, a value of x is 48, and a value of y is 48; or
when a value of k is 32, a value of x is 102, and a value of y is 96; or
when a value of k is 16, a value of x is 234, and a value of y is 192; or
when a value of k is 8, a value of x is 468, and a value of y is 384; or
when a value of k is 4, a value of x is 980, and a value of y is 768.

10. The method according to any one of claims 1 to 8, wherein the DRU indication information comprises at least one of the following:
a resource unit RU allocation subfield, an uplink bandwidth subfield, an uplink bandwidth extension subfield, or a primary/secondary 160 subfield.

11. The method according to any one of claims 4 to 10, wherein
in the LTF comprised in the TB PPDU, a value in the x data tones of each of the k distributed resource units is 1 or -1.

12. A communication apparatus, comprising a receiving unit and a sending unit, wherein
the receiving unit and the sending unit are configured to perform the method according to any one of claim 1 and claims 3 to 11.

13. A communication apparatus, comprising a receiving unit and a sending unit, wherein
the receiving unit and the sending unit are configured to perform the method according to any one of claims 2 to 11.

14. A computer-readable storage medium, wherein the computer-readable storage medium stores program instructions, and when the program instructions are run on a computer, the computer is enabled to perform the method according to any one of claims 1 to 11.

15. A computer program product comprising program instructions, wherein when the program instructions are run on a computer, the computer is enabled to perform the method according to any one of claims 1 to 11.

FIG. 1

FIG. 2a

FIG. 2b

Guard tone

Null tone

7 DC

26-tone RU

| 26 | 26 | | 26 | 26 | 13 | 13 | 26 | 26 | | 26 | 26 |

52-tone RU

| 52 | | 52 | | 52 | | 52 |

106-tone RU

| 106 | | 106 |

242-tone RU

242 + 3 DC

Tone: tone

FIG. 3

EP 4 415 456 A1

FIG. 4

EP 4 415 456 A1

EP 4 415 456 A1

26-tone RU
52-tone RU
106-tone RU
242-tone RU
484-tone RU
996-tone RU

12 Guard    5 DC    23 DC    5 DC    11 Guard

26 26 26 26 26 26 26 26 26 26  26 26 26 26 26 26 26 26 26 26  26 26 26 26 26 26 26 26 26 26  26 26 26 26 26 26 26 26 26 26

52  52  52  52  52  52  52  52   52  52  52  52  52  52  52  52

106   106   106   106   106   106   106   106

242   242   242   242

484 L   484 R   484 L   484 R

996 + 5 DC

Tone: tone
Guard: guard

FIG. 5

FIG. 6a

| Data (Data) (STA 1) | Data (Data) (STA 2) | | Data (Data) (STA 4) |
|---|---|---|---|
| | | ... | |
| High efficient long training sequence (HE-LTF) | High efficient long training sequence (HE-LTF) | | High efficient long training sequence (HE-LTF) |
| High efficient short training sequence (HE-STF) | High efficient short training sequence (HE-STF) | | High efficient short training sequence (HE-STF) |
| High efficient signal field A (HE-SIGA) | | | |
| Repeated legacy signal field (RL-SIG) | | | |
| Legacy signal field (L-SIG) | | | |
| Legacy long training sequence (L-LTF) | | | |
| Legacy short training sequence (L-STF) | | | |

Trigger frame
(Trigger frame)

FIG. 6b

4X OFDM symbol

−122  −120  −118  −116          −4    −2    0    2    4          116    118    120    122
  −121  −119  −117                 −3    −1    1    3              117    119    121          f

2X OFDM symbol

−61    −60    −59    −58          −2    −1    0    1    2          58    59    60    61
                                                                                      ...f

1X OFDM symbol

    −30          −29          −1          0          1          29          30
                                                                                      f

FIG. 6c

EP 4 415 456 A1

Common information field

User information list field

Continue on next line

| Trigger Type Trigger frame type | UL Length Uplink length | More TFs More trigger frames | CS Required Carrier sensing required | UL (HE) Bandwidth Uplink bandwidth | GI And EHT-LTF Type Guard interval + EHT long training sequence type | MU-MIMO EHT-LTF Mode Mode | Number of EHT-LTF Symbols And Midamble Periodicity Number of EHT-LTF symbols and midamble periodicity | UL STBC Uplink space-time block coding |
|---|---|---|---|---|---|---|---|---|
| | | | | | | | 9 | 1 |

| LDPC Extra Symbol Segment LDPC extra symbol segment | AP TX Power AP transmit power | Pre-FEC Padding Factor Pre-forward error correction padding factor | PE Disambiguity Packet extension disambiguity | UL Spatial Reuse Uplink spatial reuse | Doppler Doppler | UL HE-SIG-A2 Reserved Uplink HE-SIG-A2 reserved | Reserved Reserved | Trigger frame type–based common information Trigger Dependent Common Info |
|---|---|---|---|---|---|---|---|---|

b63

| | | |
|---|---|---|
| 1 | 1 | 7 |
| HE/EHT indication | Special user information field presence indication | Other UL HE-SIG-A2 Reserved Other uplink HE-SIG-A2 reserved |
| b54 | b55 | b56        b62 |

| User Info (STA 1) User information 1 (special) | User Info (STA 2) User information 2 | ... | User Info (STA M) |
|---|---|---|---|

TO FIG. 7B

TO FIG. 7B

TO FIG. 7B

TO FIG. 7B

TO FIG. 7B

FIG. 7A

EP 4 415 456 A1

CONT. FROM FIG. 7A    CONT. FROM FIG. 7A    CONT. FROM FIG. 7A    CONT. FROM FIG. 7A

Special user information field

| 12 | 3 | 2 | 4 | 4 | 12 | 3 | 8 |
|---|---|---|---|---|---|---|---|
| AID 12 Association identifier (=2007) | PHY Version ID Physical layer version identifier | UL BW Extension Uplink bandwidth extension | UL EHT Spatial Reuse 1 Uplink EHT spatial reuse 1 | UL EHT Spatial Reuse 2 Uplink EHT spatial reuse 2 | U-SIG Disregard And Validate Universal signal disregard and validate | Reserved | Reserved |

b25     b36   b37    b39

EHT variant user information field
User inf (user information) 2 to M

| 12 | 8 | 1 | 4 | 1 | 4 | 2 | 7 | 1 | 8 |
|---|---|---|---|---|---|---|---|---|---|
| AID 12 Association identifier | RU Allocation Resource unit allocation | UL FEC Coding Type Uplink forward error correction coding type | UL EHT-MCS Modulation and coding scheme | Reserved Reserved | Initial value of spatial flows | Quantity of spatial flows | UL Target RSSI Uplink target received signal strength indication | PS160 Primary/ secondary 160 MHz indication | Feedback segment retransmission bitmap Feedback segment retransmission bitmap |

b25        b39   b40     b47

FIG. 7B

AP

STA

S101: Trigger frame

S102: Send and receive a TB PPDU on a DRU

FIG. 8

Communication apparatus 900

Sending unit 901

Receiving unit 902

FIG. 9

Communication apparatus 1000

1001                                                                1003

Processor                               Memory

Transceiver          1002
Radio frequency
circuit
Antenna

FIG. 10

## INTERNATIONAL SEARCH REPORT

| International application No. |
|---|
| **PCT/CN2022/126982** |

| **A.** | **CLASSIFICATION OF SUBJECT MATTER** |
|---|---|

H04W 72/04(2009.01)i

According to International Patent Classification (IPC) or to both national classification and IPC

| **B.** | **FIELDS SEARCHED** |
|---|---|

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT, CNKI, WPI, EPODOC: trigger frame, 长训练字段, DRU, 基于触发, 触发帧, tb, distributed ru, TB PPDU, PPDU, 协议数据单元, 分布式资源单元, 离散, 不连续, distributed resource unit, LTF

| **C.** | **DOCUMENTS CONSIDERED TO BE RELEVANT** | |
|---|---|---|

| Category* | Citation of document, with indication, where appropriate, of the relevant passages | Relevant to claim No. |
|---|---|---|
| PX | CN 114845395 A (HUAWEI TECHNOLOGIES CO., LTD.) 02 August 2022 (2022-08-02) description, paragraphs 0099-0155 | 1-15 |
| PX | CN 114978835 A (HUAWEI TECHNOLOGIES CO., LTD.) 30 August 2022 (2022-08-30) description, paragraphs 0005-0090 | 1-15 |
| PX | US 2021392661 A1 (NXP USA, INC.) 16 December 2021 (2021-12-16) description, paragraphs 0069-0109 | 1-15 |
| X | US 2020008185 A1 (CHEN, X. G. et al.) 02 January 2020 (2020-01-02) description, paragraphs 0056-0115 | 1-15 |
| X | CN 112262541 A (QUALCOMM INC.) 22 January 2021 (2021-01-22) description, paragraphs 6-72 | 1-15 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 December 2022** | **15 December 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/126982**

| Patent document cited in search report | | | Publication date (day/month/year) | Patent family member(s) | | | Publication date (day/month/year) |
|---|---|---|---|---|---|---|---|
| CN | 114845395 | A | 02 August 2022 | WO | 2022166240 | A1 | 11 August 2022 |
| CN | 114978835 | A | 30 August 2022 | WO | 2022179378 | A1 | 01 September 2022 |
| US | 2021392661 | A1 | 16 December 2021 | None | | | |
| US | 2020008185 | A1 | 02 January 2020 | None | | | |
| CN | 112262541 | A | 22 January 2021 | US | 2019380117 | A1 | 12 December 2019 |
| | | | | WO | 2019240955 | A1 | 19 December 2019 |
| | | | | TW | 202002550 | A | 01 January 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111343099